# EUROPEAN PATENT APPLICATION

(11) **EP 4 513 810 A1**
(43) Date of publication of application: **26.02.2025**
(21) Application number: 23791320.7
(22) Date of filing: 20.04.2023
(51) Int. Cl.: H04L 5/00

(54) **INFORMATION TRANSMISSION METHOD AND APPARATUS, AND TERMINAL DEVICE AND NETWORK DEVICE**

(30) Priority: 20.04.2022 CN 202210419154
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN)
(74) Representative: Studio Torta S.p.A.
(86) International application number: PCT/CN2023/089525
(87) International publication number: WO 2023/202668

(57) **Abstract**

An information transmission method and apparatus, a terminal device and a network device are provided, which relate to the technical field of communications. The information transmission method includes: receiving configuration information of a Sounding Reference Signal (SRS) resource; and transmitting an SRS corresponding to the SRS resource according to the configuration information and a transmission rule; where the SRS resource includes ${N}_{ap}^{SRS}$ antenna ports, and the transmission rule includes at least one of the following: cyclic shift offset values corresponding to SRS sequences which are corresponding to all or part of the antenna ports in the ${N}_{ap}^{SRS}$ antenna ports are continuous; the ${N}_{ap}^{SRS}$ antenna ports are mapped to at least two groups of time domain resources and/or frequency domain resources; or the ${N}_{ap}^{SRS}$ is an integer greater than 4.

## Description

### CROSS REFERENCE OF RELATED APPLICATION

The present disclosure claims a priority of Chinese patent application No. 202210419154.9 filed on April 20, 2022, which is incorporated herein by reference in its entirety.

### TECHNICAL FIELD

The present disclosure relates to the field of communications, and in particular, to an information transmission method and apparatus, a terminal device and a network device.

### BACKGROUND

In the New Radio (NR) system of the Third Generation Partnership Projects, 3GPP), the Sounding Reference Signal (SRS) may be used for the acquisition of uplink Channel State Information (CSI), the acquisition of downlink CSI, the beam management, etc. Since the uplink transmission supports at most four transmitting antennas, the system of the related art only supports SRS resources of 1, 2 or 4 antenna ports. With the increase of terminal types, some terminals can support up to 8 transmitting antennas.

When the sequence generation and resource mapping mode of the SRS resources in the related art is adopted, at least two antenna ports in the eight ports of the 8-port SRS resource use the same cyclic shift on the same time-frequency resource and then interfere with each other, which affects the performance.

### SUMMARY

The embodiments of the present disclosure provide an information transmission method and apparatus, a terminal device, and a network device to solve the problem in the related art that due to the sequence generation and resource mapping mode of the SRS resources, the number of SRS ports accommodated in the same SRS resource on the same time domain resource is limited, such that at least two antenna ports in a plurality of ports of an SRS resource with multiple ports use the same cyclic shift on the same time-frequency resource and then interfere with each other, which affects the performance.

In order to solve the above technical problem, the embodiments of the present disclosure provide an information transmission method, including:
receiving configuration information of a Sounding Reference Signal (SRS) resource; and
transmitting an SRS corresponding to the SRS resource according to the configuration information and a transmission rule;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, before the transmitting an SRS corresponding to the SRS resource, the method further includes:
obtaining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of the first information.

Optionally, the sequence generation parameter of the SRS includes at least one of a maximum number of cyclic shifts and a cyclic shift configuration.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, after the obtaining the first information, the method further includes:
according to the first information, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the method further includes:
according to a corresponding relationship, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
where the corresponding relationship includes at least one of:
a corresponding relationship between the number of the antenna ports and the antenna port groups;
a corresponding relationship between the sequence generation parameter and the antenna port groups; or
a corresponding relationship between the number of the groups and the antenna port groups.

Optionally, before the transmitting an SRS corresponding to the SRS resource, the method further includes:
in a case where a maximum number of cyclic shifts corresponding to the SRS resource is ${n}_{SRS}^{cs ,max} = 8$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs ,i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max}$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$
where ${n}_{SRS}^{cs}$ is a cyclic shift configuration value.

Optionally, before the transmitting an SRS corresponding to the SRS resource, the method further includes:
in a case where a maximum number of cyclic shifts corresponding to the SRS resource is ${n}_{SRS}^{cs ,max} = 12$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs , max}}{{N}_{ap}^{SRS}}\right⌋ \left({p}_{i}-1000\right) ;$ $\frac{{n}_{SRS}^{cs , max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs , max} \left⌊\left({p}_{i}-1000\right)/2\right⌋}{{N}_{ap}^{SRS} / 2} ;$ $3 \left⌊\frac{{n}_{SRS}^{cs , max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs , max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs , max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, the cyclic shift offset value nSRS corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs , max} ;$ ${n}_{SRS}^{cs , i} = \left({n}_{SRS}^{cs}+\frac{{n}_{SRS}^{cs , max} \left⌊\left({p}_{i}-1000\right)/2\right⌋}{{N}_{ap}^{SRS} / 2}\right) mod {n}_{SRS}^{cs , max} ;$ ${n}_{SRS}^{cs , i} = \left({n}_{SRS}^{cs}+3\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+3\left({p}_{i}-1000\right)\right) mod {n}_{SRS}^{cs , max} ;$ ${n}_{SRS}^{cs , i} = \left({n}_{SRS}^{cs}+3i\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+4\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+4\left({p}_{i}-1000\right)\right) mod {n}_{SRS}^{cs , max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, before the transmitting an SRS corresponding to the SRS resource, the method further includes:
in a case where a maximum number of cyclic shifts corresponding to the SRS resource is ${n}_{SRS}^{cs ,max} = 6$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs , max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

Optionally, before the transmitting an SRS corresponding to the SRS resource, the method further includes:
in a case where a maximum number of cyclic shifts corresponding to the SRS resource is ${n}_{SRS}^{cs ,max} = 16$, determining a cyclic shift offset value nSRS corresponding to the SRS sequence which is corresponding to an antenna port with an index of i among the ${N}_{ap}^{SRS}$ antenna ports based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

Optionally, before the transmitting an SRS corresponding to the SRS resource, the method further includes:
determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, the antenna ports in different antenna port groups adopt different formulas to determine the cyclic shift offset value.

Optionally, the transmitting an SRS corresponding to the SRS resource includes:
in a case where ${n}_{SRS}^{cs ,max} = 8$ or 16, determining a position parameter ${k}_{TC}^{\left({p}_{i}\right)}$ of a frequency domain resource corresponding to an antenna port with an index of i among the ${N}_{ap}^{SRS}$ antenna ports based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

Optionally, in a case where ${n}_{SRS}^{cs ,max} = 8$ or 16, the position parameter ${k}_{TC}^{\left({p}_{i}\right)}$ of the frequency domain resource corresponding to an antenna port with an index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the transmitting an SRS corresponding to the SRS resource includes:
in a case where ${n}_{SRS}^{cs ,max} = 12$ or 6, determining a position parameter ${k}_{TC}^{\left({p}_{i}\right)}$ of a frequency domain resource corresponding to an antenna port with an index of i among the ${N}_{ap}^{SRS}$ antenna ports based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

Optionally, in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

Optionally, the transmitting an SRS corresponding to the SRS resource includes:
determining a position parameter ${k}_{TC}^{\left({p}_{i}\right)}$ of a frequency domain resource corresponding to an antenna port with an index of i among the ${N}_{ap}^{SRS}$ antenna ports based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource;
transmitting the SRS sequence corresponding to the antenna port with the index of i from the starting position of the frequency domain resource;
where *k̅*_{TC} is an offset of a comb in the frequency domain; and *K*_{TC} is a transmission comb number.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} .$

Optionally, the antenna ports in different antenna port groups adopt different formulas to determine the cyclic shift offset value.

Optionally, the ${N}_{ap}^{SRS}$ is valued as 8.

An embodiment of the present disclosure further provides an information transmission method, including:
sending configuration information of a Sounding Reference Signal (SRS) resource; and
receiving an SRS corresponding to the configuration information and a transmission rule;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, before the receiving an SRS corresponding to the configuration information and a transmission rule, the method further includes:
determining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of and determined based on the first information.

Optionally, the sequence generation parameter of the SRS includes at least one of a maximum number of cyclic shifts and a cyclic shift configuration.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the method further includes at least one of the following:
determining that there is a corresponding relationship between the number of the antenna ports and the antenna port groups;
determining that there is a corresponding relationship between the sequence generation parameter and the antenna port groups; or
determining that there is a corresponding relationship between the number of the groups and the antenna port groups.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs ,max} = 12$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

Optionally, before the receiving an SRS corresponding to the configuration information and a transmission rule, the method further includes:
determining the SRS sequence which is corresponding to an antenna port with an index of i;
where a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
where *pᵢ* is a port index of the antenna port with the index of i, and i is an integer less than or equal to ${N}_{ap}^{SRS} - 1$.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, the antenna ports in different antenna port groups adopt different formulas to determine the cyclic shift offset value.

Optionally, the receiving an SRS corresponding to the configuration information and a transmission rule includes:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

Optionally, in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the receiving an SRS corresponding to the configuration information and a transmission rule includes:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
where *k̅*_{TC} is an offset of a comb in the frequency domain; and *K*_{TC} is a transmission comb number.

Optionally, in a case where ${n}_{SRS}^{cs ,max} = 12$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

Optionally, the receiving an SRS corresponding to the configuration information and a transmission rule includes:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the antenna ports in different antenna port groups adopt different formulas to determine the cyclic shift offset value.

Optionally, the ${N}_{ap}^{SRS}$ is valued as 8.

An embodiment of the present disclosure further provides a terminal device, including a memory, a transceiver and a processor:
the memory is configured to store a computer program; the transceiver is configured to transceive data under the control of the processor; and the processor is configured to read the computer program in the memory and perform processes of:
receiving configuration information of a Sounding Reference Signal (SRS) resource by the transceiver;
transmitting an SRS corresponding to the SRS resource by the transceiver according to the configuration information and a transmission rule;
where the SRS resource includes ${N}_{ap}^{SRS}$ antenna ports, and the transmission rule includes at least one of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, the processor reads the computer program in the memory and performs one of operations of:
obtaining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of the first information.

Optionally, the sequence generation parameter of the SRS includes at least one of a maximum number of cyclic shifts and a cyclic shift configuration.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.
Optionally, the processor reads the computer program in the memory and performs an operation of:
   according to the first information, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the processor reads the computer program in the memory and performs an operation of:
according to a corresponding relationship, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
where the corresponding relationship includes at least one of:
a corresponding relationship between the number of the antenna ports and the antenna port groups;
a corresponding relationship between the sequence generation parameter and the antenna port groups; or
a corresponding relationship between the number of the groups and the antenna port groups.

Optionally, the processor reads the computer program in the memory and performs operations of:
in a case where a maximum number of cyclic shifts corresponding to the SRS resource is ${n}_{SRS}^{cs ,max} = 8$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ $\begin{matrix}4i; \\ 2 \left⌊\frac{{n}_{SRS}^{cs ,max}}{{N}_{ap}^{SRS}}\right⌋ \left({p}_{i}-1000\right) ;\end{matrix}$ $2 \left({p}_{i}-1000\right) ;$ 2i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+\frac{{n}_{SRS}^{cs ,max} \left({p}_{i}-1000\right)}{{N}_{ap}^{SRS}}\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) { mod n}_{SRS}^{cs ,max} ;$ ${n}_{SRS}^{cs ,i} = \left({n}_{SRS}^{cs}+2 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ where ${n}_{SRS}^{cs}$ is a cyclic shift configuration value.

Optionally, the processor reads the computer program in the memory and performs operations of:
in a case where a maximum number of cyclic shifts corresponding to the SRS resource is ${n}_{SRS}^{cs ,max} = 12$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+\frac{{n}_{SRS}^{cs ,max} \left({p}_{i}-1000\right)}{{N}_{ap}^{SRS}}\right) {mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+6 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

Optionally, the processor reads the computer program in the memory and performs operations of:
in a case where a maximum number of cyclic shifts corresponding to the SRS resource is ${n}_{SRS}^{cs ,max} = 6$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+2 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+4 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) {mod n}_{SRS}^{cs ,max} ;$ ${n}_{SRS}^{cs ,i} = \left({n}_{SRS}^{cs}+3\left({p}_{i}-1000\right)\right) {mod n}_{SRS}^{cs ,max} ;$ ${n}_{SRS}^{cs ,i} = \left({n}_{SRS}^{cs}+3i\right) {mod n}_{SRS}^{cs ,max} ;$ where ${n}_{SRS}^{cs}$ is a cyclic shift configuration value.

Optionally, the processor reads the computer program in the memory and performs operations of:
in a case where a maximum number of cyclic shifts corresponding to the SRS resource is ${n}_{SRS}^{cs ,max} = 16$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+\frac{{n}_{SRS}^{cs ,max}}{{N}_{ap}^{SRS}}\left({p}_{i}-1000\right)\right) { mod n}_{SRS}^{cs ,max} ;$ ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ where ${n}_{SRS}^{cs}$ is a cyclic shift configuration value.

Optionally, the processor reads the computer program in the memory and performs operations of: determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+6\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

Optionally, the antenna ports in different antenna port groups adopt different formulas to determine the cyclic shift offset value.

Optionally, the processor reads the computer program in the memory and performs operations of:
in a case where ${n}_{SRS}^{cs ,max} = 8$ or 16, determining a position parameter ${k}_{TC}^{\left({p}_{i}\right)}$ of a frequency domain resource corresponding to an antenna port with an index of i among the ${N}_{ap}^{SRS}$ antenna ports based on at least one of:
k̅_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

Optionally, in a case where ${n}_{SRS}^{cs ,max} = 8$ or 16, the position parameter ${k}_{TC}^{\left({p}_{i}\right)}$ of the frequency domain resource corresponding to an antenna port with an index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the processor reads the computer program in the memory and performs operations of:
in a case where ${n}_{SRS}^{cs ,max} = 12$ or 6, determining a position parameter ${k}_{TC}^{\left({p}_{i}\right)}$ of a frequency domain resource corresponding to an antenna port with an index of i among the ${N}_{ap}^{SRS}$ antenna ports based on at least one of:
*k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

Optionally, in a case where ${n}_{SRS}^{cs ,max} = 12$ or 6, the position parameter ${k}_{TC}^{\left({p}_{i}\right)}$ of the frequency domain resource corresponding to an antenna port with an index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

Optionally, the processor reads the computer program in the memory and performs operations of:
determining a position parameter ${k}_{TC}^{\left({p}_{i}\right)}$ of a frequency domain resource corresponding to an antenna port with an index of i among the ${N}_{ap}^{SRS}$ antenna ports based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the antenna ports in different antenna port groups adopt different formulas to determine the cyclic shift offset value.

Optionally, the ${N}_{ap}^{SRS}$ is valued as 8.

An embodiment of the present disclosure further provides a network device, including a memory, a transceiver and a processor:
the memory is configured to store a computer program; the transceiver is configured to transceive data under the control of the processor; and the processor is configured to read the computer program in the memory and perform processes of:
transmitting configuration information of a Sounding Reference Signal (SRS) resource by the transceiver;
receiving an SRS corresponding to the configuration information and a transmission rule by the transceiver;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, the processor reads the computer program in the memory and performs processes of:
determining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of and determined based on the first information.

Optionally, the sequence generation parameter of the SRS includes at least one of a maximum number of cyclic shifts and a cyclic shift configuration.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the processor reads the computer program in the memory and performs one of processes of:
determining that there is a corresponding relationship between the number of the antenna ports and the antenna port groups;
determining that there is a corresponding relationship between the sequence generation parameter and the antenna port groups; or
determining that there is a corresponding relationship between the number of the groups and the antenna port groups.

Optionally, the processor reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

Optionally, the processor reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 12$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, the processor reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 6$, a cyclic shift offset value nSRS corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

Optionally, the processor reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

Optionally, the processor reads the computer program in the memory and performs one of processes of:
determining the SRS sequence which is corresponding to an antenna port with an index of i;
where a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
where *pᵢ* is a port index of the antenna port with the index of i, and i is an integer less than or equal to ${N}_{ap}^{SRS} - 1$.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, the antenna ports in different antenna port groups adopt different formulas to determine the cyclic shift offset value.

Optionally, the processor reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

Optionally, in a case where ${n}_{SRS}^{cs ,max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the processor reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
where *k̅*_{TC} is an offset of a comb in the frequency domain; and *K*_{TC} is a transmission comb number.

Optionally, in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

Optionally, the processor reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the antenna ports in different antenna port groups adopt different formulas to determine the cyclic shift offset value.

Optionally, the ${N}_{ap}^{SRS}$ is valued as 8.

An embodiment of the present disclosure further provides an information transmission apparatus, including:
a first reception unit configured to receive configuration information of a Sounding Reference Signal (SRS) resource;
a transmission unit configured to transmit an SRS corresponding to the SRS resource according to the configuration information and a transmission rule;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, before the transmission unit transmits the SRS corresponding to the SRS resource, the apparatus further includes:
a first obtaining unit configured to obtain first information;
where the first information includes at least one of:
   grouping information of the antenna ports;
   a sequence generation parameter of the SRS; or
   resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies at least one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of the first information.

Optionally, the sequence generation parameter of the SRS includes at least one of a maximum number of cyclic shifts and a cyclic shift configuration.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, after the first obtaining unit obtains the first information, the apparatus further includes:
a first determination unit configured to, according to the first information, determine at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the apparatus further includes:
a second determination unit configured to, according to a corresponding relationship, determine at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
where the corresponding relationship includes at least one of:
   a corresponding relationship between the number of the antenna ports and the antenna port groups;
   a corresponding relationship between the sequence generation parameter and the antenna port groups; or
   a corresponding relationship between the number of the groups and the antenna port groups.

Optionally, before the transmission unit transmits the SRS corresponding to the SRS resource, the apparatus further includes:
a third determination unit configured to, in a case where a maximum number of cyclic shifts corresponding to the SRS resource is ${n}_{SRS}^{cs ,max} = 8$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
a fourth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+\frac{{n}_{SRS}^{cs ,max} \left({p}_{i}-1000\right)}{{N}_{ap}^{SRS}}\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ where ${n}_{SRS}^{cs}$ is a cyclic shift configuration value.

Optionally, before the transmission unit transmits the SRS corresponding to the SRS resource, the apparatus further includes:
a fifth determination unit configured to, in a case where a maximum number of cyclic shifts corresponding to the SRS resource is ${n}_{SRS}^{cs ,max} = 12$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
a sixth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+\frac{{n}_{SRS}^{cs ,max} \left({p}_{i}-1000\right)}{{N}_{ap}^{SRS}}\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ ${n}_{SRS}^{cs ,i} = \left({n}_{SRS}^{cs}+3 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+6\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) {mod n}_{SRS}^{cs ,max} ;$ where ${n}_{SRS}^{cs}$ is a cyclic shift configuration value.

Optionally, before the transmission unit transmits the SRS corresponding to the SRS resource, the apparatus further includes:
a seventh determination unit configured to in a case where a maximum number of cyclic shifts corresponding to the SRS resource is ${n}_{SRS}^{cs ,max} = 6$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
an eighth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+2 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ where ${n}_{SRS}^{cs}$ is a cyclic shift configuration value.

Optionally, before the transmission unit transmits the SRS corresponding to the SRS resource, the apparatus further includes:
a ninth determination unit configured to, in a case where a maximum number of cyclic shifts corresponding to the SRS resource is ${n}_{SRS}^{cs ,max} = 16$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i;$ $\frac{{n}_{SRS}^{cs ,max} \left⌊\left({p}_{i}-1000\right)/2\right⌋}{{N}_{ap}^{SRS} / 2} ;$ $\frac{{N}_{SRS}^{cs .max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
a tenth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+\frac{{n}_{SRS}^{cs ,max}}{{N}_{ap}^{SRS}}\left({p}_{i}-1000\right)\right) { mod n}_{SRS}^{cs ,max} ;$ ${n}_{SRS}^{cs ,i} = \left({n}_{SRS}^{cs}+\frac{{n}_{SRS}^{cs ,max}}{{N}_{ap}^{SRS}}\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ where ${n}_{SRS}^{cs}$ is a cyclic shift configuration value.

Optionally, before the transmission unit transmits the SRS corresponding to the SRS resource, the apparatus further includes:
an eleventh determination unit configured to determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
a twelfth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+2 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+4 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+6 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

Optionally, the antenna ports in different antenna port groups adopt different formulas to determine the cyclic shift offset value.

Optionally, the transmission unit is configured to:
in a case where ${n}_{SRS}^{cs ,max} = 8 or 16$, determine a position parameter ${k}_{TC}^{\left({p}_{i}\right)}$ of a frequency domain resource corresponding to an antenna port with an index of i among the ${N}_{ap}^{SRS}$ antenna ports based on at least one of:
   k̅_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource;
where *k̅*_{TC} is an offset of a comb in the frequency domain; and *K*_{TC} is a transmission comb number.

Optionally, in a case where ${n}_{SRS}^{cs ,max} = 8 or 16$, the position parameter ${k}_{TC}^{\left({p}_{i}\right)}$ of the frequency domain resource corresponding to an antenna port with an index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the transmission unit is configured to:
in a case where ${n}_{SRS}^{cs ,max} = 12 or 6$, determine a position parameter ${k}_{TC}^{\left({p}_{i}\right)}$ of a frequency domain resource corresponding to an antenna port with an index of i among the ${N}_{ap}^{SRS}$ antenna ports based on at least one of:
   k̅_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource;
where *k̅*_{TC} is an offset of a comb in the frequency domain; and *K*_{TC} is a transmission comb number.

Optionally, in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+{3K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

Optionally, the transmission unit is configured to:
determine a position parameter ${k}_{TC}^{\left({p}_{i}\right)}$ of a frequency domain resource corresponding to an antenna port with an index of i among the ${N}_{ap}^{SRS}$ antenna ports based on at least one of: ${\overline{k}}_{TC} + 3 ;$ ${\overline{k}}_{TC} + 2 ;$ ${\overline{k}}_{TC} + 1 ;$ ${\overline{k}}_{TC} + {3K}_{TC} / 4 ;$ ${\overline{k}}_{TC} + {K}_{TC} / 4 ;$ ${\overline{k}}_{TC} + 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource;
transmit the SRS sequence corresponding to the antenna port with the index of i from the starting position of the frequency domain resource;
where *k̅*_{TC} is an offset of a comb in the frequency domain; and *K*_{TC} is a transmission comb number.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$
the antenna ports in different antenna port groups adopt different formulas to determine the cyclic shift offset value.

Optionally, the ${N}_{ap}^{SRS}$ is valued as 8.

An embodiment of the present disclosure further provides an information transmission apparatus, including:
a sending unit configured to send configuration information of a Sounding Reference Signal (SRS) resource; and
a second reception unit configured to receive an SRS corresponding to the configuration information and a transmission rule;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, before the second reception unit receives the SRS corresponding to the configuration information and the transmission rule, the apparatus further includes:
a thirteenth determination unit configured to
determine first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of and determined based on the first information.

Optionally, the sequence generation parameter of the SRS includes at least one of a maximum number of cyclic shifts and a cyclic shift configuration.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the apparatus further includes at least one of:
a nineteenth determination unit configured to determine that there is a corresponding relationship between the number of the antenna ports and the antenna port groups;
a twentieth determination unit configured to determine that there is a corresponding relationship between the sequence generation parameter and the antenna port groups; or
a twenty-first determination unit configured to determine that there is a corresponding relationship between the number of the groups and the antenna port groups.

Optionally, before the reception unit receives the SRS corresponding to the configuration information and the transmission rule, the apparatus further includes:
a fourteenth determination unit configured to determine the SRS sequence which is corresponding to an antenna port with an index of i;
where in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs ,i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) { mod n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

Optionally, before the reception unit receives the SRS corresponding to the configuration information and the transmission rule, the apparatus further includes:
a fifteenth determination unit configured to determine the SRS sequence which is corresponding to an antenna port with an index of i;
where in a case where a maximum number of cyclic shifts corresponding to the SRS resource is ${n}_{SRS}^{cs ,max} = 12$, a cyclic shift offset value nSRS corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, before the reception unit receives the SRS corresponding to the configuration information and the transmission rule, the apparatus further includes:
a sixteenth determination unit configured to determine the SRS sequence which is corresponding to an antenna port with an index of i;
where in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

Optionally, before the reception unit receives the SRS corresponding to the configuration information and the transmission rule, the apparatus further includes:
a seventeenth determination unit configured to determine the SRS sequence which is corresponding to an antenna port with an index of i;
where in a case where a maximum number of cyclic shifts corresponding to the SRS resource is ${n}_{SRS}^{cs ,max} = 16$, a cyclic shift offset value nSRS corresponding to the SRS sequence which is corresponding to the antenna port with the index of i among the ${N}_{ap}^{SRS}$ antenna ports is determined based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

Optionally, before the reception unit receives the SRS corresponding to the configuration information and the transmission rule, the apparatus further includes:
an eighteenth determination unit configured to determine the SRS sequence which is corresponding to an antenna port with an index of i;
where a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $3 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
where *pᵢ* is a port index of the antenna port with the index of i, and i is an integer less than or equal to ${N}_{ap}^{SRS} - 1$.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

Optionally, the antenna ports in different antenna port groups adopt different formulas to determine the cyclic shift offset value.

Optionally, the reception unit is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

Optionally, in a case where ${n}_{SRS}^{cs ,max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the reception unit is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
where *k̅*_{TC} is an offset of a comb in the frequency domain; and *K*_{TC} is a transmission comb number.

Optionally, in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

Optionally, the reception unit is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
where the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

Optionally, the antenna ports in different antenna port groups adopt different formulas to determine the cyclic shift offset value.

Optionally, the ${N}_{ap}^{SRS}$ is valued as 8.

An embodiment of the present disclosure further provides a processor-readable storage medium which stores a computer program for causing a processor to perform the above method.

The present disclosure has the following advantageous effects:

In the above solutions, the SRS transmission is carried out based on a preset transmission rule, so as to avoid the problem that at least two antenna ports in a plurality of ports of a multi-port SRS resource use the same cyclic shift on the same time-frequency resource and then interfere with each other. The embodiments of the present disclosure can ensure that the performance of the terminal will not be affected.

### BRIEF DESCRIPTION OF THE DRAWINGS

In order to more clearly illustrate the technical solutions in the embodiments of the present disclosure or in the related art, the drawings to be used in the description of the embodiments or the related art will be briefly introduced below. Obviously, the drawings involved in the following description only illustrate some embodiments of the present disclosure, and those of ordinary skill in the art can obtain other drawings from these drawings without paying any creative effort.
FIG. 1 illustrates a structural diagram of a network system applicable to an embodiment of the present disclosure;
FIG. 2 illustrates a flowchart of an information transmission method according to an embodiment of the present disclosure;
FIG. 3 illustrates a first schematic diagram of units of an information transmission apparatus according to an embodiment of the present disclosure;
FIG. 4 illustrates a structural diagram of a terminal device according to an embodiment of the present disclosure;
FIG. 5 illustrates a second flowchart of an information transmission method according to an embodiment of the present disclosure;
FIG. 6 illustrates a second schematic diagram of units of an information transmission apparatus according to an embodiment of the present disclosure; and
FIG. 7 illustrates a structural diagram of a network device according to an embodiment of the present disclosure.

### DETAILED DESCRIPTION

The technical solutions in the embodiments of the present disclosure will be clearly and completely described below with reference to the drawings for the embodiments of the present disclosure. Obviously, those described are parts, rather than all, of the embodiments of the present disclosure. Based on the embodiments of the present disclosure, any other embodiment obtained by those of ordinary skill in the art without paying any creative effort should fall within the protection scope of the present disclosure.

The terms such as "first" and "second" in the Specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "include", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, product, or device.

The term "and/or" in the embodiments of the present disclosure describes an association relationship between associated objects, and indicates that there may be three relationships. For example, A and/or B may indicate that A exists alone, A and B exist simultaneously, and B exists alone. The character "/" generally indicates that the contextual objects are in an "or" relationship. The term "a plurality of" in the embodiments of the present disclosure refers to two or more, and other quantifiers are similar.

In the embodiments of the present disclosure, the word such as "exemplary" or "for example" is used to indicate an example, an illustration, or an explanation. Any embodiment or design solution described with "exemplary" or "for example" in the embodiments of the present disclosure should not be construed as more preferable or more advantageous than any other embodiment or design solution. To be exact, the use of the word such as "exemplary" or "for example" is intended to present related concepts in a specific manner.

The embodiments of the present disclosure will be described below with reference to the drawings. An information transmission method and apparatus, a terminal device, and a network device provided in the embodiments of the present disclosure can be applied to a wireless communication system. The embodiments of the present disclosure are applicable to various communication systems, including but not limited to a 5^{th} Generation (5G) mobile communication technology system (e.g., an NR system), a 6G system or an evolution system thereof, other systems based on Orthogonal Frequency Division Multiplexing (OFDM), other systems based on Discrete Fourier Transform Spread OFDM (DFT-S-OFDM), etc. For example, the applicable system may be a Global System Of Mobile communication (GSM) system, a Code Division Multiple Access (CDMA) system, a Wideband Code Division Multiple Access (WCDMA) general packet radio service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability For Microwave Access (WiMAX) system, a 5G New Radio (NR) system, etc. These various systems each include a terminal device and a network device. The system may further include a core network part, such as an Evolved Packet System (EPS), a 5G System (5GS), etc. Those skilled in the art will appreciate that the 5G NR system is just an example rather than a limitation.

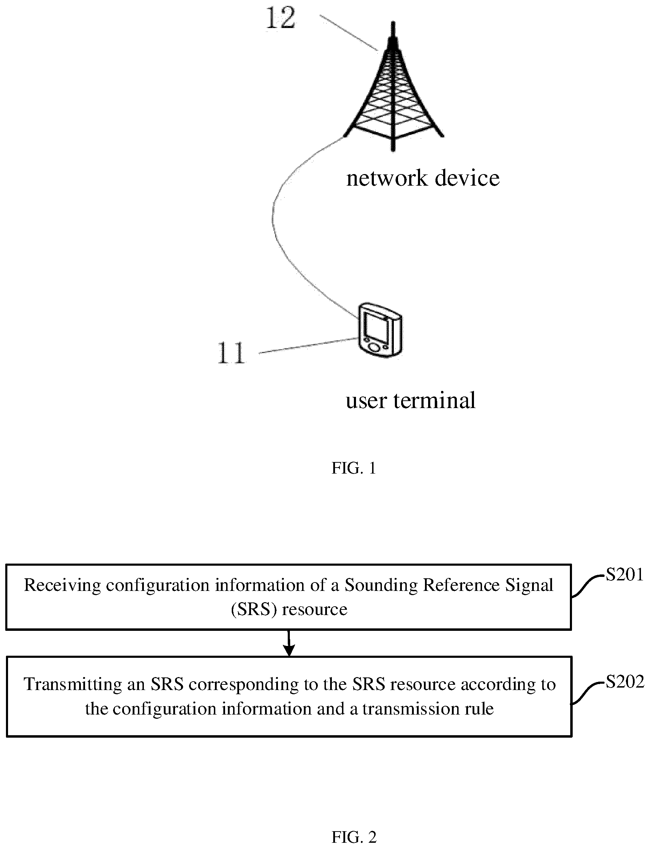

Referring to FIG. 1, which illustrates a structural diagram of a network system applicable to an embodiment of the present disclosure. As illustrated in FIG. 1, the network system includes a user terminal 11 and a network device 12, where the user terminal 11 may be a User Equipment (UE), such as a cellular phone, a tablet personal computer, a laptop computer, a Personal Digital Assistant (PDA), a Mobile Internet Device (MID), a wearable device, or any other terminal side device. It should be noted that the specific type of the user terminal 11 is not limited in the embodiments of the present disclosure. The network device 12 may be a base station of 5G or a higher version (e.g., gNB or 5G NR NB), or a base station in other communication systems, or referred to as nodeB, a Radio Network Controller (RNC), a Base Station Controller (BSC), a Base Transceiver Station (BTS), a home base station (e.g., a home evolved nodeB, or a home nodeB (HNB)), a BaseBand Unit (BBU), a Transmitting And Receiving Point (TRP), a Transmitting Point (TP), a mobile switching center, etc. It should be noted that, in the embodiments of the present disclosure, only a 5G base station is taken as an example, but the specific type of the network device 12 is not limited. FIG. 1 is merely an example and is not intended to limit the type of the communication system and the number, type, etc. of devices included in the communication system. The network architectures and the service scenarios described in the embodiments of the present disclosure are for the purpose of illustrating, rather than limiting, the technical solutions in the embodiments of the present disclosure. Those of ordinary skill in the art will appreciate that with the evolution of the network architectures and the emergence of new service scenarios, the technical solutions in the embodiments of the present disclosure are also applicable to similar technical problems.

The embodiments of the present disclosure provide an information transmission method and apparatus, a terminal device, and a network device, so as to solve the problem in the related art that due to the sequence generation and resource mapping mode of the SRS resources, at least two antenna ports in a plurality of ports of an SRS resource with multiple ports use the same cyclic shift on the same time-frequency resource and then interfere with each other, which affects the performance.

In which, the method and the apparatus are concepted based on the same application. Since the method and the apparatus adopt similar principles to solve the above problem, the implementations of the apparatus and the method can refer to each other, and the repeated contents will be omitted.

As illustrated in FIG. 2, an embodiment of the present disclosure provides an information transmission method performed by a terminal device, including:
Step S201: receiving configuration information of a Sounding Reference Signal (SRS) resource;

Optionally, the configuration information of the SRS resource includes an identifier of the SRS resource, the number of SRS ports, a starting symbol, the number of occupied time domain symbols, or the like.

Step S202: transmitting an SRS corresponding to the SRS resource according to the configuration information and a transmission rule;
where the SRS resource includes ${N}_{ap}^{SRS}$ antenna ports, and the transmission rule includes at least one of the following:
A11: cyclic shift offset values corresponding to SRS sequences which are corresponding to all or part of the antenna ports in the ${N}_{ap}^{SRS}$ antenna ports are continuous;
in the embodiment of the present disclosure, the ${N}_{ap}^{SRS}$ is an integer greater than 4.

"The SRS resource includes ${N}_{ap}^{SRS}$ antenna ports" may be understood as that the SRS resource is configured with ${N}_{ap}^{SRS}$ SRS ports; or the SRS resource is corresponding to ${N}_{ap}^{SRS}$ SRS ports; or ${N}_{ap}^{SRS}$ SRS ports of the SRS resource.

The cyclic shift offset values are used to determine the SRS sequences.

When the number of SRS ports included in the SRS resource is large, since a maximum number of cyclic shifts corresponding to the SRS resource is limited, if the cyclic shifts of all of the SRS ports are discontinuous, part of the SRS ports will use the same cyclic shift to generate the SRS sequence on the same time-frequency resource, such that these SRS ports significantly interfere with each other, which degrades the performance. In this embodiment, the cyclic shift offset values corresponding to the SRS sequences which are corresponding to at least part of the antenna ports in the ${N}_{ap}^{SRS}$ antenna ports are set to be continuous, thereby ensuring that the SRS sequences corresponding to the SRS ports on the same time-frequency resource are all different, and then reducing the probability of mutual interference of the antenna ports.

Optionally, the cyclic shift offset values corresponding to the SRS sequences which are corresponding to all of the antenna ports in the ${N}_{ap}^{SRS}$ antenna ports may be set to be continuous.

Optionally, the SRS ports may be grouped in the embodiment of the present disclosure. For example, the ${N}_{ap}^{SRS}$ SRS ports include N antenna port groups, where N is an integer greater than or equal to 1. In this embodiment, the antenna port group may be understood as an SRS antenna port group, which is also referred to as antenna port grouping or antenna grouping.

Exemplarily, the ${N}_{ap}^{SRS}$ antenna ports are in one group, which may also be understood as that the ${N}_{ap}^{SRS}$ antenna ports are not grouped. For example, in the case of 8 antenna ports, the cyclic shift offset values which are corresponding to the SRS sequences are 0, 1, 2, 3, 4, 5, 6 and 7.

Optionally, the cyclic shift offset values corresponding to the SRS sequences which are corresponding to part of the antenna ports in the ${N}_{ap}^{SRS}$ antenna ports are set to be continuous.

Optionally, the ${N}_{ap}^{SRS}$ antenna ports are grouped into a plurality of groups, where the cyclic shift offset values corresponding to the SRS sequences which are corresponding to the antenna ports in at least one of the plurality of groups are set to be continuous.

Optionally, in the plurality of antenna port groups among the ${N}_{ap}^{SRS}$ antenna ports, the cyclic shift offset values corresponding to the SRS sequences which are corresponding to the antenna ports included in different antenna port groups in the plurality of antenna port groups are the same. For example, eight antenna ports of one SRS resource are grouped into two groups each including four antenna ports, different antenna ports in the same group of antenna ports are corresponding to different cyclic shift offset values, and the cyclic shift offset values corresponding to two groups of antenna ports are 1, 2, 3 and 4.

Optionally, in the plurality of antenna port groups among the ${N}_{ap}^{SRS}$ antenna ports, the cyclic shift offset values corresponding to the SRS sequences which are corresponding to at least two antenna port groups are different. Exemplarily, 8 antenna ports of the same SRS resource are grouped into 2 groups each including 4 antenna ports, where the cyclic shift offset values corresponding to the SRS sequences which are corresponding to one group of antenna ports are set as 1, 2, 3 and 4, and the cyclic shift offset values corresponding to the SRS sequences which are corresponding to the other group of antenna ports are set as 5, 6, 7 and 8. As another example, the cyclic shift offset values corresponding to the SRS sequences which are corresponding to one group of antenna ports are set as 1, 2, 3 and 4, and the cyclic shift offset values corresponding to the SRS sequences which are corresponding to the other group of antenna ports are set as 5, 7, 9 and 11. As still another example, 8 antenna ports of an SRS resource including ${N}_{ap}^{SRS} = 8$ antenna ports are grouped into two groups, i.e., one group including 2 antenna ports and the other group including 6 antenna ports, where the cyclic shift offset values corresponding to the SRS sequences which are corresponding to the antenna ports in the group including 2 antenna ports are 0 and 1, respectively; and the cyclic shift offset values corresponding to the SRS sequences which are corresponding to the antenna ports in the group including 4 antenna ports are 0, 1, 2 and 3, respectively. It should be noted that the above numerical values are only examples for illustrating continuity and discontinuity, and do not mean that the above numerical values are used during practical applications.

A12: the ${N}_{ap}^{SRS}$ antenna ports are mapped to at least two groups of time domain resources and/or frequency domain resources.

Optionally, the SRS ports are grouped in the embodiment of the present disclosure. For example, the ${N}_{ap}^{SRS}$ SRS ports include N antenna port groups, where N is an integer greater than or equal to 1. Optionally, each of the plurality of antenna port groups is corresponding to one group of time domain resources and/or frequency domain resources, i.e., the antenna port groups are in one-to-one correspondence with the time domain resource groups and/or the frequency domain resource groups.

Optionally, the ${N}_{ap}^{SRS}$ antenna ports are mapped to at least two groups of time domain resources; optionally, the ${N}_{ap}^{SRS}$ antenna ports are mapped to at least two groups of frequency domain resources; and optionally, the ${N}_{ap}^{SRS}$ antenna ports are mapped to at least two groups of time domain resources and frequency domain resources.

Optionally, A11 and A12 may be used separately to achieve the purpose of reducing the interference between the antenna ports. For example, A11 is used separately, or A12 is used separately, only the antenna ports are grouped, and the cyclic shift offset values corresponding to the SRS sequences which are corresponding to all of the antenna ports are discontinuous.

Optionally, both A11 and A12 may be used. For example, the ${N}_{ap}^{SRS}$ antenna ports of the same SRS resource are grouped into N groups, where the cyclic shift offset values corresponding to the SRS sequences which are corresponding to the antenna ports in at least part of the groups are continuous.

Optionally, in at least one embodiment of the present disclosure, the ${N}_{ap}^{SRS}$ antenna ports of one SRS resource include a plurality of groups, the cyclic shift values corresponding to any two antenna ports in each group are different, and the cyclic shift values corresponding to the antenna ports of any two groups are the same. For example, in ${N}_{ap}^{SRS} = 8$ antenna ports of one SRS resource, antenna ports 0, 2, 4 and 6 are in one group and antenna ports 1, 3, 5 and 7 are in another group, where the SRS sequences of the antenna ports 0, 2, 4 and 6 are corresponding to the cyclic shift values 0, 2, 4 and 6, respectively, and the SRS sequences of antenna ports 1, 3, 5 and 7 are corresponding to the cyclic shift values 0, 2, 4 and 6, respectively. That is, the two groups of antenna ports are all corresponding to the cyclic shift values 0, 2, 4 and 6, and the cyclic shift values corresponding to any two antenna ports in any group are different. Optionally, the SRS antenna ports corresponding to a same cyclic shift value are regarded as one group, the SRS antenna ports corresponding to different cyclic shift values are regarded as different groups, and the antenna ports in a same antenna port group are mapped to different resources. Optionally, the SRS corresponding to the SRS resource may be mapped to a plurality of groups of resources, and the antenna port groups are in one-to-one correspondence with the resource groups. The resource may be understood as at least one of a time domain resource and a frequency domain resource.

In at least one embodiment of the present disclosure, optionally, the SRS antenna port groups are in one-to-one correspondence with the time domain resource groups.

In at least one embodiment of the present disclosure, optionally, the SRS antenna port groups are in one-to-one correspondence with the frequency domain resource groups.

Optionally, in at least one embodiment of the present disclosure, before the transmitting an SRS corresponding to the SRS resource, the method further includes:
obtaining first information.

It should be noted that, in an example, the obtaining first information may be a process before the transmitting an SRS corresponding to the SRS resource according to the configuration information and a transmission rule, that is, before the transmitting an SRS corresponding to the SRS resource according to the configuration information and a transmission rule, the method further includes: obtaining first information. In another example, the obtaining first information may be part of the step of transmitting an SRS corresponding to the SRS resource according to the configuration information and a transmission rule, that is, the transmitting an SRS corresponding to the SRS resource according to the configuration information and a transmission rule may include: obtaining first information, and transmitting an SRS corresponding to the SRS resource based on the first information. Optionally, in the process of transmitting an SRS corresponding to the SRS resource based on the first information, the transmission rule may be determined based on the first information, and the SRS corresponding to the SRS resource may be transmitted based on the configuration information and the transmission rule.

In which, the first information includes at least one of:
B 11: grouping information of the antenna ports;

Optionally, the grouping information of the antenna ports is grouping information of the ${N}_{ap}^{SRS}$ antenna ports.

Optionally, the grouping information of the antenna ports includes the number of the groups, which includes at least one of:
Bill: the number of the antenna port groups;
exemplarily, a corresponding relationship includes:
   when ${N}_{ap}^{SRS} < 8$, the number of the antenna port groups is 1; and
   when ${N}_{ap}^{SRS} = 8$, the number of the antenna port groups is 2.
B112: the number of the time domain resource groups to which the SRS sequences are mapped;

In this embodiment, the time domain resources corresponding to one group of SRS ports may also be referred to as a group of time domain resources.
B113: the number of the frequency domain resource groups to which the SRS sequences are mapped;

In this embodiment, the frequency domain resources corresponding to one group of SRS ports may also be referred to as a group of frequency domain resources.

Exemplarily, a possible corresponding relationship includes:
when ${N}_{ap}^{SRS} < 8$, the number of the time domain resource groups is 1, and the number of the frequency domain resource groups is 1; and
when ${N}_{ap}^{SRS} = 8$, the number of the time domain resource groups is 2, and the number of the frequency domain resource groups is 2.

In this embodiment, the grouping information of the antenna ports may be indicated to the terminal by the network device through at least one of Radio Resource Control (RRC) signaling, Medium Access Control-Control Element (MAC-CE) signaling, or Downlink Control Information (DCI) signaling, and may also be determined by the terminal based on a corresponding relationship between the grouping information and one or more of the number of the antenna ports, the sequence generation parameter, or the number of the groups.

Optionally, the grouping of the ${N}_{ap}^{SRS}$ antenna ports satisfies at least one of the following:
B114: indexes of the antenna ports included in each of the antenna port groups are continuous;

Optionally, in this case, the antenna ports with adjacent serial numbers are in one group.
B115: indexes of the antenna ports included in each of the antenna port groups are at an interval of a preset value;

It should be noted that in this case, the antenna are grouped based on the serial numbers at an interval. For example, the antenna ports with the serial numbers at an interval of 1 are grouped into one group. For another example, the antenna ports with the serial numbers at an interval of 3 are grouped into one group.

Optionally, the grouping of the ${N}_{ap}^{SRS}$ antenna ports satisfies one of the following:
B116: the ${N}_{ap}^{SRS}$ antenna ports are in one group;

It should be noted that in this case, all of the antenna ports are in one group. That is, the ${N}_{ap}^{SRS}$ antenna ports are in one group.

Optionally, the ${N}_{ap}^{SRS}$ antenna ports are corresponding to a same resource.
B117: the ${N}_{ap}^{SRS}$ antenna ports are grouped equally;

It should be noted that in this case, each group has a same number of the antenna ports.
B118: the ${N}_{ap}^{SRS}$ antenna ports are grouped unequally;

It should be noted that in this case, different groups have different numbers of the antenna ports.

Assuming that the ${N}_{ap}^{SRS}$ antenna ports have serial numbers: *pᵢ* = 1000 + i, where *i* = 0, ..., ${N}_{ap}^{SRS} - 1$, and {*x*₁,..., *xₘ* } are used to represent that the antenna ports with the serial numbers of *x*₁,..., *xₘ* are an antenna port group. ${N}_{ap}^{SRS} > 4$*.* For example, ${N}_{ap}^{SRS} = 8$. For example, taking ${N}_{ap}^{SRS} = 8$ as an example, some possible grouping modes in the embodiment of the present disclosure include but are not limited to the following cases (the following numerals represent the serial numbers of the SRS ports, and the serial numbers of all of the SRS ports in one SRS port group are included in one pair of brackets):
grouping mode 1: { 1000, 1001, 1002, 1003} and {1004, 1005, 1006, 1007}; that is, 1000, 1001, 1002 and 1003 are in one group, and 1004, 1005, 1006 and 1007 are in one group;
grouping mode 2: { 1000, 1001}, { 1002, 1003}, {1004, 1005} and { 1006, 1007}; that is, 1000 and 1001 are in one group, 1004 and 1005 are in one group, and 1006 and 1007 are in one group;
grouping mode 3: {1000}, {1001}, { 1002}, {1003}, {1004}, {1005}, {1006} and { 1007}; that is, there are 8 groups in total and each of the antenna ports is one group;
grouping mode 4: { 1006, 1007} and {1001, 1003, 1004, 1005, 1000, 1002}; that is, 1006 and 1007 are in one group, and 1001, 1003, 1004, 1005, 1000 and 1002 are in one group;
grouping mode 5: {1000, 1002, 1004, 1006} and {1001, 1003, 1005, 1007}; that is, 1000, 1002, 1004 and 1006 are in one group, and 1001, 1003, 1005 and 1007 are in one group;
grouping mode 6: {1000, 1002}, {1004, 1006}, {1001, 1003} and {1005, 1007}; that is, 1000 and 1002 are in one group, 1004 and 1006 are in one group, 1001 and 1003 are in one group, and 1005 and 1007 are in one group;
grouping mode 7: {1000, 1004}, {1001, 1005}, {1002, 1006} and { 1003, 1007}; that is, 1000 and 1004 are in one group, 1001 and 1005 are in one group, 1002 and 1006 are in one group, and 1003 and 1007 are in one group;
grouping mode 8: { 1000, 1002} and {1001, 1003, 1004, 1005, 1006, 1007}; that is, 1000 and 1002 are in one group, and 1001, 1003, 1004, 1005, 1006 and 1007 are in one group;
grouping mode 9: { 1000, 1004} and {1001, 1003, 1002, 1005, 1006, 1007}; that is, 1000 and 1004 are in one group, and 1001, 1003, 1002, 1005, 1006 and 1007 are in one group;
grouping mode 10: { 1000, 1007} and {1001, 1003, 1004, 1005, 1006, 1002}; that is, 1000 and 1007 are in one group, and 1001, 1003, 1004, 1005, 1006 and 1002 are in one group.

When ${N}_{ap}^{SRS} = 4$, some possible grouping modes include (the following numerals represent the serial numbers of the SRS ports, and the serial numbers of all of the SRS ports in one SRS port group are included in one pair of brackets):
grouping mode 1: { 1000, 1001} and { 1002, 1003}; that is, 1000 and 1001 are in one group, 1002 and 1003 are in one group;
grouping mode 2: { 1000, 1002} and { 1001, 1003}; that is, 1000 and 1002 are in one group, 1001 and 1003 are in one group;
grouping mode 3: { 1000}, {1001}, { 1002}, {1003} and {1004}; that is, there are 4 groups in total and each of the antenna ports is one group;
grouping mode 4: {1000} and {1001, 1002, 1003}; that is, 1000 is one group, and 1001, 1002 and 1003 are in one group;
grouping mode 5: { 1003} and {1001, 1002, 1000}; that is, 1003 is one group, and 1001, 1002 and 1000 are in one group.

When ${N}_{ap}^{SRS} = 2$, the possible grouping modes include (the following numerals represent the serial numbers of the SRS ports, and the serial numbers of all of the SRS ports in one SRS port group are included in one pair of brackets):
{1000} and {1001}; that is, there are 2 groups in total and each of the antenna ports is one group.

B12: a sequence generation parameter of the SRS;

Optionally, there is a corresponding relationship between the sequence generation parameter of the SRS and the time domain and/or frequency domain mapping mode of the SRS antenna ports. The terminal may determine the time domain resources and/or the frequency domain resources (which may also be understood as a resource mapping mode) corresponding to the SRS ports of the SRS resource based on the corresponding relationship. Exemplarily, there is a corresponding relationship between the sequence generation parameter of the SRS and the number of time domain resource groups and/or the number of frequency domain resource groups of the SRS ports, and the terminal may determine the number of time domain resource groups and/or the number of frequency domain resource groups corresponding to the SRS ports of the SRS resource based on the sequence generation parameter of the SRS and the corresponding relationship. If the terminal and the network device pre-appoint (e.g., by a protocol) the corresponding relationship between the number of time domain resource groups and/or the number of frequency domain resource groups and the time domain resources and/or the frequency domain resources, the terminal may further determine the time domain resources and the frequency domain resources corresponding to the SRS ports, excluding the SRS resource.

Optionally, the sequence generation parameter of the SRS includes at least one of a maximum number of cyclic shifts and a cyclic shift configuration.

Optionally, the maximum number of cyclic shifts may be obtained as follows: the maximum number of cyclic shifts corresponding to the SRS sequence is determined according to a corresponding relationship between a first parameter and the maximum number of cyclic shifts, where the first parameter is used to determine a transmission comb number corresponding to the SRS resource, and is represented by a symbol *K*_{TC}.

Optionally, there is a mapping relationship between the transmission comb number and the maximum number of cyclic shifts, and an optional mapping mode is shown in Table 1:

**Table 1: mapping relationship between the transmission comb number and the maximum number of cyclic shifts**

| Transmission comb number ***K*_{TC}** | Maximum number of cyclic shifts ${n}_{SRS}^{cs , max}$ |
|---|---|
| 2 | 8 |
| 4 | 12 |
| 8 | 6 |

Optionally, the transmission comb number is indicated to the terminal by the network device, and the network device may directly indicate a value of a specific transmission comb number to the terminal. At this time, the first parameter is the transmission comb number. Optionally, the network device may also indicate to the terminal a position (e.g., serial number) of the value of the transmission comb number among all values of the transmission comb number, and then the terminal may determine the transmission comb number based on the position. At this time, the first parameter is used to determine the transmission comb number corresponding to the SRS resource.

Optionally, the terminal may obtain the maximum number of cyclic shifts ${n}_{SRS}^{cs ,max}$ based on the transmission comb number *K*_{TC}, and determine the resource mapping mode of the SRS based on ${n}_{SRS}^{cs ,max}$.

Exemplarily, one possible corresponding relationship of a time domain mapping mode (or, the number of the time domain resource groups) for ${n}_{SRS}^{cs ,max}$ and the SRS antenna ports includes:
when ${n}_{SRS}^{cs ,max} = 6$, the number of the time domain resource groups is 2, and the number of the SRS port groups is 2; and when ${n}_{SRS}^{cs ,max} = 8 or 12$, the number of the time domain resource groups is 1, and the number of the SRS port groups is 1.

Optionally, the terminal determine a grouping mode of the SRS ports and/or the resource mapping mode based on the number ${N}_{ap}^{SRS}$ of the SRS ports and ${n}_{SRS}^{cs ,max}$.

Exemplarily, when ${N}_{ap}^{SRS} = 8$ and ${n}_{SRS}^{cs ,max} = 6$, the number of the antenna port groups is N=4. Exemplarily, when ${N}_{ap}^{SRS} = 8$ and ${n}_{SRS}^{cs ,max} = 8 or 12$, the number of the antenna port groups is N=2. Exemplarily, when ${N}_{ap}^{SRS} = 1,2 or 4$, the number of the antenna port groups is N=1.

Optionally, the cyclic shift configuration in the embodiment of the present disclosure mainly indicates a cyclic shift configuration value ${n}_{SRS}^{cs}$, that is, the cyclic shift configuration value is configured at a higher level. For example, the cyclic shift configuration includes a cyclic shift configuration value, or a serial number of the cyclic shift configuration value.

Optionally, the cyclic shift configuration value ${n}_{SRS}^{cs}$ is a cyclic shift configuration value corresponding to the SRS resource, and is used to determine the cyclic shifts corresponding to the SRS sequences of all of the antenna ports included in the SRS resource.
B13: resource mapping mode information;

Optionally, the resource mapping mode information includes one of the following:
B 131: the antenna ports are mapped to one time domain resource group and/or one frequency domain resource group;
B132: the antenna ports are mapped to a plurality of time domain resource groups and/or a plurality of frequency domain resource groups;

Optionally, if a plurality of SRS ports of an SRS resource are mapped to a plurality of time domain resource groups and/or a plurality of frequency domain resource groups, the plurality of SRS ports of the SRS resources are mapped to the plurality of time domain resource groups and/or the plurality of frequency domain resource groups (e.g., two time domain resource groups and two frequency domain resource groups).

Optionally, the mapping of the antenna ports to the plurality of time domain resource groups and/or the plurality of frequency domain resource groups is indicated by indication information. For example, the resource mapping mode information includes the indication information which indicates that the antenna ports are mapped to the plurality of time domain resource groups and/or the plurality of frequency domain resource groups. Optionally, the indication information indicating that the antenna ports are mapped to the plurality of time domain resource groups and/or the plurality of frequency domain resource groups includes: time domain and/or frequency domain position information corresponding to the plurality of time domain resource groups and/or the plurality of frequency domain resource groups to which the antenna ports are mapped.

Optionally, the time domain and/or frequency domain position information includes a time domain offset between the plurality of time domain resource groups.

Optionally, the time domain and/or frequency domain position information includes a frequency domain offset between the plurality of frequency domain resource groups.

B 133: an index of the resource mapping mode;

Optionally, the system supports a plurality of resource mapping modes of the SRS resources, and the index identifies one of the resource mapping modes. The resource mapping mode in the embodiment of the present disclosure refers to a mapping relationship between the antenna port and the resource. Optionally, there are included a grouping mode of the antenna ports (e.g., grouped into 2 groups or 4 groups), the number of the antenna ports included in a group, etc. Optionally, there are included the grouping mode of the resources, and/or the time domain and/or frequency domain resources occupied by each of the resource groups.

For example, one resource mapping mode may be indicated by the index. Exemplarily, one possible mode is as follows: an alternative resource mapping mode corresponding to the index is that all of the SRS ports are mapped to the same time-frequency resource; and an alternative resource mapping mode is that the ${N}_{ap}^{SRS}$ SRS ports are mapped to 2 groups of frequency domain resources.

For example, one resource mapping mode may be indicated by the index, where an alternative resource mapping mode is that all of the SRS ports are mapped to the same time-frequency resource; an alternative resource mapping mode is that the ${N}_{ap}^{SRS}$ SRS ports include 2 groups mapped to 2 groups of frequency domain resources. For example, the index is represented by x, where when x=1, it indicates that all of the SRS ports are mapped to the same time-frequency resource, and when x=2, it indicates that the ${N}_{ap}^{SRS}$ SRS ports include 2 groups mapped to 2 groups of frequency domain resources, and the frequency domain resources of the 2 groups of SRS ports are not overlapped.

Optionally, the first information obtained by the terminal may be determined based on the configuration of the network device; for example, if the configuration information sent by the network device includes information indicative of the first information, the terminal may determine the first information based on the information indicative of the first information.

Optionally, in at least one embodiment of the present disclosure, after the obtaining first information, the method further includes:
according to the first information, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

For example, the grouping of the ${N}_{ap}^{SRS}$ antenna ports is determined according to the first information. For example, the SRS sequence corresponding to each of the ${N}_{ap}^{SRS}$ antenna ports is determined according to the first information. For example, the time domain resource and/or the frequency domain resource to which each of the ${N}_{ap}^{SRS}$ antenna ports is mapped is determined according to the first information; optionally, the time domain resources to which each antenna port in the ${N}_{ap}^{SRS}$ antenna ports is mapped is determined according to the first information; optionally, the frequency domain resource to which each of the ${N}_{ap}^{SRS}$ antenna ports is mapped is determined according to the first information; optionally, the time domain resources and the frequency domain resource to which each of the ${N}_{ap}^{SRS}$ antenna ports is mapped are determined according to the first information. For example, the grouping of the ${N}_{ap}^{SRS}$ antenna ports and the SRS sequence corresponding to each of the ${N}_{ap}^{SRS}$ antenna ports are determined according to the first information. For example, the SRS sequence corresponding to each of the ${N}_{ap}^{SRS}$ antenna ports and the time domain resource and/or the frequency domain resource to which each of the ${N}_{ap}^{SRS}$ antenna ports is mapped are determined according to the first information.

Optionally, through the first information, the terminal determines at least one of the grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped, so as to send the SRS.

Optionally, in at least one embodiment of the present disclosure, after the obtaining first information, the method further includes:
according to a corresponding relationship, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
where the corresponding relationship includes at least one of:
   C11: a corresponding relationship between the number of the antenna ports and the antenna port groups;
   C12: a corresponding relationship between the sequence generation parameter and the antenna port groups; or
   C13: a corresponding relationship between the number of the groups and the antenna port groups.

It should be noted that the corresponding relationship in the embodiment of the present disclosure may be appointed by a protocol or indicated by a network device. That is, the network device determines a corresponding relationship firstly, and then sends the corresponding relationship to the terminal.

Optionally, in at least one embodiment of the present disclosure, before the transmitting an SRS corresponding to the SRS resource, the method further includes:
determining a cyclic shift offset value corresponding to the SRS sequence which is corresponding to an antenna port with an index of i among the ${N}_{ap}^{SRS}$ antenna ports; and
determining the SRS sequence which is corresponding to the antenna port with the index of i according to the cyclic shift offset value.

Optionally, in the embodiment of the present disclosure, a determination mode of a cyclic shift offset value ${n}_{SRS}^{cs , i}$ corresponding to the SRS sequence which is corresponding to an antenna port with an index of i (i is an integer less than or equal to ${N}_{ap}^{SRS} - 1$, or i is ${N}_{ap}^{SRS}$) among the ${N}_{ap}^{SRS}$ antenna ports includes determining based on at least one of the following formulas: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value, and *pᵢ* is a port index of the antenna port with the index of i.

Optionally, a cyclic shift offset value corresponding to a first port is calculated based on one of the above formulas, a cyclic shift offset value corresponding to a second port is calculated based on the other of the above formulas, and the first port and the second port are different antenna ports of the ${N}_{ap}^{SRS}$ antenna ports. That is, one part of the ${N}_{ap}^{SRS}$ antenna ports are corresponding to one calculation formula of the cyclic shift offset value nSRS, and the other part of the ${N}_{ap}^{SRS}$ antenna ports are corresponding to another calculation formula of ${n}_{SRS}^{cs , i}$.

Optionally, the first port and the second port are mapped to different resources. The resources are time domain resources, or frequency domain resources, or time-frequency resources (i.e., time domain resources and frequency domain resources). That is, optionally, antenna ports using the same calculation formula of ${n}_{SRS}^{cs , i}$ among the ${N}_{ap}^{SRS}$ antenna ports are mapped to the same resource, and antenna ports using different calculation formulas of ${n}_{SRS}^{cs , i}$ are mapped to different resources.

Optionally, in the embodiment of the present disclosure, the determination mode of determining the cyclic shift offset value ${n}_{SRS}^{cs , i}$ corresponding to the SRS sequence which is corresponding to the antenna port with the index of i among the ${N}_{ap}^{SRS}$ antenna ports may be of one or more of:
Implementation 1: in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i.*

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a first formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, for a given (or predetermined, or designated) antenna port, the corresponding first formula is determined based on one or more of the maximum number of cyclic shifts, the cyclic shift configuration value, or the transmission comb number.

For example, if ${n}_{SRS}^{cs ,max} = 8$, when the cyclic shift configuration value is ${n}_{SRS}^{cs} ∈$ $\left\{{n}_{SRS}^{cs ,max}/2,…,{n}_{SRS}^{cs ,max}-1\right\}$, the first formula corresponding to the antenna ports in one SRS port group is ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max}$; when the cyclic shift configuration value is ${n}_{SRS}^{cs} ∈ \left\{{n}_{SRS}^{cs ,max}/2,…,{n}_{SRS}^{cs ,max}-1\right\}$, the first formula corresponding to the antenna ports in another SRS port group is ${n}_{SRS}^{cs , i} = \left({n}_{SRS}^{cs}+\right.$ $\left.\frac{{n}_{SRS}^{cs ,max} \left⌊\left({p}_{i}-1000\right)/2\right⌋}{{N}_{ap}^{SRS} / 2}\right) mod {n}_{SRS}^{cs ,max}$.

Implementation 2: in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a second formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 12$, for a given (or predetermined, or designated) antenna port, the corresponding second formula is determined based on one or more of the maximum number of cyclic shifts, the cyclic shift configuration value, or the transmission comb number.

For example, if ${n}_{SRS}^{cs ,max} = 12$, when the cyclic shift configuration value is ${n}_{SRS}^{cs} ∈$ $\left\{{n}_{SRS}^{cs ,max}/2,…,{n}_{SRS}^{cs ,max}-1\right\}$, the second formula corresponding to the antenna ports in one SRS port group is ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max}$; when the cyclic shift configuration value is ${n}_{SRS}^{cs} ∈ \left\{{n}_{SRS}^{cs ,max}/2,…,{n}_{SRS}^{cs ,max}-1\right\}$, the second formula corresponding to the antenna ports in another SRS port group is ${n}_{SRS}^{cs , i} = \left({n}_{SRS}^{cs}+\right.$ $\left.\frac{{n}_{SRS}^{cs ,max} \left⌊\left({p}_{i}-1000\right)/2\right⌋}{{N}_{ap}^{SRS} / 2}\right) mod {n}_{SRS}^{cs ,max}$.

Implementation 3: in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a third formula which includes at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 6$, for a given (or predetermined, or designated) antenna port, the corresponding third formula is determined based on one or more of the maximum number of cyclic shifts, the cyclic shift configuration value, or the transmission comb number.

For example, if ${n}_{SRS}^{cs ,max} = 6$, when the cyclic shift configuration value is ${n}_{SRS}^{cs} ∈$ $\left\{{n}_{SRS}^{cs ,max}/2,…,{n}_{SRS}^{cs ,max}-1\right\}$, the third formula corresponding to the antenna ports in one SRS port group is ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max}$; when the cyclic shift configuration value is ${n}_{SRS}^{cs} ∈ \left\{{n}_{SRS}^{cs ,max}/2,…,{n}_{SRS}^{cs ,max}-1\right\}$, the third formula corresponding to the antenna ports in another SRS port group is ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max}$.

Implementation 4: in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) .$

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fourth formula which includes at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 16$, for a given (or predetermined, or designated) antenna port, the corresponding fourth formula is determined based on one or more of the maximum number of cyclic shifts, the cyclic shift configuration value, or the transmission comb number.

For example, if ${n}_{SRS}^{cs ,max} = 16$, when the cyclic shift configuration value is ${n}_{SRS}^{cs} ∈$ $\left\{{n}_{SRS}^{cs ,max}/2,…,{n}_{SRS}^{cs ,max}-1\right\}$, the fourth formula corresponding to the antenna ports in one SRS port group is ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max}$; when the cyclic shift configuration value is ${n}_{SRS}^{cs} ∈ \left\{{n}_{SRS}^{cs ,max}/2,…,{n}_{SRS}^{cs ,max}-1\right\}$, the fourth formula corresponding to the antenna ports in another SRS port group is ${n}_{SRS}^{cs , i} = \left({n}_{SRS}^{cs}+\right.$ $\left.\frac{{n}_{SRS}^{cs ,max} \left⌊\left({p}_{i}-1000\right)/2\right⌋}{{N}_{ap}^{SRS} / 2}\right) mod {n}_{SRS}^{cs ,max}$.

Implementation 5: the cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $\begin{matrix}2 \left⌊\frac{{n}_{SRS}^{cs ,max}}{{N}_{ap}^{SRS}}\right⌋ \left({p}_{i}-1000\right) ; \\ 2 \left({p}_{i}-1000\right) ;\end{matrix}$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fifth formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, for a given (or predetermined, or designated) antenna port, the corresponding fifth formula is determined based on one or more of the maximum number of cyclic shifts, the cyclic shift configuration value, or the transmission comb number.

For example, in case of any ${n}_{SRS}^{cs ,max}$, when the cyclic shift configuration value is ${n}_{SRS}^{cs} ∈ \left\{{n}_{SRS}^{cs ,max}/2,…,{n}_{SRS}^{cs ,max}-1\right\}$, the fifth formula corresponding to the antenna ports in one SRS port group is ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max}$; when the cyclic shift configuration value is ${n}_{SRS}^{cs} ∈ \left\{{n}_{SRS}^{cs ,max}/2,…,{n}_{SRS}^{cs ,max}-1\right\}$, the fifth formula corresponding to the antenna ports in another SRS port group is ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max}$.

It should be noted that the above implementations 1 to 4 limit the obtaining mode of ${n}_{SRS}^{cs , i}$ under different values of ${n}_{SRS}^{cs ,max}$, while the implementation 5 does not distinguish the values of ${n}_{SRS}^{cs ,max}$, i.e., the obtaining formula of ${n}_{SRS}^{cs , i}$ used under different values of ${n}_{SRS}^{cs ,max}$ may be the same or different.

Optionally, the antenna ports in different antenna port groups adopt different formulas to determine the cyclic shift offset value.

Optionally, the sequences corresponding to the ${N}_{ap}^{SRS}$ antenna ports are determined based on one or more of the maximum number of cyclic shifts, the number of the antenna ports ${N}_{ap}^{SRS}$, or the cyclic shift configuration value.

Specifically, the cyclic shift offset values corresponding to the ${N}_{ap}^{SRS}$ antenna ports may be determined based on one or more of the maximum number of cyclic shifts, the number of the antenna ports ${N}_{ap}^{SRS}$, or the cyclic shift configuration value, and the SRS sequence may be determined based on the cyclic shift offset values.

Optionally, in a case where the maximum number of cyclic shifts and the number of the antenna ports ${N}_{ap}^{SRS}$ are given (or predetermined, or designated), all of the antenna ports adopt the same calculation formula of the cyclic shift offset value.

Optionally, in a case where the maximum number of cyclic shifts, the number of the antenna ports ${N}_{ap}^{SRS}$ and the cyclic shift configuration value are given (or predetermined, or designated), all of the antenna ports in the same SRS resource adopt the same calculation formula of the cyclic shift offset value.

Optionally, in a case where two SRS resources each including ${N}_{ap}^{SRS}$ antenna ports in a system are configured with the same maximum number of cyclic shifts, the same number of the antenna ports ${N}_{ap}^{SRS}$, and different cyclic shift configuration values, at least part of the antenna ports included in the two SRS resources adopt different calculation formulas of the cyclic shift offset value.

Optionally, in at least one embodiment of the present disclosure, the transmitting an SRS corresponding to the SRS resource includes:
determining a position parameter ${k}_{TC}^{\left({p}_{i}\right)}$ of a frequency domain resource corresponding to an antenna port with an index of i among the ${N}_{ap}^{SRS}$ antenna ports;
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource.

Optionally, in the embodiment of the present disclosure, the implementation of the determining a starting position of a frequency domain resource to which the SRS sequence corresponding to the antenna port with the index of i is mapped, according to the position parameter ${k}_{TC}^{\left({p}_{i}\right)}$ of the frequency domain resource may be one or more of the following.

Implementation 1: in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 .$

Optionally, in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on a sixth formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, an alternative form of ${k}_{TC}^{\left({p}_{i}\right)} = \left({\overline{k}}_{TC}+2{K}_{TC}/4\right) mod {K}_{TC}$ is ${k}_{TC}^{\left({p}_{i}\right)} =$ (*k̅*_{TC} + *K*_{TC}/2) mod *K*_{TC}.

Optionally, in a case where the maximum number of cyclic shifts corresponding to the SRS resource is ${n}_{SRS}^{cs ,max} = 8$ or 16, for a given (or predetermined, or designated) antenna port, the corresponding sixth formula is determined based on one or more of the maximum number of cyclic shifts, the cyclic shift configuration value, or the transmission comb number.

For example, if ${n}_{SRS}^{cs ,max} = 8$, when the cyclic shift configuration value is ${n}_{SRS}^{cs} ∈$ $\left\{{n}_{SRS}^{cs ,max}/2,…,{n}_{SRS}^{cs ,max}-1\right\}$, the sixth formula corresponding to the antenna ports in one SRS port group is ${k}_{TC}^{\left({p}_{i}\right)} = {\overline{k}}_{TC}$, and the sixth formula corresponding to the antenna ports in another SRS port group is ${k}_{TC}^{\left({p}_{i}\right)} = \left({\overline{k}}_{TC}+{K}_{TC}/4\right) mod {K}_{TC}$*;* optionally, for other cyclic shift configuration values, the sixth formula corresponding to all of the antenna ports is ${k}_{TC}^{\left({p}_{i}\right)} = {\overline{k}}_{TC}$.

Implementation 2: in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 .$

Optionally, in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on a seventh formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ where *k̅*_{TC} is an offset of a comb in the frequency domain; and *K*_{TC} is a transmission comb number.

Optionally, an alternative form of ${k}_{TC}^{\left({p}_{i}\right)} = \left({\overline{k}}_{TC}+2{K}_{TC}/4\right) mod {K}_{TC}$. is ${k}_{TC}^{\left({p}_{i}\right)} =$ $\left({\overline{k}}_{TC}+{K}_{TC}/2\right) mod {K}_{TC} {k}_{TC}^{\left({p}_{i}\right)} = \left({\overline{k}}_{TC}+{K}_{TC}/2\right) mod {K}_{TC}$.

Optionally, in a case where the maximum number of cyclic shifts corresponding to the SRS resource is ${n}_{SRS}^{cs ,max} = 12$ or 6, for a given (or predetermined, or designated) antenna port, the corresponding seventh formula is determined based on one or more of the maximum number of cyclic shifts, the cyclic shift configuration value, or the transmission comb number.

For example, if ${n}_{SRS}^{cs ,max} = 12$, when the cyclic shift configuration value is ${n}_{SRS}^{cs} ∈$ $\left\{{n}_{SRS}^{cs ,max}/2,…,{n}_{SRS}^{cs ,max}-1\right\}$, the seventh formula corresponding to the antenna ports in one SRS port group is ${k}_{TC}^{\left({p}_{i}\right)} = {\overline{k}}_{TC}$, and the seventh formula corresponding to the antenna ports in another SRS port group is ${k}_{TC}^{\left({p}_{i}\right)} = \left({\overline{k}}_{TC}+{K}_{TC}/4\right) mod {K}_{TC}$; optionally, for other cyclic shift configuration values, the seventh formula corresponding to all of the antenna ports is ${k}_{TC}^{\left({p}_{i}\right)} =$. *k̅*_{TC}.

Implementation 3: the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 .$

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on an eighth formula which includes at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, in a case where the maximum number of cyclic shifts corresponding to the SRS resource is not limited, for a given (or predetermined, or designated) antenna port, the corresponding eighth formula is determined based on one or more of the maximum number of cyclic shifts, the cyclic shift configuration value, or the transmission comb number.

For example, in case of any ${n}_{SRS}^{cs ,max}$, when the cyclic shift configuration value is ${n}_{SRS}^{cs} ∈ \left\{{n}_{SRS}^{cs ,max}/2,…,{n}_{SRS}^{cs ,max}-1\right\}$, the eighth formula corresponding to the antenna ports in one SRS port group is ${k}_{TC}^{\left({p}_{i}\right)} = \left({\overline{k}}_{TC}+{K}_{TC}/4\right) mod {K}_{TC}$*,* and the eighth formula corresponding to the antenna ports in another SRS port group is ${k}_{TC}^{\left({p}_{i}\right)} = \left({\overline{k}}_{TC}+1\right) mod {K}_{TC}$; optionally, for other cyclic shift configuration values, the eighth formula corresponding to all of the antenna ports is ${k}_{TC}^{\left({p}_{i}\right)} = \left({\overline{k}}_{TC}+{K}_{TC}/4\right) mod {K}_{TC}$.

It should be noted that k̅_{TC} may be determined based on the configuration information of the SRS resource. For example, the configuration information carries k̅_{TC}.

It should be noted that the implementation 1 and the implementation 2 described above limit the obtaining mode of ${k}_{TC}^{\left({p}_{i}\right)}$ under different values of ${n}_{SRS}^{cs ,max}$ , and the implementation 3 does not distinguish the values of ${n}_{SRS}^{cs ,max}$, i.e., ${k}_{TC}^{\left({p}_{i}\right)}$ may be obtained using the same or different formulas under different values of ${n}_{SRS}^{cs ,max}$.

It should also be noted that, optionally, the antenna ports in different antenna port groups adopt different formulas to determine the position parameter of the frequency domain resource.

Optionally, a starting position of a frequency domain resource corresponding to the ${N}_{ap}^{SRS}$ antenna ports is determined based on one or more of the maximum number of cyclic shifts, the number of the antenna ports ${N}_{ap}^{SRS}$, or the cyclic shift configuration value.

Specifically, a position parameter of a frequency domain resource corresponding to the ${N}_{ap}^{SRS}$ antenna ports may be determined based on one or more of the maximum number of cyclic shifts, the number of the antenna ports ${N}_{ap}^{SRS}$, or the cyclic shift configuration value, and a starting position of the frequency domain resource may be further determined based on the cyclic shift configuration value.

Optionally, in a case where the maximum number of cyclic shifts and the number of the antenna ports ${N}_{ap}^{SRS}$ are given (or predetermined, or designated), all of the antenna ports adopt the same calculation formula of the position parameter of the frequency domain resource.

Optionally, in a case where the maximum number of cyclic shifts, the number of the antenna ports ${N}_{ap}^{SRS}$ and the cyclic shift configuration value are given (or predetermined, or designated), all of the antenna ports in the same SRS resource adopt the same calculation formula of the position parameter of the frequency domain resource.

Optionally, in a case where two SRS resources each including ${N}_{ap}^{SRS}$ antenna ports in a system are configured with the same maximum number of cyclic shifts, the same number of the antenna ports ${N}_{ap}^{SRS}$, and different cyclic shift configuration values, at least part of the antenna ports included in the two SRS resources adopt different calculation formulas of the position parameter of the frequency domain resource.

Optionally, in the above embodiments, a starting position of a frequency domain resource is corresponding to the position parameter ${k}_{TC}^{\left({p}_{i}\right)}$ of the frequency domain resource, which includes: determining a starting position of a frequency domain resource based on the position parameter ${k}_{TC}^{\left({p}_{i}\right)}$ of the frequency domain resource.

It should be noted that the operator $\left⌊.\right⌋$ mentioned in the embodiments of the present disclosure means rounding down.

Taking ${N}_{ap}^{SRS} = 8$ as an example, the obtaining mode of ${k}_{TC}^{\left({p}_{i}\right)}$ and ${n}_{SRS}^{cs , i}$ in at least one embodiment of the present disclosure is illustrated as follows.

Solution 1: ${n}_{SRS}^{cs ,max} = 8$ or 12; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

Optionally, transmissions of all of the antenna ports of the SRS are at the same frequency domain position.

Optionally, a frequency domain transmission position of the SRS is obtained based on ${k}_{TC}^{\left({p}_{i}\right)}$. In one case, ${k}_{TC}^{\left({p}_{i}\right)} = {\overline{k}}_{TC}$.

Optionally, the starting position of the frequency domain resource of the SRS is obtained based on ${k}_{TC}^{\left({p}_{i}\right)}$ that specifically may be obtained using one of the following cases:
Case 1: for ${p}_{i} ∈ \left\{1001,1003, 1005, 1007\right\} , { k}_{TC}^{\left({p}_{i}\right)} = \left({\overline{k}}_{TC}+{K}_{TC}/2\right) mod {K}_{TC}$ for ${p}_{i} ∈ \left\{1000, 10002, 1004, 1006\right\} , { k}_{TC}^{\left({p}_{i}\right)} = {\overline{k}}_{TC} ;$
Case 2: for ${p}_{i} ∈ \left\{1000, 1002, 1004, 1006\right\} , { k}_{TC}^{\left({p}_{i}\right)} = \left({\overline{k}}_{TC}+{K}_{TC}/2\right) mod {K}_{TC}$ for ${p}_{i} ∈ \left\{1001, 1003,1005,1007\right\} , { k}_{TC}^{\left({p}_{i}\right)} = {\overline{k}}_{TC} ;$
Case 3: for ${p}_{i} ∈ \left\{1004, 1005,1006,1007\right\} , {k}_{TC}^{\left({p}_{i}\right)} = \left({\overline{k}}_{TC}+{K}_{TC}/2\right) mod {K}_{TC}$ for ${p}_{i} ∈ \left\{1000, 1001,1002,1003\right\} , { k}_{TC}^{\left({p}_{i}\right)} = {\overline{k}}_{TC} .$
Case 4: for ${p}_{i} ∈ \left\{1000, 1001,1002,1003\right\} , {k}_{TC}^{\left({p}_{i}\right)} = \left({\overline{k}}_{TC}+{K}_{TC}/2\right) mod {K}_{TC}$ for ${p}_{i} ∈ \left\{1004, 1005,1006,1007\right\} , { k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Optionally, under this solution, the transmissions of all of the antenna ports of the SRS are at the same time domain position.

Solution 2: ${N}_{ap}^{SRS} = 8$ and *K*_{TC} = 2, and/or ${n}_{SRS}^{cs ,max} = 8$; the antenna ports are equally grouped into two groups

The sequence of the antenna ports *pᵢ* of the SRS is generated based on ${n}_{SRS}^{cs , i}$, where i is a non-negative integer, and ${n}_{SRS}^{cs , i}$ is valued as: ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} .$

The starting position of the frequency domain resource of the SRS is obtained based on ${k}_{TC}^{\left({p}_{i}\right)}$. When the number of the antenna ports in the SRS is ${N}_{ap}^{SRS} = 8$ and ${n}_{SRS}^{cs ,max} = 8$, or ${N}_{ap}^{SRS} = 8$ and *K*_{TC} = 2, ${k}_{TC}^{\left({p}_{i}\right)}$ specifically may be obtained using one of the following cases:
Case 1: for ${p}_{i} ∈ \left\{1001, 1003, 1005, 1007\right\} , {k}_{TC}^{\left({p}_{i}\right)} = \left({\overline{k}}_{TC}+{K}_{TC}/2\right) mod {K}_{TC}$ for ${p}_{i} ∈ \left\{1000, 1002, 1004, 1006\right\} , {k}_{TC}^{\left({p}_{i}\right)} = {\overline{k}}_{TC} ;$
Case 2: for ${p}_{i} ∈ \left\{1000, 1002, 1004, 1006\right\} , {k}_{TC}^{\left({p}_{i}\right)} = \left({\overline{k}}_{TC}+{K}_{TC}/2\right) mod {K}_{TC}$ for ${p}_{i} ∈ \left\{1001, 1003, 1005, 1007\right\} , {k}_{TC}^{\left({p}_{i}\right)} = {\overline{k}}_{TC} ;$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 3: ${n}_{SRS}^{cs ,max} = 12$; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for ${p}_{i} ∈ \left\{1001, 1003,1005,1007\right\} , {k}_{TC}^{\left({p}_{i}\right)} = \left({\overline{k}}_{TC}+{K}_{TC}/2\right) mod {K}_{TC} ;$ for ${p}_{i} ∈ \left\{1000, 1002,1004,1006\right\} , {k}_{TC}^{\left({p}_{i}\right)} = {\overline{k}}_{TC} .$
Case 2: for ${p}_{i} ∈ \left\{1000, 1002, 1004, 1006\right\} , {k}_{TC}^{\left({p}_{i}\right)} = \left({\overline{k}}_{TC}+{K}_{TC}/2\right) mod {K}_{TC} ;$ for ${p}_{i} ∈ \left\{1001, 1003, 1005, 1007\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 4: ${n}_{SRS}^{cs ,max} = 12$; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs , i}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on . that specifically may be obtained using one of the following cases:
Case 1: for ${p}_{i} ∈ \left\{1004, 1005, 1006, 1007\right\} , {k}_{TC}^{\left({p}_{i}\right)} = \left({\overline{k}}_{TC}+{K}_{TC}/2\right) mod {K}_{TC} ;$ for ${p}_{i} ∈ \left\{1000, 1001, 1002, 1003\right\} , {k}_{TC}^{\left({p}_{i}\right)} = {\overline{k}}_{TC} .$
Case 2: for ${p}_{i} ∈ \left\{1000, 1001, 1002, 1003\right\} , {k}_{TC}^{\left({p}_{i}\right)} = \left({\overline{k}}_{TC}+{K}_{TC}/2\right) mod {K}_{TC} ;$ for ${p}_{i} ∈ \left\{1004, 1005, 1006, 1007\right\} , {k}_{TC}^{\left({p}_{i}\right)} = {\overline{k}}_{TC}$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 5: ${n}_{SRS}^{cs ,max} = 12$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for ${p}_{i} ∈ \left\{1003,1007\right\} , {k}_{TC}^{\left({p}_{i}\right)} = \left({\overline{k}}_{TC}+3{K}_{TC}/4\right) mod {K}_{TC} ;$ for ${p}_{i} ∈ \left\{1002,1006\right\} , {k}_{TC}^{\left({p}_{i}\right)} = \left({\overline{k}}_{TC}+2{K}_{TC}/4\right) mod {K}_{TC} ;$ for ${p}_{i} ∈ \left\{1001,1005\right\} , {k}_{TC}^{\left({p}_{i}\right)} = \left({\overline{k}}_{TC}+{K}_{TC}/4\right) mod {K}_{TC} ;$ for ${p}_{i} ∈ \left\{1000, 1004\right\} , {k}_{TC}^{\left({p}_{i}\right)} = {\overline{k}}_{TC} .$
Case 2: for
   for
   for
   for ${p}_{i} ∈ \left\{1003, 1007\right\} , {k}_{TC}^{\left({p}_{i}\right)} = \left({\overline{k}}_{TC}+3\right) mod {K}_{TC} ;$ ${p}_{i} ∈ \left\{1002, 1006\right\} , {k}_{TC}^{\left({p}_{i}\right)} = \left({\overline{k}}_{TC}+2\right) mod {K}_{TC} ;$ ${p}_{i} ∈ \left\{1001,1005\right\} , {k}_{TC}^{\left({p}_{i}\right)} = \left({\overline{k}}_{TC}+1\right) mod {K}_{TC} ;$ ${p}_{i} ∈ \left\{1000, 1004\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 6: ${n}_{SRS}^{cs ,max} = 12$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for for for ${p}_{i} ∈ \left\{1006,1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1004,1005\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1002, 1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 10001\right\} , {k}_{TC}^{\left({p}_{i}\right)} = {\overline{k}}_{TC} .$
Case 2: for for for for ${p}_{i} ∈ \left\{1006, 1007\right\} , {k}_{TC}^{\left({p}_{i}\right)} = \left({\overline{k}}_{TC}+3\right) mod {K}_{TC} ;$ ${p}_{i} ∈ \left\{1004, 1005\right\} , {k}_{TC}^{\left({p}_{i}\right)} = \left({\overline{k}}_{TC}+2\right) mod {K}_{TC} ;$ ${p}_{i} ∈ \left\{1002, 1003\right\} , {k}_{TC}^{\left({p}_{i}\right)} = \left({\overline{k}}_{TC}+1\right) mod {K}_{TC} ;$ ${p}_{i} ∈ \left\{1000, 1001\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 7: ${n}_{SRS}^{cs ,max} = 12$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$

The starting position of the frequency domain resource of the SRS is obtained based on . that specifically may be obtained using one of the following cases:
Case 1: for for for for ${p}_{i} ∈ \left\{1005, 1007\right\} , {k}_{TC}^{\left({p}_{i}\right)} = \left({\overline{k}}_{TC}+3{K}_{TC}/4\right) mod {K}_{TC } ;$ ${p}_{i} ∈ \left\{1004,1006\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1001,1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 1002\right\} , {k}_{TC}^{\left({p}_{i}\right)} = {\overline{k}}_{TC} .$
Case 2: for for for for ${p}_{i} ∈ \left\{1005, 1007\right\} , {k}_{TC}^{\left({p}_{i}\right)} = \left({\overline{k}}_{TC}+3\right) mod {K}_{TC} ;$ ${p}_{i} ∈ \left\{1004, 1006\right\} , {k}_{TC}^{\left({p}_{i}\right)} = \left({\overline{k}}_{TC}+2\right) mod {K}_{TC} ;$ ${p}_{i} ∈ \left\{1001, 1003\right\} , {k}_{TC}^{\left({p}_{i}\right)} = \left({\overline{k}}_{TC}+1\right) mod {K}_{TC} ;$ ${p}_{i} ∈ \left\{1000, 1002\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 8: ${n}_{SRS}^{cs ,max} = 8$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs , max} \left⌊\left({p}_{i}-1000\right)/4\right⌋}{{N}_{sp}^{SRS} / 4}\right) mod {n}_{SRS}^{cs , max} ;$ ${n}_{SRS}^{cs , i} = \left({n}_{SRS}^{cs}+\frac{{n}_{SRS}^{cs , max} \left⌊\left({p}_{i}-1000\right)/2\right⌋}{{N}_{ap}^{SRS} / 2}\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} ;$ $\left({n}_{SRS}^{cs}+\frac{{n}_{SRS}^{cs , max} \left({p}_{i}-1000\right)}{{N}_{ap}^{SRS}}\right) mod {n}_{SRS}^{cs , max} .$

The starting position of the frequency domain resource of the SRS is obtained based on ${k}_{TC}^{\left({p}_{i}\right)}$. When the number of the antenna ports in the SRS is ${N}_{ap}^{SRS} = 8$ and ${n}_{SRS}^{cs ,max} = 8$, or ${N}_{ap}^{SRS} = 8$ and *K*_{TC} = 8, , ${k}_{TC}^{\left({p}_{i}\right)}$ specifically may be obtained using one of the following cases:
Case 1: for for for for ${p}_{i} ∈ \left\{1003, 1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1002, 1006\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1001, 1005\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 1004\right\} , {k}_{TC}^{\left({p}_{i}\right)} = {\overline{k}}_{TC} .$
Case 2: for for for for ${p}_{i} ∈ \left\{1003, 1007\right\} , {k}_{TC}^{\left({p}_{i}\right)} = \left({\overline{k}}_{TC}+3\right) mod {K}_{TC} ;$ ${p}_{i} ∈ \left\{1002, 1006\right\} , {k}_{TC}^{\left({p}_{i}\right)} = \left({\overline{k}}_{TC}+2\right) mod {K}_{TC} ;$ ${p}_{i} ∈ \left\{1001, 1005\right\} , {k}_{TC}^{\left({p}_{i}\right)} = \left({\overline{k}}_{TC}+1\right) mod {K}_{TC} ;$ ${p}_{i} ∈ \left\{1000, 1004\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 9: ${n}_{SRS}^{cs ,max} = 8$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ $\left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for for for ${p}_{i} ∈ \left\{1006, 1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1004, 1005\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1002, 1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 1001\right\} , {k}_{TC}^{\left({p}_{i}\right)} = {\overline{k}}_{TC} .$
Case 2: for for for for ${p}_{i} ∈ \left\{1006, 1007\right\} , {k}_{TC}^{\left({p}_{i}\right)} = \left({\overline{k}}_{TC}+3\right) mod {K}_{TC} ;$ ${p}_{i} ∈ \left\{1004, 1005\right\} , {k}_{TC}^{\left({p}_{i}\right)} = \left({\overline{k}}_{TC}+2\right) mod {K}_{TC} ;$ ${p}_{i} ∈ \left\{1002, 1003\right\} , {k}_{TC}^{\left({p}_{i}\right)} = \left({\overline{k}}_{TC}+1\right) mod {K}_{TC} ;$ ${p}_{i} ∈ \left\{1000, 1001\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 10: ${n}_{SRS}^{cs ,max} = 8$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+2i\right) mod {n}_{SRS}^{cs , max} ;$ $\left({n}_{SRS}^{cs}+\frac{{n}_{SRS}^{cs ,max} \left({p}_{i}-1000\right)}{{N}_{ap}^{SRS}}\right) mod {n}_{SRS}^{cs , max} .$

The starting position of the frequency domain resource of the SRS is obtained based on ${k}_{TC}^{\left({p}_{i}\right)}$ that specifically may be obtained using one of the following cases:
Case 1: for for for for ${p}_{i} ∈ \left\{1005, 1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1004, 1006\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1001, 1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000,1002\right\} , {k}_{TC}^{\left({p}_{i}\right)} = {\overline{k}}_{TC} .$
Case 2: for for for for ${p}_{i} ∈ \left\{1005, 1007\right\} , {k}_{TC}^{\left({p}_{i}\right)} = \left({\overline{k}}_{TC}+3\right) mod {K}_{TC} ;$ ${p}_{i} ∈ \left\{1004, 1006\right\} , {k}_{TC}^{\left({p}_{i}\right)} = \left({\overline{k}}_{TC}+2\right) mod {K}_{TC} ;$ ${p}_{i} ∈ \left\{1001, 1003\right\} , {k}_{TC}^{\left({p}_{i}\right)} = \left({\overline{k}}_{TC}+1\right) mod {K}_{TC} ;$ ${p}_{i} ∈ \left\{1000, 1002\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 11: ${n}_{SRS}^{cs ,max} = 8$; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ $\left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for ${p}_{i} ∈ \left\{1004, 1005, 1006, 1007\right\} , {k}_{TC}^{\left({p}_{i}\right)} = \left({\overline{k}}_{TC}+{K}_{TC}/2\right) mod {K}_{TC} ;$ ${p}_{i} ∈ \left\{1000, 1001, 1002, 1003\right\} , {k}_{TC}^{\left({p}_{i}\right)} = {\overline{k}}_{TC} .$
Case 2: for ${p}_{i} ∈ \left\{1004, 1005, 1006, 1007\right\} , {k}_{TC}^{\left({p}_{i}\right)} = \left({\overline{k}}_{TC}+4\right) mod {K}_{TC} ;$ for ${p}_{i} ∈ \left\{1000, 1001, 1002, 1003\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 12: ${n}_{SRS}^{cs ,max} = 8$; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs , max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ $\left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for ${p}_{i} ∈ \left\{1001, 1003,1005,1007\right\} , {k}_{TC}^{\left({p}_{i}\right)} = \left({\overline{k}}_{TC}+{K}_{TC}/2\right) mod {K}_{TC} ;$ ${p}_{i} ∈ \left\{1000, 1002,1004,1006\right\} , {k}_{TC}^{\left({p}_{i}\right)} = {\overline{k}}_{TC} .$
Case 2: for ${p}_{i} ∈ \left\{1001, 1003,1005,1007\right\} , {k}_{TC}^{\left({p}_{i}\right)} = \left({\overline{k}}_{TC}+1\right) mod {K}_{TC} ;$ for ${p}_{i} ∈ \left\{1000, 1002,1004,1006\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs , max}$ is determined based on *K*_{TC}.

Optionally, this solution is applicable to a case where *K*_{TC} is valued as 8, 4 or 2.

Solution 13: ${n}_{SRS}^{cs , max} = 6$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$*.* When the number of the antenna ports in the SRS is ${N}_{ap}^{SRS} = 8$ and ${n}_{SRS}^{cs ,max} = 6$, or ${N}_{ap}^{SRS} = 8$ and *K*_{TC} = 8, , ${k}_{TC}^{\left({p}_{i}\right)}$ specifically may be obtained using one of the following cases:
Case 1: for for for for ${p}_{i} ∈ \left\{1003, 1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1002, 1006\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1001, 1005\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 1004\right\} , {k}_{TC}^{\left({p}_{i}\right)} = {\overline{k}}_{TC} .$
Case 2: for for for for ${p}_{i} ∈ \left\{1003, 1007\right\} , {k}_{TC}^{\left({p}_{i}\right)} = \left({\overline{k}}_{TC}+3\right) mod {K}_{TC} ;$ ${p}_{i} ∈ \left\{1002, 1006\right\} , {k}_{TC}^{\left({p}_{i}\right)} = \left({\overline{k}}_{TC}+2\right) mod {K}_{TC} ;$ ${p}_{i} ∈ \left\{1001, 1005\right\} , {k}_{TC}^{\left({p}_{i}\right)} = \left({\overline{k}}_{TC}+1\right) mod {K}_{TC} ;$ ${p}_{i} ∈ \left\{1000, 1004\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 14: ${n}_{SRS}^{cs ,max} = 6$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for for for ${p}_{i} ∈ \left\{1006, 1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1004, 1005\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1002, 1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 1001\right\} , {k}_{TC}^{\left({p}_{i}\right)} = {\overline{k}}_{TC} .$
Case 2: for for for for ${p}_{i} ∈ \left\{1006, 1007\right\} , {k}_{TC}^{\left({p}_{i}\right)} = \left({\overline{k}}_{TC}+3\right) mod {K}_{TC} ;$ ${p}_{i} ∈ \left\{1004, 1005\right\} , {k}_{TC}^{\left({p}_{i}\right)} = \left({\overline{k}}_{TC}+2\right) mod {K}_{TC} ;$ ${p}_{i} ∈ \left\{1002, 1003\right\} , {k}_{TC}^{\left({p}_{i}\right)} = \left({\overline{k}}_{TC}+1\right) mod {K}_{TC} ;$ ${p}_{i} ∈ \left\{1000, 1001\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 15: ${n}_{SRS}^{cs ,max} = 6$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for for for $\begin{matrix}{p}_{i} ∈ \left\{1005, 1007\right\} , {k}_{TC}^{\left({p}_{i}\right)} = \left({\overline{k}}_{TC}+3{K}_{TC}/4\right) mod {K}_{TC} ; \\ {p}_{i} ∈ \left\{1004, 1006\right\} , {k}_{TC}^{\left({p}_{i}\right)} = \left({\overline{k}}_{TC}+2{K}_{TC}/4\right) mod {K}_{TC} ; \\ {p}_{i} ∈ \left\{1001, 1003\right\} , {k}_{TC}^{\left({p}_{i}\right)} = \left({\overline{k}}_{TC}+{K}_{TC}/4\right) mod {K}_{TC} ; \\ {p}_{i} ∈ \left\{1000, 1002\right\} , {k}_{TC}^{\left({p}_{i}\right)} = {\overline{k}}_{TC} .\end{matrix}$
Case 2: for for for for ${p}_{i} ∈ \left\{1005, 1007\right\} , {k}_{TC}^{\left({p}_{i}\right)} = \left({\overline{k}}_{TC}+3\right) mod {K}_{TC} ;$ ${p}_{i} ∈ \left\{1004, 1006\right\} , {k}_{TC}^{\left({p}_{i}\right)} = \left({\overline{k}}_{TC}+2\right) mod {K}_{TC} ;$ ${p}_{i} ∈ \left\{1001, 1003\right\} , {k}_{TC}^{\left({p}_{i}\right)} = \left({\overline{k}}_{TC}+1\right) mod {K}_{TC} ;$ ${p}_{i} ∈ \left\{1000, 1002\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 16: ${n}_{SRS}^{cs ,max} = 6$; the antenna ports are unequally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$. When the number of the antenna ports in the SRS is ${N}_{ap}^{SRS} = 8$ and ${n}_{SRS}^{cs ,max} = 6$, or ${N}_{ap}^{SRS} = 8$ and *K*_{TC} = 8, ${k}_{TC}^{\left({p}_{i}\right)}$ specifically may be obtained using one of the following cases:
Case 1: for ${p}_{i} ∈ \left\{1006, 1007\right\} , {k}_{TC}^{\left({p}_{i}\right)} = \left({\overline{k}}_{TC}+{K}_{TC}/2\right) mod {K}_{TC} ;$ for ${p}_{i} ∈ \left\{1000, 1001, 1002, 1003, 1004, 1005\right\} , {k}_{TC}^{\left({p}_{i}\right)} = {\overline{k}}_{TC} .$
Case 2: for ${p}_{i} ∈ \left\{1006,1007\right\} , {k}_{TC}^{\left({p}_{i}\right)} = {\overline{k}}_{TC} ;$ for ${p}_{i} ∈ \left\{1000, 1001, 1002, 1003, 1004, 1005\right\} , {k}_{TC}^{\left({p}_{i}\right)} = \left({\overline{k}}_{TC}+{K}_{TC}/2\right) mod {K}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8.

Solution 17: ${n}_{SRS}^{cs ,max} = 16$; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+\frac{{n}_{SRS}^{cs , max}}{{N}_{ap}^{SRS}}\left({p}_{i}-1000\right)\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} .$

The starting position of the frequency domain resource of the SRS is obtained based on ${k}_{TC}^{\left({p}_{i}\right)}$ that specifically may be obtained using one of the following cases:
Case 1: for for ${p}_{i} ∈ \left\{1004, 1005, 1006, 1007\right\} , {k}_{TC}^{\left({p}_{i}\right)} = \left({\overline{k}}_{TC}+{K}_{TC}/2\right) mod {K}_{TC} ;$ ${p}_{i} ∈ \left\{1000, 1001, 1002, 1003\right\} , {k}_{TC}^{\left({p}_{i}\right)} = {\overline{k}}_{TC} .$
Case 2: for for ${p}_{i} ∈ \left\{1004, 1005, 1006, 1007\right\} , {k}_{TC}^{\left({p}_{i}\right)} = \left({\overline{k}}_{TC}+4\right) mod {K}_{TC}$ ${p}_{i} ∈ \left\{1000, 1001, 1002, 1003\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 18: ${n}_{SRS}^{cs ,max} = 16$; the antenna ports are equally grouped into two groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for ${p}_{i} ∈ \left\{1001, 1003, 1005, 1007\right\} , {k}_{TC}^{\left({p}_{i}\right)} = \left({\overline{k}}_{TC}+{K}_{TC}/2\right) mod {K}_{TC} ;$ for ${p}_{i} ∈ = \left\{1000, 1002, 1004, 1006\right\} , {k}_{TC}^{\left({p}_{i}\right)} = {\overline{k}}_{TC} .$
Case 2: for for ${p}_{i} ∈ \left\{1001, 1003, 1005, 1007\right\} , {k}_{TC}^{\left({p}_{i}\right)} = \left({\overline{k}}_{TC}+1\right) mod {K}_{TC} ;$ ${p}_{i} ∈ \left\{1000, 1002, 1004, 1006\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

Solution 19: ${n}_{SRS}^{cs ,max} = 16$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$. When the number of the antenna ports in the SRS is ${N}_{ap}^{SRS} = 8$ and ${n}_{SRS}^{cs ,max} = 16$, or ${N}_{ap}^{SRS} = 8$ and *K*_{TC} = 8, ${k}_{TC}^{\left({p}_{i}\right)}$ specifically may be obtained using one of the following cases:
Case 1: for for for for ${p}_{i} ∈ \left\{1003,1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1002,1006\right\} , {k}_{TC}^{\left({p}_{i}\right)} = \left({\overline{k}}_{TC}+2{K}_{TC}/4\right) mod {K}_{TC} ;$ ${p}_{i} ∈ \left\{1001,1005\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000,1004\right\} , {k}_{TC}^{\left({p}_{i}\right)} = {\overline{k}}_{TC} .$
Case 2: for ${p}_{i} ∈ \left\{1003,1007\right\} , {k}_{TC}^{\left({p}_{i}\right)} = \left({\overline{k}}_{TC}+3\right) mod {K}_{TC} ;$ for ${p}_{i} ∈ \left\{1002,1006\right\} , {k}_{TC}^{\left({p}_{i}\right)} = \left({\overline{k}}_{TC}+2\right) mod {K}_{TC} ;$ for ${p}_{i} ∈ \left\{1001,1005\right\} , {k}_{TC}^{\left({p}_{i}\right)} = \left({\overline{k}}_{TC}+1\right) mod {K}_{TC} ;$ for ${p}_{i} ∈ \left\{1000,1004\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 20: ${n}_{SRS}^{cs ,max} = 16$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for for for for ${p}_{i} ∈ \left\{1006,1007\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1004,1005\right\} , {k}_{TC}^{\left({p}_{i}\right)} = \left({\overline{k}}_{TC}+3{K}_{TC}/4\right) mod {K}_{TC} ;$ ${p}_{i} ∈ \left\{1002,1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000,1001\right\} , {k}_{TC}^{\left({p}_{i}\right)} = {\overline{k}}_{TC} .$
Case 2: for for for for ${p}_{i} ∈ \left\{1006,1007\right\} , {k}_{TC}^{\left({p}_{i}\right)} = \left({\overline{k}}_{TC}+3\right) mod {K}_{TC} ;$ ${p}_{i} ∈ \left\{1004,1005\right\} , {k}_{TC}^{\left({p}_{i}\right)} = \left({\overline{k}}_{TC}+2\right) mod {K}_{TC} ;$ ${p}_{i} ∈ \left\{1002,1003\right\} , {k}_{TC}^{\left({p}_{i}\right)} = \left({\overline{k}}_{TC}+1\right) mod {K}_{TC} ;$ ${p}_{i} ∈ \left\{1000,1001\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 21: ${n}_{SRS}^{cs ,max} = 16$; the antenna ports are equally grouped into four groups

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained using one of the following cases:
Case 1: for ${p}_{i} ∈ \left\{1005, 1007\right\} , {k}_{TC}^{\left({p}_{i}\right)} = \left({\overline{k}}_{TC}+3{K}_{TC}/4\right) mod {K}_{TC} ;$ for ${p}_{i} ∈ \left\{1004, 1006\right\} , {k}_{TC}^{\left({p}_{i}\right)} = \left({\overline{k}}_{TC}+2{K}_{TC}/4\right) mod {K}_{TC} ;$ for for ${p}_{i} ∈ \left\{1001, 1003\right\} , {k}_{TC}^{\left({p}_{i}\right)} = \left({\overline{k}}_{TC}+{K}_{TC}/4\right) mod {K}_{TC} ;$ ${p}_{i} ∈ \left\{1000, 1002\right\} , {k}_{TC}^{\left({p}_{i}\right)} = {\overline{k}}_{TC} .$
Case 2: for for for for ${p}_{i} ∈ \left\{1005, 1007\right\} , {k}_{TC}^{\left({p}_{i}\right)} = \left({\overline{k}}_{TC}+3\right) mod {K}_{TC} ;$ ${p}_{i} ∈ \left\{1004, 1006\right\} , {k}_{TC}^{\left({p}_{i}\right)} = \left({\overline{k}}_{TC}+2\right) mod {K}_{TC} ;$ ${p}_{i} ∈ \left\{1001, 1003\right\} , {k}_{TC}^{\left({p}_{i}\right)} = \left({\overline{k}}_{TC}+1\right) mod {K}_{TC} ;$ ${p}_{i} ∈ \left\{1000, 1002\right\} , {k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8 or 4.

Solution 22: ${n}_{SRS}^{cs ,max} = 16$; the antenna ports are not grouped

The sequence of the antenna ports *pᵢ* of the SRS is generated based on ${n}_{SRS}^{cs , i}$, where i is a non-negative integer, and the value of ${n}_{SRS}^{cs , i}$ is determined by one the following formulas: ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} .$

The starting position of the frequency domain resource of the SRS is obtained based on ${k}_{TC}^{\left({p}_{i}\right)}$ that specifically may be obtained as follows: ${k}_{TC}^{\left({p}_{i}\right)} = {\overline{k}}_{TC} .$

Specifically, *k̅*_{TC} and *K*_{TC} are determined based on the configuration information of the SRS resource; optionally, ${n}_{SRS}^{cs ,max}$ is determined based on a parameter used to determine *K*_{TC} in the configuration information of the SRS resource, and for example, ${n}_{SRS}^{cs ,max}$ is determined based on *K*_{TC}.

Optionally, this solution is applicable to a case where *K*_{TC} is valued as 8, 4 or 2.

In the above embodiments, optionally, the transmissions of all of the antenna ports in the SRS are at the same time domain position. In the above embodiments, optionally, ${N}_{ap}^{SRS} = 8$.

Optionally, the terminal further determines the mapping mode of the frequency domain resource of the 8-port SRS resource based on the cyclic shift value ${n}_{SRS}^{cs}$ configured by the network (e.g., base station). For example, ${n}_{SRS}^{cs} ∈ \left\{{n}_{SRS}^{cs ,max}/2,…,{n}_{SRS}^{cs ,max}-1\right\}$ is corresponding to one mapping mode of the frequency domain resource, and is corresponding to another mapping mode of the frequency domain resource.

For example, when ${N}_{ap}^{SRS} = 8$ and ${n}_{SRS}^{cs} ∈ \left\{{n}_{SRS}^{cs ,max}/2,…,{n}_{SRS}^{cs ,max}-1\right\}$, the 8 SRS ports are grouped into 2 groups and mapped to 2 groups of frequency domain resources (2 groups of ${k}_{TC}^{\left({p}_{i}\right)}$); otherwise, the 8 SRS ports are grouped into 4 groups and mapped to 4 groups of frequency domain resources (4 groups of ${k}_{TC}^{\left({p}_{i}\right)}$).

### Examples of specific applications

The terminal receives the configuration information of the SRS resource, where the configuration information of the SRS resource includes at least one of:
the number of the antenna ports ${N}_{ap}^{SRS}$;
a transmission comb number *K*_{TC};
a comb shift *k̅*_{TC} in the frequency domain; or
a cyclic shift configuration value ${n}_{SRS}^{cs}$.

The value of ${n}_{SRS}^{cs ,max}$ is obtained by table look-up based on *K*_{TC} (optionally, the value of ${n}_{SRS}^{cs ,max}$ is configured).

The sequence of the SRS ports ${p}_{i} \left(i∈\left\{0,…,{N}_{ap}^{SRS}-1\right\}\right)$ is generated based on ${n}_{SRS}^{cs , i}$.

The sequence of the antenna ports of the SRS (the antenna port of the SRS may also be referred to as an SRS port) corresponding to the SRS resource is generated based on ${n}_{SRS}^{cs , i}$.

Exemplarily, the SRS sequence is generated as follows: ${r}^{\left({p}_{i}\right)} \left(n,l′\right) = {r}_{u , v}^{\left({α}_{i}, δ\right)} \left(n\right) ;$ $0 \leq n \leq {M}_{sc ,b}^{SRS} - 1 ;$ $l ′ ∈ \left\{0,1,…,{N}_{symb}^{SRS}-1\right\} ;$ where *r*^{(*pi*)}(*n*, *l*') is an SRS sequence corresponding to the antenna ports *pᵢ*, ${M}_{sc , b}^{SRS}$ is a length of the SRS sequence, ${r}_{u , v}^{\left({α}_{i}, δ\right)} \left(n\right)$ is a sequence generated based on δ, a cyclic shift *αᵢ* and a base sequence. *δ* = log₂(*K*_{TC}),*K*_{TC} ∈ {2,4,8}, which is configured by high layer parameters. ${M}_{sc , b}^{SRS}$ is the number of OFDM symbols occupied by the SRS.

The determination of ${n}_{SRS}^{cs , i}$ includes at least one of: when ${N}_{ap}^{SRS} = 8 and {n}_{SRS}^{cs ,max} = 12 , {n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ when ${N}_{ap}^{SRS} = 8 and {n}_{SRS}^{cs ,max} = 8 , {n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ when ${N}_{ap}^{SRS} = 8 and {n}_{SRS}^{cs ,max} = 6 , {n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$
optionally, $\begin{matrix}{n}_{SRS}^{cs ,i} = \\ \left\{\begin{matrix}\begin{matrix}\left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} & {if N}_{ap}^{SRS} = 8 and {n}_{SRS}^{cs ,max} = 8 , or \\ & {N}_{ap}^{SRS} = 8 and {n}_{SRS}^{cs ,max} = 12\end{matrix} \\ \begin{matrix}\left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} & if {N}_{ap}^{SRS} = 8 and {n}_{SRS}^{cs ,max} = 6 \\ \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} & if {N}_{ap}^{SRS} = 4 and {n}_{SRS}^{cs ,max} = 6 \\ \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} & otherwise\end{matrix}\end{matrix}\right.\end{matrix}$

The starting position of the frequency domain resource of the SRS is obtained based on ${k}_{TC}^{\left({p}_{i}\right)}$, and a determination mode of ${k}_{TC}^{\left({p}_{i}\right)}$ includes at least one of:

When ${N}_{ap}^{SRS} = 8$ and ${n}_{SRS}^{cs ,max} = 6$, for ${p}_{i} ∈ \left\{1003, 1007\right\} , {k}_{TC}^{\left({p}_{i}\right)} = \left({\overline{k}}_{TC}+3{K}_{TC}/4\right) mod {K}_{TC}$ $for {p}_{i} ∈ \left\{1002, 1006\right\} , {k}_{TC}^{\left({p}_{i}\right)} = \left({\overline{k}}_{TC}+2{K}_{TC}/4\right) mod {K}_{TC} X {k}_{TC}^{\left({p}_{i}\right)} = \left(\begin{matrix}{\overline{k}}_{TC} + \\ {K}_{TC} / 2\end{matrix}\right) mod {K}_{TC}$ for ${p}_{i} ∈ \left\{1001, 1005\right\} , {k}_{TC}^{\left({p}_{i}\right)} = \left({\overline{k}}_{TC}+{K}_{TC}/4\right) mod {K}_{TC}$ for ${p}_{i} ∈ \left\{1000, 1004\right\} , {k}_{TC}^{\left({p}_{i}\right)} = {\overline{k}}_{TC} .$

When ${N}_{ap}^{SRS} = 8$ and ${n}_{SRS}^{cs ,max} = 8$, for for ${p}_{i} ∈ \left\{1001, 1003, 1005, 1007\right\} , {k}_{TC}^{\left({p}_{i}\right)} = \left({\overline{k}}_{TC}+{K}_{TC}/2\right) mod {K}_{TC}$ ${p}_{i} ∈ \left\{1000, 1002, 1004, 1006\right\} , {k}_{TC}^{\left({p}_{i}\right)} = {\overline{k}}_{TC} .$

When ${N}_{ap}^{SRS} = 8$ and ${n}_{SRS}^{cs , max} = 12$, for ${p}_{i} ∈ \left\{1001, 1003, 1005, 1007\right\} , {k}_{TC}^{\left({p}_{i}\right)} = \left({\overline{k}}_{TC}+{K}_{TC}/2\right) mod {K}_{TC}$ for ${p}_{i} ∈ \left\{1000, 1002, 1004, 1006\right\} , {k}_{TC}^{\left({p}_{i}\right)} = {\overline{k}}_{TC} .$

Optionally, there may be the following cases: if if if ${N}_{ap}^{SRS} = 8 , {p}_{i} ∈ \left\{1003,1007\right\} , {n}_{SRS}^{cs , max} = 6 , {k}_{TC}^{\left({p}_{i}\right)} = \left({\overline{k}}_{TC}+3{K}_{TC}/4\right) mod {K}_{TC} ;$ ${N}_{ap}^{SRS} = 8 , {p}_{i} ∈ \left\{1002,1006\right\} , {n}_{SRS}^{cs , max} = 6 , {k}_{TC}^{\left({p}_{i}\right)} = \left({\overline{k}}_{TC}+{K}_{TC}/2\right) mod {K}_{TC} ;$ ${N}_{ap}^{SRS} = 8 , {p}_{i} ∈ \left\{1001,1005\right\} , {n}_{SRS}^{cs , max} = 6 , {k}_{TC}^{\left({p}_{i}\right)} = \left({\overline{k}}_{TC}+{K}_{TC}/4\right) mod {K}_{TC} ;$ $\begin{matrix}if {N}_{ap}^{SRS} = 8 , {p}_{i} ∈ \left\{1001, 1003, 1005, 1007\right\} , {n}_{SRS}^{cs , max} = 8 , {k}_{TC}^{\left({p}_{i}\right)} = \left({\overline{k}}_{TC}+{K}_{TC}/2\right) mod \\ {K}_{TC} ;\end{matrix}$ $\begin{matrix}if {N}_{ap}^{SRS} = 8 , {p}_{i} ∈ \left\{1001, 1003, 1005, 1007\right\} , {n}_{SRS}^{cs ,max} = 12 , {k}_{TC}^{\left({p}_{i}\right)} = \left({\overline{k}}_{TC}+{K}_{TC}/2\right) mod \\ {K}_{TC} ;\end{matrix}$ if ${N}_{ap}^{SRS} = 4 , {p}_{i} ∈ \left\{1001,1003\right\} and {n}_{SRS}^{cs ,max} = 6 , {k}_{TC}^{\left({p}_{i}\right)} = \left({\overline{k}}_{TC}+{K}_{TC}/2\right) mod {K}_{TC} ;$ $\begin{matrix}if {N}_{ap}^{SRS} = 4 , {p}_{i} ∈ \left\{1001,1003\right\} and {n}_{SRS}^{cs} ∈ \left\{{n}_{SRS}^{cs ,max}/2,…,{n}_{SRS}^{cs ,max}-1\right\} , {k}_{TC}^{\left({p}_{i}\right)} = \\ \left({\overline{k}}_{TC}+{K}_{TC}/2\right) mod {K}_{TC} ;\end{matrix}$ for other cases, ${k}_{TC}^{\left({p}_{i}\right)} = {\overline{k}}_{TC}$.

Exemplarily, a mode of determining the starting position of the frequency domain resource of the SRS based on ${k}_{TC}^{\left({p}_{i}\right)}$ is:

in an *l*'-th OFDM symbol of the SRS, the antenna port *pᵢ* of the SRS is transmitted based on the following starting position ${k}_{0}^{\left({p}_{i}\right)}$ of the frequency domain resource: ${k}_{0}^{\left({p}_{i}\right)} = {\overline{k}}_{0}^{\left({p}_{i}\right)} + {n}_{offset}^{FH} + {n}_{offset}^{RPFS} ;$ where, ${\overline{k}}_{0}^{\left({p}_{i}\right)} = {n}_{shift} {N}_{sc}^{RB} + \left({k}_{TC}^{\left({p}_{i}\right)}+{k}_{offset}^{l ′}\right) mod {K}_{TC} ;$ ${k}_{TC}^{\left({p}_{i}\right)} = {\overline{k}}_{TC} ;$ ${n}_{offset}^{FH} = {\sum }_{b = 0}^{{B}_{SRS}} {K}_{TC} {M}_{sc , b}^{SRS} {n}_{b} ;$ ${n}_{offset}^{RPFS} = {N}_{sc}^{RB} {m}_{SRS , {B}_{SRS}} \left(\left({k}_{F}+{k}_{hop}\right)mod {P}_{F}\right) / {P}_{F} .$

In which, *n*_{shift} is a frequency domain offset; ${N}_{sc}^{RB}$ is the number of subcarriers included in one frequency domain Resource Block (RB); ${n}_{offset}^{FH}$ is a frequency hopping offset; ${M}_{sc , b}^{SRS}$ is a length of the SRS sequence; ${n}_{offset}^{RPFS}$ is a partial frequency offset, and optionally, ${n}_{offset}^{RPFS}$ is 0 or absent; *P*_{F} is a frequency domain coefficient; *k*_{F} is a starting RB serial number, and optionally, *k*_{F} = 0 or absent; *k*ₕₒₚ is a frequency hopping parameter, and optionally, *k*ₕₒₚ = 0 or absent; *n_{b}* is a frequency domain position index, and the value of *n_{b}* may be determined based on a high layer parameter; ${k}_{offset}^{l ′}$ is an offset corresponding to a symbol *l'*, and ${k}_{offset}^{l ′}$ is determined based on *K*_{TC} and *I',* where *l'* is a symbol index.

For the antenna port *pᵢ*, one Resource Element (RE) is mapped at an interval of *K*_{TC} subcarriers from the starting position ${k}_{0}^{\left({p}_{i}\right)}$ of the frequency domain resource, until the length of the sequence of the SRS is reached.

It should be noted that the embodiments of the present disclosure mainly provide a sequence design and a transmission resource determination method for a multi-port SRS. Based on the solutions of the present disclosure, any two SRS ports of a multi-port SRS resource may have either different cyclic shifts or different frequency domain resources, so that the same SRS resource may include more antenna ports, thereby avoiding large mutual interferences between a plurality of antenna ports of the same SRS resource.

The terminal device involved in the embodiments of the present disclosure may refer to a device providing voice and/or data connectivity to a user, a handheld device having a wireless connection function, any other processing device connected to a wireless modem, etc. In different systems, the name of the terminal device may be different, and for example, in a 5G system, the terminal device may be referred to as User Equipment (UE). The wireless terminal device may be communicated with one or more Core Networks (CNs) via a Radio Access Network (RAN). The wireless terminal device may be a mobile terminal device such as a mobile phone (or referred to as a "cellular" phone) or a computer with a mobile terminal device, such as a portable, pocket-sized, handheld, computer-embedded or vehicle-mounted mobile device, which exchanges speech and/or data with the radio access network. For example, a Personal Communication Service (PCS) phone, a cordless phone, a Session Initiated Protocol (SIP) phone, a Wireless Local Loop (WLL) station, a Personal Digital Assistant (PDA), or the like. The wireless terminal device may also be referred to as a system, a subscriber unit, a subscribe station, a mobile station, a mobile, a remote station, an access point, a remote terminal, an access terminal, a user terminal, a user agent, and a user device, which are not limited in the embodiments of the present disclosure.

The network device involved in the embodiments of the present disclosure may be a base station, which may include a plurality of cells that provide services to the terminal. Depending on the specific application scenarios, the base station may also be referred to as an access point, or a device in an access network which is communicated with the wireless terminal device over an air interface through one or more sectors, or have other names. The network device may be used to exchange the received air frames with an Internet Protocol (IP) packet, so as to serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolutional network device (evolutional NodeB, eNB or e-NodeB) in a Long Term Evolution (LTE) system, or a 5G base station (gNB) in a 5G network architecture (next generation system), or a Home evolved Node B (HeNB), a relay node, a femto, a pico, etc., which is not limited in the embodiments of the present disclosure. In some network architectures, the network device may include a Centralized Unit (CU) node and a Distributed Unit (DU) node, and a CU and a DU may also be geographically separated.

The network device and the terminal device may each use one or more antennas to perform Multi Input Multi Output (MIMO) transmission which may be Single User MIMO (SU-MIMO) or Multiple User MIMO (MU-MIMO). Depending on the form and the number of the antenna combinations, the MIMO transmission may be 2 Dimension MIMO (2D MIMO), 3 Dimension MIMO (3D MIMO), Full Dimension MIMO (FD-MIMO) or massive-MIMO, and may also be diversity transmission or precoding transmission or beamforming transmission, etc.

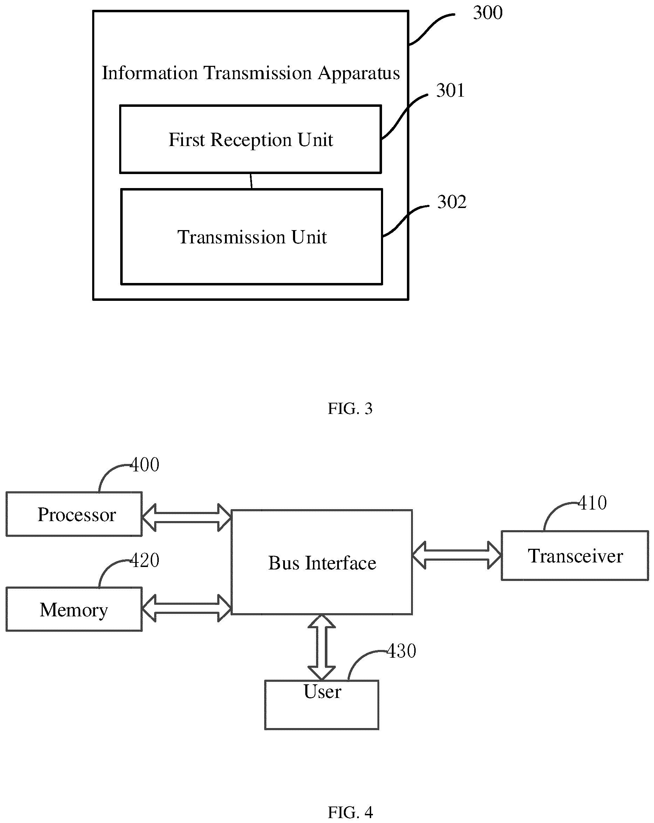

As illustrated in FIG. 3, an embodiment of the present disclosure provides an information transmission apparatus 300 applied to a terminal device, including:
a first reception unit 301 configured to receive configuration information of a Sounding Reference Signal (SRS) resource;
a transmission unit 302 configured to transmit an SRS corresponding to the SRS resource according to the configuration information and a transmission rule;
where the SRS resource includes ${N}_{ap}^{SRS}$ antenna ports, and the transmission rule includes at least one of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, before the transmission unit 302 transmits the SRS corresponding to the SRS resource, the apparatus further includes:
a first obtaining unit configured to obtain first information;
where the first information includes at least one of:
grouping information of the antenna ports;
a sequence generation parameter of the SRS; or
resource mapping mode information.

Optionally, before the transmission unit 302 transmits the SRS corresponding to the SRS resource according to the configuration information and the transmission rule, the first obtaining unit may obtain the first information. Optionally, the transmission unit 302 may include a first obtaining unit configured to obtain the first information, and the transmission unit 302 may transmit the SRS corresponding to the SRS resource based on the first information. Optionally, the transmission rule may be determined based on the first information, and the SRS corresponding to the SRS resource may be transmitted based on the configuration information and the transmission rule.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of the first information.

Optionally, the sequence generation parameter of the SRS includes at least one of a maximum number of cyclic shifts and a cyclic shift configuration.

Optionally, an obtaining mode of the maximum number of cyclic shifts includes:
determining the maximum number of cyclic shifts corresponding to the SRS sequence according to a corresponding relationship between a first parameter and the maximum number of cyclic shifts;
where the first parameter is used to determine a transmission comb number corresponding to the SRS resource.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, after the first obtaining unit obtains the first information, the apparatus further includes:
a first determination unit configured to, according to the first information, determine at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the apparatus further includes:
a second determination unit configured to, according to a corresponding relationship, determine at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
where the corresponding relationship includes at least one of:
   a corresponding relationship between the number of the antenna ports and the antenna port groups;
   a corresponding relationship between the sequence generation parameter and the antenna port groups; or
   a corresponding relationship between the number of the groups and the antenna port groups.

Optionally, before the transmission unit transmits the SRS corresponding to the SRS resource, the apparatus further includes:
a third determination unit configured to, in a case where a maximum number of cyclic shifts corresponding to the SRS resource is ${n}_{SRS}^{cs ,max} = 8$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;*
a fourth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a first formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the transmission unit transmits the SRS corresponding to the SRS resource, the apparatus further includes:
a fifth determination unit configured to, in a case where a maximum number of cyclic shifts corresponding to the SRS resource is ${n}_{SRS}^{cs ,max} = 12$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
a sixth determination unit configured to determine the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a second formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the transmission unit transmits the SRS corresponding to the SRS resource, the apparatus further includes:
a seventh determination unit configured to in a case where a maximum number of cyclic shifts corresponding to the SRS resource is ${n}_{SRS}^{cs ,max} = 6$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
an eighth determination unit configured to determine the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a third formula which includes at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the transmission unit transmits the SRS corresponding to the SRS resource, the apparatus further includes:
a ninth determination unit configured to, in a case where a maximum number of cyclic shifts corresponding to the SRS resource is ${n}_{SRS}^{cs ,max} = 16$, determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
a tenth determination unit configured to determine the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fourth formula which includes at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the transmission unit transmits the SRS corresponding to the SRS resource, the apparatus further includes:
an eleventh determination unit configured to determine a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
a twelfth determination unit configured to determine the SRS sequence which is corresponding to the antenna port with the index of i according to the cyclic shift offset value.

Optionally, the cyclic shift offset value ${n}_{SRS}^{cs ,i}$ corresponding to the SRS sequence which is corresponding to the antenna port with the index of i among the ${N}_{ap}^{SRS}$ antenna ports is determined based on a fifth formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the antenna ports in different antenna port groups adopt different formulas to determine the cyclic shift offset value.

Optionally, the transmission unit is configured to:
in a case where ${n}_{SRS}^{cs ,max} = 8$ or 16, determine a position parameter ${k}_{TC}^{\left({p}_{i}\right)}$ of a frequency domain resource corresponding to an antenna port with an index of i among the ${N}_{ap}^{SRS}$ antenna ports based on at least one of: *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource.

Optionally, in a case where ${n}_{SRS}^{cs , max} = 8$ or 16, the position parameter ${k}_{TC}^{\left({p}_{i}\right)}$ of the frequency domain resource corresponding to an antenna port with an index of i among the ${N}_{ap}^{SRS}$ antenna ports is determined based on a sixth formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the transmission unit is configured to:
in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource.

Optionally, in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on a seventh formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ where *k̅*_{TC} is an offset of a comb in the frequency domain; and *K*_{TC} is a transmission comb number.

Optionally, the transmission unit is configured to:
determine a position parameter ${k}_{TC}^{\left({p}_{i}\right)}$ of a frequency domain resource corresponding to an antenna port with an index of i among the ${N}_{ap}^{SRS}$ antenna ports based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on an eighth formula which includes at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the antenna ports in different antenna port groups adopt different formulas to determine the cyclic shift offset value.

Optionally, the ${N}_{ap}^{SRS}$ is valued as 8.

It should be noted that these apparatus embodiments are in one-to-one correspondence with the above method embodiments, so all of the implementations in the method embodiments are applicable to the apparatus embodiments and the same technical effect can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, if implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a Read-Only Memory (ROM), a Random Access Memory (RAM), a magnetic disk, or an optical disk.

As illustrated in FIG. 4, an embodiment of the present disclosure further provides a terminal device, including a processor 400, a transceiver 410, a memory 420, and a program stored in the memory 420 and runnable in the processor 400; where the transceiver 410 is connected to the processor 400 and the memory 420 through a bus interface, and where the processor 400 is configured to read the program in the memory and perform processes of:
receiving configuration information of a Sounding Reference Signal (SRS) resource by the transceiver 410;
transmitting an SRS corresponding to the SRS resource by the transceiver 410 according to the configuration information and a transmission rule;
where the SRS resource includes ${N}_{ap}^{SRS}$ antenna ports, and the transmission rule includes at least one of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

The transceiver 410 is configured to receive and transmit data under the control of the processor 400.

In which, in FIG. 4, a bus architecture may include any number of interconnected buses and bridges, and specifically various circuits of one or more processors represented by processor 400 and the memory represented by memory 420 are linked together. The bus architecture may also link together various other circuits, such as a peripheral device, a voltage stabilizer, a power management circuit, etc., which are well known in the art and not further described herein. The bus interface provides an interface. The transceiver 410 may be composed of a plurality of elements, i.e., including a transmitter and a receiver, so as to provide units for communication with various other devices over a transmission medium including a wireless channel, a wired channel, a fiber optic cable, or the like. For different user equipment, the user interface 430 may also be an interface capable of externally or internally connecting a desired device including, but not limited to, a keypad, a display, a speaker, a microphone, a joystick, or the like.

The processor 400 is responsible for managing a bus architecture and general processing, and the memory 420 may store data used by the processor 400 in performing operations.

Optionally, the processor 400 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory, and performs any one of the methods in the embodiments of the present disclosure according to an obtained executable instruction. The processor and the memory may also be physically separated.

Optionally, the ${N}_{ap}^{SRS}$ antenna ports include a plurality of antenna port groups each corresponding to one group of time domain resources and/or frequency domain resources.

Optionally, the processor reads the computer program in the memory and performs one of operations of:
obtaining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of the first information.

Optionally, the sequence generation parameter of the SRS includes at least one of a maximum number of cyclic shifts and a cyclic shift configuration.

Optionally, an obtaining mode of the maximum number of cyclic shifts includes:
determining the maximum number of cyclic shifts corresponding to the SRS sequence according to a corresponding relationship between a first parameter and the maximum number of cyclic shifts;
where the first parameter is used to determine a transmission comb number corresponding to the SRS resource.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, the processor reads the computer program in the memory and performs an operation of:
according to the first information, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.
Optionally, the processor reads the computer program in the memory and performs an operation of:
   according to a corresponding relationship, determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
   where the corresponding relationship includes at least one of:
   a corresponding relationship between the number of the antenna ports and the antenna port groups;
   a corresponding relationship between the sequence generation parameter and the antenna port groups; or
   a corresponding relationship between the number of the groups and the antenna port groups.

Optionally, the processor reads the computer program in the memory and performs operations of:
in a case where a maximum number of cyclic shifts corresponding to the SRS resource is ${n}_{SRS}^{cs , max} = 8$, determining a cyclic shift offset value nSRS corresponding to the SRS sequence which is corresponding to an antenna port with an index of i among the ${N}_{ap}^{SRS}$ antenna ports based on at least one of: $\left⌊\frac{{n}_{SRS}^{cs , max}}{{N}_{ap}^{SRS}}\right⌋ \left({p}_{i}-1000\right) ;$ $\frac{{n}_{SRS}^{cs , max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
determining the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a first formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the processor reads the computer program in the memory and performs operations of:
in a case where a maximum number of cyclic shifts corresponding to the SRS resource is ${n}_{SRS}^{cs , max} = 12$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs , max}}{{N}_{ap}^{SRS}}\right⌋ \left({p}_{i}-1000\right) ;$ $\frac{{n}_{SRS}^{cs , max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{sc ,max}}{{N}_{ap}^{SRS}}\right⌋ \left({p}_{i}-1000\right) ;$ $6 \left({p}_{i}-1000\right) ;$ 6i;
determining the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a second formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the processor reads the computer program in the memory and performs operations of:
in a case where a maximum number of cyclic shifts corresponding to the SRS resource is ${n}_{SRS}^{cs ,max} = 6$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
determining the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a third formula which includes at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,ma x} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the processor reads the computer program in the memory and performs operations of:
in a case where a maximum number of cyclic shifts corresponding to the SRS resource is ${n}_{SRS}^{cs ,max} = 16$, determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
determining the SRS sequence which is corresponding to the antenna port with the index of i according to the cyclic shift offset value.

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fourth formula which includes at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} ;$ ${n}_{SRS}^{cs , i} = \left({n}_{SRS}^{cs}+\frac{{n}_{SRS}^{cs , max} \left⌊\left({p}_{i}-1000\right)/2\right⌋}{{N}_{ap}^{SRS} / 2}\right) mod {n}_{SRS}^{cs , max} ;$ ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs , max} ;$ ${n}_{SRS}^{cs , i} = \left({n}_{SRS}^{cs}+3\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+3\left({p}_{i}-1000\right)\right) mod {n}_{SRS}^{cs , max} ;$ ${n}_{SRS}^{cs , i} = \left({n}_{SRS}^{cs}+3i\right) mod {n}_{SRS}^{cs , max} ;$ ${n}_{SRS}^{cs , i} = \left({n}_{SRS}^{cs}+4\left[\frac{{n}_{SRS}^{cs , max}}{{N}_{ap}^{SRS}}\right]\left({p}_{i}-1000\right)\right) mod {n}_{SRS}^{cs , max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the processor reads the computer program in the memory and performs operations of:
determining a cyclic shift offset value ${n}_{SRS}^{cs , i}$ corresponding to the SRS sequence which is corresponding to an antenna port with an index of i among the ${N}_{ap}^{SRS}$ antenna ports based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
determining the SRS sequence which is corresponding to the antenna port with the index of i according to the cyclic shift offset value.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fifth formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the antenna ports in different antenna port groups adopt different formulas to determine the cyclic shift offset value.

Optionally, the processor reads the computer program in the memory and performs operations of:
in a case where ${n}_{SRS}^{cs ,max} = 8$ or 16, determining a position parameter ${k}_{TC}^{\left({p}_{i}\right)}$ of a frequency domain resource corresponding to an antenna port with an index of i among the ${N}_{ap}^{SRS}$ antenna ports based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource.

Optionally, in a case where ${n}_{SRS}^{cs ,max} = 8$ or 16, the position parameter ${k}_{TC}^{\left({p}_{i}\right)}$ of the frequency domain resource corresponding to an antenna port with an index of i among the ${N}_{ap}^{SRS}$ antenna ports is determined based on a sixth formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the processor reads the computer program in the memory and performs operations of:
in a case where ${n}_{SRS}^{cs ,max} = 12$ or 6, determining a position parameter ${k}_{TC}^{\left({p}_{i}\right)}$ of a frequency domain resource corresponding to an antenna port with an index of i among the ${N}_{ap}^{SRS}$ antenna ports based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource.

Optionally, in a case where ${n}_{SRS}^{cs ,max} = 12$ or 6, the position parameter ${k}_{TC}^{\left({p}_{i}\right)}$ of the frequency domain resource corresponding to an antenna port with an index of i among the ${N}_{ap}^{SRS}$ antenna ports is determined based on a seventh formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ where *k̅*_{TC} is an offset of a comb in the frequency domain; and *K*_{TC} is a transmission comb number.

Optionally, the processor reads the computer program in the memory and performs operations of:
determining a position parameter ${k}_{TC}^{\left({p}_{i}\right)}$ of a frequency domain resource corresponding to an antenna port with an index of i among the ${N}_{ap}^{SRS}$ antenna ports based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource.

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on an eighth formula which includes at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the antenna ports in different antenna port groups adopt different formulas to determine the cyclic shift offset value.

Optionally, the ${N}_{ap}^{SRS}$ is valued as 8.

At least one embodiment of the present disclosure further provides a terminal device, including a memory, a processor, and a computer program stored in the memory and runnable in the processor, where when executing the program, the processor implements each process in the embodiment of the information transmission method applied to the terminal device, and achieves the same technical effect, which will be omitted here to avoid repetition.

At least one embodiment of the present disclosure further provides a computer-readable storage medium which stores a computer program, where when executed by a processor, the program implements each process in the embodiment of the information transmission method applied to the terminal device, and achieves the same technical effect, which will be omitted here to avoid repetition. In which, the computer-readable storage medium for example may be a Read-Only Memory (ROM), a Random Access Memory (RAM), a magnetic disk or an optical disk.

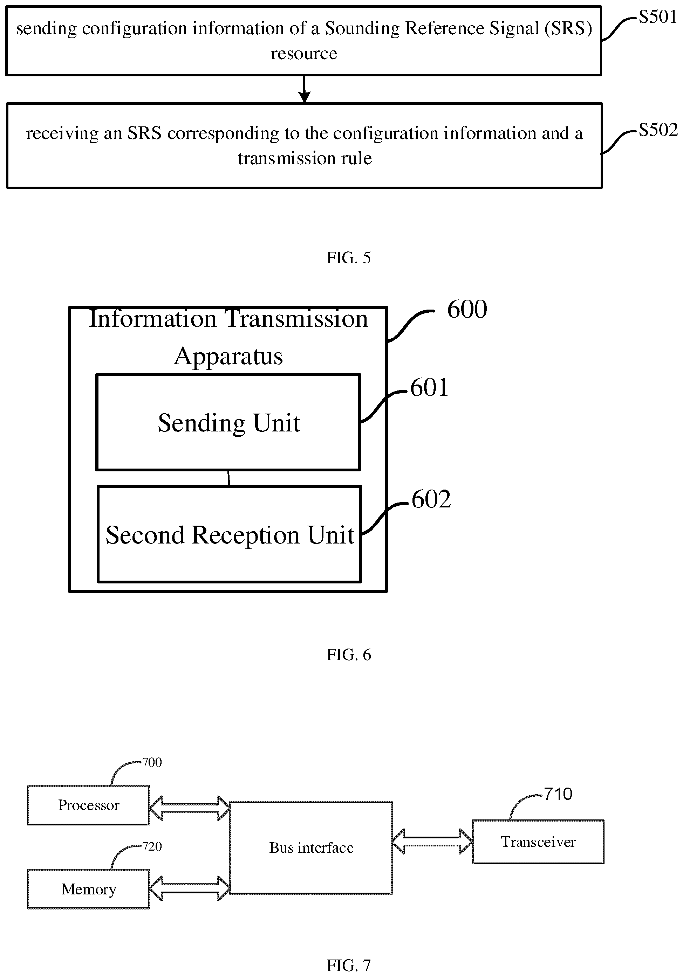

In correspondence with the implementation on the side of the terminal device, as illustrated in FIG. 5, an embodiment of the present disclosure provides an information transmission method performed by a network device, including:
Step S501: sending configuration information of a Sounding Reference Signal (SRS) resource; and
Step S502: receiving an SRS corresponding to the configuration information and a transmission rule;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

Optionally, the ${N}_{ap}^{SRS}$ antenna ports include a plurality of antenna port groups, and the method further includes:
determining at least one of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped, based on a sequence generation parameter of the SRS. Exemplarily, the sequence generation parameter of the SRS includes at least one of a maximum number of cyclic shifts and a cyclic shift configuration.

Optionally, the ${N}_{ap}^{SRS}$ antenna ports include a plurality of antenna port groups each corresponding to one group of time domain resources and/or frequency domain resources.

Optionally, before the receiving an SRS corresponding to the configuration information and a transmission rule, the method further includes:
determining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the method further includes: determining information indicative of the first information based on at least one of a grouping mode of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

Optionally, the network device sends the information indicative of the first information to the terminal.

Optionally, the configuration information includes information indicative of the first information. That is, the network device sends the information indicative of the first information to the terminal.

Optionally, the information indicative of the first information is determined based on the first information.

Optionally, the sequence generation parameter of the SRS includes at least one of a maximum number of cyclic shifts and a cyclic shift configuration.

Optionally, an obtaining mode of the maximum number of cyclic shifts includes:
determining the maximum number of cyclic shifts corresponding to the SRS sequence according to a corresponding relationship between a first parameter and the maximum number of cyclic shifts;
where the first parameter is used to determine a transmission comb number corresponding to the SRS resource.

Optionally, the resource mapping mode information includes at least one of:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the method further includes at least one of the following:
determining that there is a corresponding relationship between the number of the antenna ports and the antenna port groups;
optionally, the network device may obtain the corresponding relationship between the number of the antenna ports and the antenna port groups.
determining that there is a corresponding relationship between the sequence generation parameter and the antenna port groups;
optionally, the network device may obtain the corresponding relationship between the sequence generation parameter and the antenna port groups.
determining that there is a corresponding relationship between the number of the groups and the antenna port groups;
optionally, the network device may obtain the corresponding relationship between the number of the groups and the antenna port groups.

Optionally, after obtaining the above corresponding relationship, the network device sends the corresponding relationship to the terminal.

Optionally, the grouping of the antenna ports is determined based on the number of the antenna ports and the fact that there is a corresponding relationship between the number of the antenna ports and the antenna port groups.

Optionally, the sequence generation parameter or the grouping of the antenna ports is determined based on the fact that there is a corresponding relationship between the sequence generation parameter and the antenna port groups.

Optionally, the antenna port groups are determined, and the number of the groups is determined based on the corresponding relationship between the number of the groups and the antenna port groups.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i.*

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a first formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs . i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs , max} = 12$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs , max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6*i*.
in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a second formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$
where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs , max}}{{N}_{ap}^{SRS}}\right⌋ \left({p}_{i}-1000\right) ;$ $2 \left({p}_{i}-1000\right) ;$ 2*i*; $\left⌊\frac{{n}_{SRS}^{cs , max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs , max}}{{N}_{ap}^{SRS}}\right⌋ \left({p}_{i}-1000\right) ;$ $4 \left({p}_{i}-1000\right) ;$ 4*i*; $3 \left⌊\frac{{n}_{SRS}^{cs , max}}{{N}_{ap}^{SRS}}\right⌋ \left({p}_{i}-1000\right) ;$ $3 \left({p}_{i}-1000\right) ;$ 3*i*.

Optionally, in a case where the maximum number of cyclic shifts corresponding to the SRS resource is ${n}_{SRS}^{cs , max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a third formula which includes at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs , max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+3\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+3\left({p}_{i}-1000\right)\right) mod {n}_{SRS}^{cs , max} ;$ ${n}_{SRS}^{cs , i} = \left({n}_{SRS}^{cs}+3i\right) mod {n}_{SRS}^{cs , max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the receiving an SRS corresponding to the configuration information and a transmission rule, the method further includes:
determining the SRS sequence which is corresponding to an antenna port with an index of i;
where in a case where a maximum number of cyclic shifts corresponding to the SRS resource is ${n}_{SRS}^{cs , max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $4 \left⌊\frac{{n}_{SRS}^{cs ,max}}{{N}_{ap}^{SRS}}\right⌋ \left({p}_{i}-1000\right) .$

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fourth formula which includes at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, before the receiving an SRS corresponding to the configuration information and a transmission rule, the method further includes:
determining the SRS sequence which is corresponding to an antenna port with an index of i;
where a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fifth formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value; *pᵢ* is a port index of the antenna port with the index of i, and i is an integer less than or equal to ${N}_{ap}^{SRS} - 1$.

Optionally, the network device indicates indication information of a formula for determining ${n}_{SRS}^{cs , i}$ to the terminal. Correspondingly, the terminal receives the indication information and determines ${n}_{SRS}^{cs , i}$ based on the indication information.

Optionally, the antenna ports in different antenna port groups adopt different formulas to determine the cyclic shift offset value.

Optionally, the receiving an SRS corresponding to the configuration information and a transmission rule includes:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 .$

Optionally, in a case where ${n}_{SRS}^{cs ,max} = 8$ = 8 or 16, the position parameter ${k}_{TC}^{\left({p}_{i}\right)}$ of the frequency domain resource corresponding to the antenna port with the index of i among the ${N}_{ap}^{SRS}$ antenna ports is determined based on a sixth formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the receiving an SRS corresponding to the configuration information and a transmission rule includes:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 .$

Optionally, in a case where ${n}_{SRS}^{cs ,max} = 12$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on a seventh formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ where *k̅*_{TC} is an offset of a comb in the frequency domain; and *K*_{TC} is a transmission comb number.

Optionally, the receiving an SRS corresponding to the configuration information and a transmission rule includes:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 .$

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on an eighth formula which includes at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the antenna ports in different antenna port groups adopt different formulas to determine the cyclic shift offset value.

Optionally, the ${N}_{ap}^{SRS}$ is valued as 8.

Optionally, the network device indicates indication information of a formula for determining ${n}_{SRS}^{cs , i}$ to the terminal. Correspondingly, the terminal receives the indication information and determines ${n}_{SRS}^{cs , i}$ based on the indication information.

It should be noted that since the terminal device and the network device have the same understanding of the SRS resource, the network device determines and receives the SRS sequence in the same way as the terminal device determines and sends the SRS sequence. Any description in the above embodiments is applicable to the embodiments of the information transmission method applied to the side of the network device, and the same technical effects can be achieved.

As illustrated in FIG. 6, an embodiment of the present disclosure further provides an information transmission apparatus 600 applied to a network device, including:
a sending unit 601 configured to send configuration information of a Sounding Reference Signal (SRS) resource; and
a second reception unit 602 configured to receive an SRS corresponding to the configuration information and a transmission rule;
where the SRS resource includes ${N}_{ap}^{SRS}$ antenna ports, and the transmission rule includes at least one of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

Optionally, the ${N}_{ap}^{SRS}$ antenna ports include a plurality of antenna port groups each corresponding to one group of time domain resources and/or frequency domain resources.

Optionally, before the second reception unit 602 receives the SRS corresponding to the configuration information and the transmission rule, the apparatus further includes:
a thirteenth determination unit configured to determine first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of and determined based on the first information.

Optionally, the sequence generation parameter of the SRS includes at least one of a maximum number of cyclic shifts and a cyclic shift configuration.

Optionally, an obtaining mode of the maximum number of cyclic shifts includes:
determining the maximum number of cyclic shifts corresponding to the SRS sequence according to a corresponding relationship between a first parameter and the maximum number of cyclic shifts;
where the first parameter is used to determine a transmission comb number corresponding to the SRS resource.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, e grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the apparatus further includes at least one of:
a nineteenth determination unit configured to determine that there is a corresponding relationship between the number of the antenna ports and the antenna port groups;
a twentieth determination unit configured to determine that there is a corresponding relationship between the sequence generation parameter and the antenna port groups; or
a twenty-first determination unit configured to determine that there is a corresponding relationship between the number of the groups and the antenna port groups.

Optionally, before the reception unit 602 receives the SRS corresponding to the configuration information and the transmission rule, the apparatus further includes:
a fourteenth determination unit configured to determine the SRS sequence which is corresponding to an antenna port with an index of i;
where in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i.*

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a first formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, before the reception unit 602 receives the SRS corresponding to the configuration information and the transmission rule, the apparatus further includes:
a fifteenth determination unit configured to determine the SRS sequence which is corresponding to an antenna port with an index of i;
where in a case where a maximum number of cyclic shifts corresponding to the SRS resource is ${n}_{SRS}^{cs ,max} = 12$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6*i*.

Optionally, in a case where the maximum number of cyclic shifts corresponding to the SRS resource is ${n}_{SRS}^{cs , max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a second formula which includes at least one of: ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+\frac{{n}_{SRS}^{cs , max} \left({p}_{i}-1000\right)}{{N}_{ap}^{SRS}}\right) mod {n}_{SRS}^{cs , max} ;$ $\begin{matrix}{n}_{SRS}^{cs , i} = \left({n}_{SRS}^{cs}+{p}_{i}-1000\right) mod {n}_{SRS}^{cs , max} ; \\ {n}_{SRS}^{cs , i} = \left({n}_{SRS}^{cs}+i\right) mod {n}_{SRS}^{cs , max} ;\end{matrix}$ ${n}_{SRS}^{cs , i} = \left({n}_{SRS}^{cs}+\frac{{n}_{SRS}^{cs , max} \left⌊\left({p}_{i}-1000\right)/2\right⌋}{{N}_{ap}^{SRS} / 2}\right) mod {n}_{SRS}^{cs , max} ;$ ${n}_{SRS}^{cs , i} = \left({n}_{SRS}^{cs}+3\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+3\left({p}_{i}-1000\right)\right) mod {n}_{SRS}^{cs , max} ;$ ${n}_{SRS}^{cs , i} = \left({n}_{SRS}^{cs}+3i\right) mod {n}_{SRS}^{cs , max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, before the reception unit receives the SRS corresponding to the configuration information and the transmission rule, the apparatus further includes:
a sixteenth determination unit configured to determine the SRS sequence which is corresponding to an antenna port with an index of i;
where in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a third formula which includes at least one of: ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, before the reception unit receives the SRS corresponding to the configuration information and the transmission rule, the apparatus further includes:
a seventeenth determination unit configured to determine the SRS sequence which is corresponding to an antenna port with an index of i;
where in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $\frac{{n}_{SRS}^{cs ,max}}{{N}_{ap}^{SRS}} \left({p}_{i}-1000\right) ;$ $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $4 \left⌊\frac{{n}_{SRS}^{cs ,max}}{{N}_{ap}^{SRS}}\right⌋ \left({p}_{i}-1000\right) .$

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fourth formula which includes at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, before the reception unit receives the SRS corresponding to the configuration information and the transmission rule, the apparatus further includes:
an eighteenth determination unit configured to determine the SRS sequence which is corresponding to an antenna port with an index of i;
where a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i.

Optionally, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fifth formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+4\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+4\left({p}_{i}-1000\right)\right) mod {n}_{SRS}^{cs , max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs , max} ;$ ${n}_{SRS}^{cs , i} = \left({n}_{SRS}^{cs}+6\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+6\left({p}_{i}-1000\right)\right) mod {n}_{SRS}^{cs , max} ;$ ${n}_{SRS}^{cs , i} = \left({n}_{SRS}^{cs}+6i\right) mod {n}_{SRS}^{cs , max} ;$
where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, the antenna ports in different antenna port groups adopt different formulas to determine the cyclic shift offset value.

Optionally, the reception unit 602 is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} /4;$ ${\overline{k}}_{TC} + {K}_{TC} /4;$ ${\overline{k}}_{TC} + 4 .$

Optionally, in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on a sixth formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$
where *k̅*_{TC} is an offset of a comb in the frequency domain; and *K*_{TC} is a transmission comb number.

Optionally, the reception unit 602 is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 .$

Optionally, in a case where ${n}_{SRS}^{cs ,max} = 12$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on a seventh formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ where *k̅*_{TC} is an offset of a comb in the frequency domain; and *K*_{TC} is a transmission comb number.

Optionally, the reception unit 602 is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
where the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 .$

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on an eighth formula which includes at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the antenna ports in different antenna port groups adopt different formulas to determine the cyclic shift offset value.

Optionally, the ${N}_{ap}^{SRS}$ is valued as 8.

It should be noted that since the apparatus in the embodiments of the present disclosure is capable of performing the above information transmission method, any embodiment of the above information transmission method is applicable to the apparatus embodiments, and the same or similar advantageous effects can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, if implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a Read-Only Memory (ROM), a Random Access Memory (RAM), a magnetic disk, or an optical disk.

As illustrated in FIG. 7, an embodiment of the present disclosure further provides a network device, including a processor 700, a transceiver 710, a memory 720, and a program stored in the memory 720 and runnable in the processor 700; where the transceiver 710 is connected to the processor 700 and the memory 720 through a bus interface, and where the processor 700 is configured to read the program in the memory and perform processes of:
transmitting configuration information of a Sounding Reference Signal (SRS) resource by the transceiver 710;
receiving an SRS corresponding to the configuration information and a transmission rule by the transceiver 710;
where the SRS resource includes ${N}_{ap}^{SRS}$ antenna ports, and the transmission rule includes at least one of the following:
   cyclic shift offset values corresponding to SRS sequences which are corresponding to all or part of the antenna ports in the ${N}_{ap}^{SRS}$ antenna ports are continuous;
   the ${N}_{ap}^{SRS}$ antenna ports are mapped to at least two groups of time domain resources and/or frequency domain resources; or
   the ${N}_{ap}^{SRS}$ is an integer greater than 4.

In which, in FIG. 7, a bus architecture may include any number of interconnected buses and bridges, and specifically various circuits of one or more processors represented by processor 700 and the memory represented by memory 720 are linked together. The bus architecture may also link together various other circuits, such as a peripheral device, a voltage stabilizer, a power management circuit, etc., which are well known in the art and not further described herein. The bus interface provides an interface. The transceiver 710 may be composed of a plurality of elements, i.e., including a transmitter and a receiver, so as to provide units for communication with various other devices over a transmission medium including a wireless channel, a wired channel, a fiber optic cable, or the like. The processor 700 is responsible for managing the bus architecture and general processing, and the memory 720 may store data used by the processor 700 in performing operations.

The processor 700 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

Optionally, the ${N}_{ap}^{SRS}$ antenna ports include a plurality of antenna port groups each corresponding to one group of time domain resources and/or frequency domain resources.

Optionally, the processor 700 reads the computer program in the memory and performs processes of:
determining first information;
where the first information includes at least one of:
grouping information of the antenna ports;
a sequence generation parameter of the SRS; or
resource mapping mode information.

Optionally, the grouping of the ${N}_{ap}^{SRS}$ antenna ports satisfies at least one of the following:
indexes of the antenna ports included in each of the antenna port groups are continuous; or
indexes of the antenna ports included in each of the antenna port groups are at an interval of a preset value.

Optionally, the cyclic shift offset values corresponding to the SRS sequences which are corresponding to the antenna ports included in different antenna port groups among the plurality of antenna port groups are the same.

Optionally, the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

Optionally, the configuration information includes information indicative of and determined based on the first information.

Optionally, the sequence generation parameter of the SRS includes at least one of a maximum number of cyclic shifts and a cyclic shift configuration.

Optionally, an obtaining mode of the maximum number of cyclic shifts includes:
determining the maximum number of cyclic shifts corresponding to the SRS sequence according to a corresponding relationship between a first parameter and the maximum number of cyclic shifts;
where the first parameter is used to determine a transmission comb number corresponding to the SRS resource.

Optionally, the resource mapping mode information includes one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

Optionally, the grouping information of the ${N}_{ap}^{SRS}$ antenna ports includes the number of the groups, which includes at least one of:
the number of the antenna port groups;
the number of the time domain resource groups to which the SRS sequences are mapped; or
the number of the frequency domain resource groups to which the SRS sequences are mapped.

Optionally, the processor 700 reads the computer program in the memory and performs one of processes of:
determining that there is a corresponding relationship between the number of the antenna ports and the antenna port groups;
determining that there is a corresponding relationship between the sequence generation parameter and the antenna port groups; or
determining that there is a corresponding relationship between the number of the groups and the antenna port groups.

Optionally, the processor 700 reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $\frac{{n}_{SRS}^{cs ,max} \left⌊\left({p}_{i}-1000\right)/4\right⌋}{{N}_{ap}^{SRS} / 4} ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*.

Optionally, in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a first formula which includes at least one of: ${N}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${N}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} .$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs , max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, the processor 700 reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 12$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ $2 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ *2i;* $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6*i*.

Optionally, in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a second formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, the processor 700 reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 6$, a cyclic shift offset value nSRS corresponding to the SRS sequence which is corresponding to the antenna port with the index of i among the ${N}_{ap}^{SRS}$ antenna ports is determined based on at least one of: $\frac{{n}_{SRS}^{cs ,max} \left⌊\left({p}_{i}-1000\right)/4\right⌋}{{N}_{ap}^{SRS} / 4} ;$ $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*.

Optionally, in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a third formula which includes at least one of: ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} ;$ ${n}_{SRS}^{cs , i} = \left({n}_{SRS}^{cs}+4\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+4\left({p}_{i}-1000\right)\right) mod {n}_{SRS}^{cs , max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, the processor 700 reads the computer program in the memory and performs one of processes of:
determining the SRS sequence which is corresponding to an antenna port with an index of i;
where in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $\frac{{n}_{SRS}^{cs , max}}{{N}_{ap}^{SRS}} \left({p}_{i}-1000\right) ;$ $\left⌊\frac{{n}_{SRS}^{cs , max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $\frac{{n}_{SRS}^{cs , max} \left⌊\left({p}_{i}-1000\right)/2\right⌋}{{N}_{ap}^{SRS} / 2} ;$ $\frac{{n}_{SRS}^{cs , max} \left⌊\left({p}_{i}-1000\right)/4\right⌋}{{N}_{ap}^{SRS} / 4} ;$ $3 \left⌊\frac{{n}_{SRS}^{cs , max}}{{N}_{ap}^{SRS}}\right⌋ \left({p}_{i}-1000\right) ;$ $3 \left({p}_{i}-1000\right) ;$ 3*i*; $4 \left⌊\frac{{n}_{SRS}^{cs , max}}{{N}_{ap}^{SRS}}\right⌋ \left({p}_{i}-1000\right) .$

Optionally, in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on a fourth formula which includes at least one of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}=\frac{{n}_{SRS}^{cs ,max}}{{N}_{ap}^{SRS}}\left({p}_{i}-1000\right)\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, the processor 700 reads the computer program in the memory and performs a process of:
determining the SRS sequence which is corresponding to an antenna port with an index of i;
where a cyclic shift offset value ${n}_{SRS}^{cs , i}$ corresponding to the SRS sequence which is corresponding to the antenna port with the index of i among the ${N}_{ap}^{SRS}$ antenna ports is determined based on at least one of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6*i*.

Optionally, the cyclic shift offset value ${n}_{SRS}^{cs ,i}$ corresponding to the SRS sequence which is corresponding to the antenna port with the index of i among the ${N}_{ap}^{SRS}$ antenna ports is determined based on a fifth formula which includes at least one of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋ \left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ ${n}_{SRS}^{cs , i} = \left({n}_{SRS}^{cs}+6 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value, *pᵢ* is a port index of the antenna port with the index of i, and i is an integer less than or equal to ${N}_{ap}^{SRS} - 1$.

Optionally, the antenna ports in different antenna port groups adopt different formulas to determine the cyclic shift offset value.

Optionally, the processor 700 reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on at least one of:
   *k̅*_{TC}; ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 .$

Optionally, in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on a sixth formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the processor 700 reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 .$

Optionally, in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on a seventh formula which includes at least one of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ where *k̅*_{TC} is an offset of a comb in the frequency domain; and *K*_{TC} is a transmission comb number.

Optionally, the processor 700 reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
where the position parameter ${k}_{TC}^{\left({p}_{i}\right)}$ of the frequency domain resource corresponding to the antenna port with the index of i among the ${N}_{ap}^{SRS}$ antenna ports is determined based on at least one of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 .$

Optionally, the position parameter ${k}_{TC}^{\left({p}_{i}\right)}$ of the frequency domain resource corresponding to the antenna port with the index of i among the ${N}_{ap}^{SRS}$ antenna ports is determined based on an eighth formula which includes at least one of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$ ${k}_{TC}^{\left({p}_{i}\right)} = \left({\overline{k}}_{TC}+1\right) mod {K}_{TC} ;$ where *k̅*_{TC} is an offset of a comb in the frequency domain; and *K*_{TC} is a transmission comb number.

Optionally, the antenna ports in different antenna port groups adopt different formulas to determine the cyclic shift offset value.

Optionally, the ${N}_{ap}^{SRS}$ is valued as 8.

It should be noted that the above network device in the embodiments of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a computer-readable storage medium which stores a computer program, where when executed by a processor, the computer program implements the steps of the information transmission method applied to a network device. The computer-readable storage medium may be any available medium or data storage device accessible to the processor, including but not limited to, a magnetic storage (e.g., a floppy disk, a hard disk, a magnetic tape, Magneto-Optical (MO) disk, etc.), an optical storage (e.g., a Compact Disk (CD), a Digital Video Disk (DVD), a Blu-ray Disc (BD), a High-Definition Versatile Disc (HVD), etc.), and a semiconductor memory (e.g., a Read-Only Memory (ROM), an Erasable Programmable ROM (EPROM), an Electrically EPROM (EEPROM), an NAND FLASH, a Solid State Disk or Solid State Drive (SSD)), etc.

Those skilled in the art will appreciate that an embodiment of the present disclosure may be provided as a method, a system, or a computer program product. Accordingly, the present disclosure may take the form of entirely hardware embodiments, entirely software embodiments, or embodiments combining software and hardware aspects. Moreover, the present disclosure may take the form of a computer program product embodied on one or more computer-usable storage media (including but not limited to a disk storage, an optical storage, etc.) containing computer-usable program codes.

The present disclosure is described with reference to the flowcharts and/or the block diagrams of the method, the apparatus (system), and the computer program product according to the embodiments of the present disclosure. It should be understood that each flow and/or block in a flowchart and/or a block diagram, and combinations of the flows and/or the blocks in the flowchart and/or the block diagram may be implemented by computer-executable instructions. These computer-executable instructions may be provided to a processor of a general-purpose computer, a special-purpose computer, an embedded processing machine or other programmable data processing device to produce a machine, such that the instructions executed by the processor of the computer or other programmable data processing device create means to realize function(s) specified in one or more flows of the flowchart and/or one or more blocks in the block diagram.

These processor-executable instructions may also be stored in a processor-readable memory capable of guiding the computer or other programmable data processing device to work in a particular way, such that the instructions stored in the processor-readable memory can produce manufacture articles including an instructing device which realizes function(s) specified in one or more flows in the flowchart and/or one or more blocks in the block diagram.

These processor-executable instructions may also be loaded onto a computer or other programmable data processing device, such that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

It should be noted that the division of the modules is only a division of logical functions, and in actual implementation, the modules may be entirely or partially integrated into a physical entity, or physically separated. In addition, these modules may all be implemented by calling software with a processing element; or all be implemented in the form of hardware; or some implemented by calling software with a processing element, and some implemented in the form of hardware. For example, a module may be a separately disposed processing element, or may be implemented by being integrated in a chip of the apparatus. In addition, the module may also be stored in the form of program codes in a memory of the apparatus, and a processing element of the apparatus calls and executes the function of the module. The implementations of other modules are similar. In addition, all or part of these modules may be integrated together or independently implemented. The processing element here may be an integrated circuit with a signal processing capability. During implementation, the steps of the above method or the above modules may be completed by a hardware integrated logical circuit in the processor element or instructions in the form of software.

For example, various modules, units, sub-units, or sub-modules may be one or more integrated circuits configured to implement the above methods, such as one or more Application Specific Integrated Circuits (ASICs), or one or more microprocessors (digital signal processors, DSPs), or one or more Field Programmable Gate Arrays, (FPGAs), etc. For another example, when one of the above modules is implemented by calling program codes with a processing element, the processing element may be a general-purpose processor, such as a Central Processing Unit (CPU) or any other processor capable of calling the program codes. For still another example, these modules may be integrated and implemented in the form of a System-On-a-Chip (SOC).

The terms such as "first" and "second" in the Specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "include", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, product, or device. In addition, the term "and/or" used in the Specification and the claims means at least one of the connected objects. For example, A and/or B and/or C means that there are seven cases, i.e., A exists alone, B exists alone, C exists alone, both A and B exist, both B and C exist, both A and C exist, and A, B and C all exist. Similarly, "at least one of A and B" in the Specification and the claims should be understood as "A exists alone, B exists alone, or both A and B exist".

Obviously, those skilled in the art can make various modifications and variations to the present disclosure without departing from the spirit and the scope of the present disclosure. Thus, when these modifications and variations of the present disclosure fall within the scope of the claims of the present disclosure and the technical equivalents thereof, the present disclosure is also intended to include these modifications and variations.

## Claims

1. An information transmission method, comprising:
receiving configuration information of a Sounding Reference Signal (SRS) resource; and
transmitting an SRS corresponding to the SRS resource according to the configuration information and a transmission rule;
wherein the SRS resource comprises ${N}_{ap}^{SRS}$ antenna ports, and the transmission rule comprises one or more of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

2. The method according to claim 1, wherein the ${N}_{ap}^{SRS}$ antenna ports comprise a plurality of antenna port groups each corresponding to one group of time domain resources and/or frequency domain resources.

3. The method according to claim 2, wherein before the transmitting an SRS corresponding to the SRS resource, the method further comprises:
obtaining first information;
wherein the first information comprises one or more of:
grouping information of the antenna ports;
a sequence generation parameter of the SRS; or
resource mapping mode information.

4. The method according to claim 2 or 3, wherein the grouping of the ${N}_{ap}^{SRS}$ antenna ports satisfies one or more of the following:
indexes of the antenna ports comprised in each of the antenna port groups are continuous; or
indexes of the antenna ports comprised in each of the antenna port groups are at an interval of a preset value.

5. The method according to claim 2 or 3, wherein the cyclic shift offset values corresponding to the SRS sequences which are corresponding to the antenna ports comprised in different antenna port groups among the plurality of antenna port groups are the same.

6. The method according to claim 2 or 3, wherein the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

7. The method according to claim 3, wherein the configuration information comprises information indicative of the first information.

8. The method according to claim 3, wherein the sequence generation parameter of the SRS comprises one or more of a maximum number of cyclic shifts and a cyclic shift configuration.

9. The method according to claim 3, wherein the resource mapping mode information comprises one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

10. The method according to claim 3, wherein after the obtaining the first information, the method further comprises:
according to the first information, determining one or more of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

11. The method according to any one of claims 2 to 10, wherein the grouping information of the ${N}_{ap}^{SRS}$ antenna ports comprises the number of the groups, which comprises one or more of:
the number of the antenna port groups;
the number of the time domain resource groups to which the SRS sequences are mapped; or
the number of the frequency domain resource groups to which the SRS sequences are mapped.

12. The method according to claim 1, further comprising:
according to a corresponding relationship, determining one or more of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
wherein the corresponding relationship comprises one or more of:
a corresponding relationship between the number of the antenna ports and the antenna port groups;
a corresponding relationship between the sequence generation parameter and the antenna port groups; or
a corresponding relationship between the number of the groups and the antenna port groups.

13. The method according to claim 1, wherein before the transmitting an SRS corresponding to the SRS resource, the method further comprises:
in a case where a maximum number of cyclic shifts corresponding to the SRS resource is ${n}_{SRS}^{cs ,max} = 8$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 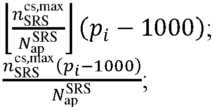 ${n}_{SRS}^{cs} + {p}_{i} - 1000 ;$ ${n}_{SRS}^{cs} + i ;$ 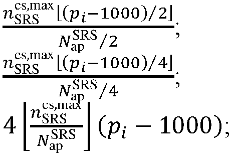 $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

14. The method according to claim 13, wherein in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 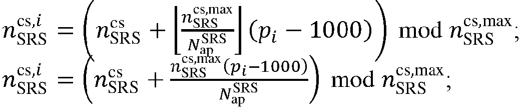 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 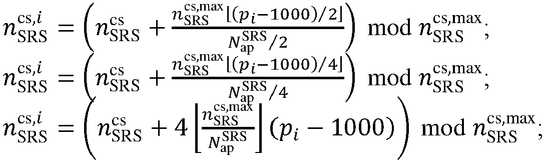 ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 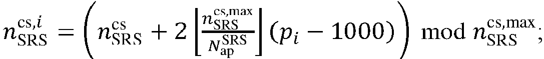 ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

15. The method according to claim 1, wherein before the transmitting an SRS corresponding to the SRS resource, the method further comprises:
in a case where a maximum number of cyclic shifts corresponding to the SRS resource is ${n}_{SRS}^{cs ,max} = 12$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 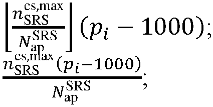 ${n}_{SRS}^{cs} + {p}_{i} - 1000 ;$ ${n}_{SRS}^{cs} + i ;$ 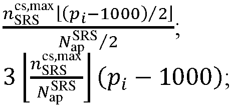 $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 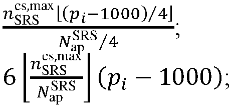 $6 \left({p}_{i}-1000\right) ;$ 6*i*;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

16. The method according to claim 15, wherein in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+\frac{{n}_{SRS}^{cs ,max} \left({p}_{i}-1000\right)}{{N}_{ap}^{SRS}}\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 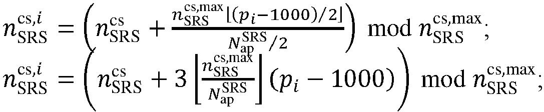 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 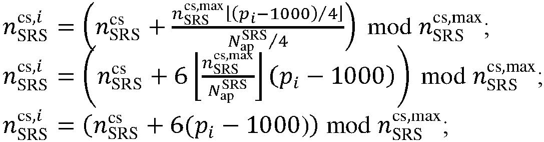 ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

17. The method according to claim 1, wherein before the transmitting an SRS corresponding to the SRS resource, the method further comprises:
in a case where a maximum number of cyclic shifts corresponding to the SRS resource is ${n}_{SRS}^{cs ,max} = 6$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 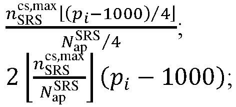 $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

18. The method according to claim 17, wherein in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 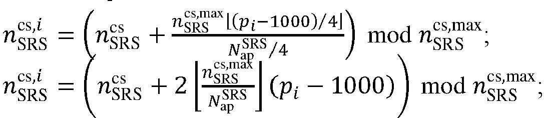 ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

19. The method according to claim 1, wherein before the transmitting an SRS corresponding to the SRS resource, the method further comprises:
in a case where a maximum number of cyclic shifts corresponding to the SRS resource is ${n}_{SRS}^{cs ,max} = 16$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; 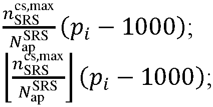 ${n}_{SRS}^{cs} + {p}_{i} - 1000 ;$ ${n}_{SRS}^{cs} + i ;$ 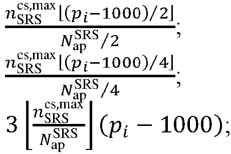 $3 \left({p}_{i}-1000\right) ;$ 3*i*; $4 \left⌊\frac{{n}_{SRS}^{cs ,max}}{{N}_{ap}^{SRS}}\right⌋ \left({p}_{i}-1000\right) ;$
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

20. The method according to claim 19, wherein in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 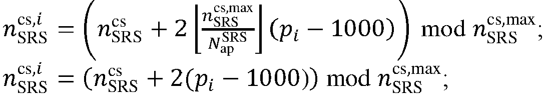 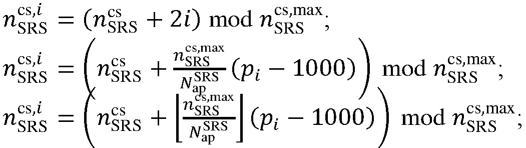 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 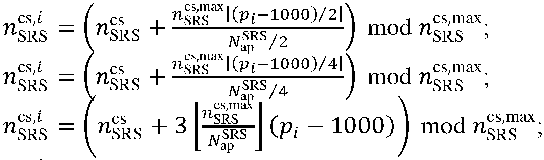 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

21. The method according to claim 1, wherein before the transmitting an SRS corresponding to the SRS resource, the method further comprises:
determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 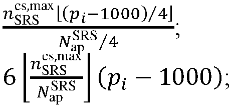 $6 \left({p}_{i}-1000\right) ;$ 6*i*;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

22. The method according to claim 21, wherein the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ 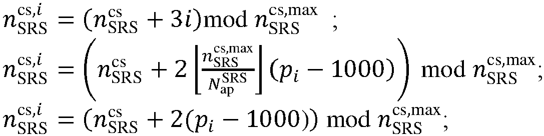 ${n}_{SRS}^{cs , i} = \left({n}_{SRS}^{cs}+2i\right) mod {n}_{SRS}^{cs ,max} ;$ 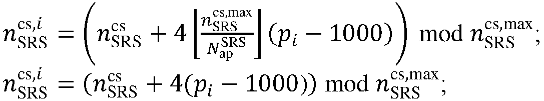 ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) mod {n}_{SRS}^{cs ,max} ;$ 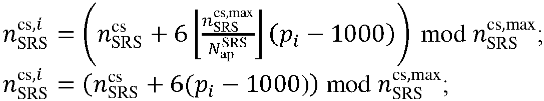 ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

23. The method according to any one of claims 13 to 22, wherein the antenna ports in different antenna port groups adopt different formulas to determine the cyclic shift offset value.

24. The method according to claim 1, wherein the transmitting an SRS corresponding to the SRS resource comprises:
in a case where ${n}_{SRS}^{cs ,max} = 8$ or 16, determining a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

25. The method according to claim 24, wherein in a case where ${n}_{SRS}^{cs ,max} = 8$ or 16, the position parameter ${k}_{TC}^{\left({p}_{i}\right)}$ of the frequency domain resource corresponding to an antenna port with an index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

26. The method according to claim 1, wherein the transmitting an SRS corresponding to the SRS resource comprises:
in a case where ${n}_{SRS}^{cs ,max} = 12$ or 6, determining a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

27. The method according to claim 26, wherein in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$

28. The method according to claim 1, wherein the transmitting an SRS corresponding to the SRS resource comprises:
determining a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource;
transmitting the SRS sequence corresponding to the antenna port with the index of i from the starting position of the frequency domain resource;
where *k̅*_{TC} is an offset of a comb in the frequency domain; and *K*_{TC} is a transmission comb number.

29. The method according to claim 28, wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} ;$

30. The method according to any one of claims 24 to 29, wherein the antenna ports in different antenna port groups adopt different formulas to determine the cyclic shift offset value.

31. The method according to any one of claims 1 to 30, wherein the ${N}_{ap}^{SRS}$ is valued as 8.

32. An information transmission method, comprising:
sending configuration information of a Sounding Reference Signal (SRS) resource; and
receiving an SRS corresponding to the configuration information and a transmission rule;
wherein the SRS resource comprises ${N}_{ap}^{SRS}$ antenna ports, and the transmission rule comprises one or more of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

33. The method according to claim 32, wherein the ${N}_{ap}^{SRS}$ antenna ports comprise a plurality of antenna port groups each corresponding to one group of time domain resources and/or frequency domain resources.

34. The method according to claim 33, wherein before the receiving an SRS corresponding to the configuration information and a transmission rule, the method further comprises:
determining first information;
wherein the first information comprises one or more of:
grouping information of the antenna ports;
a sequence generation parameter of the SRS; or
resource mapping mode information.

35. The method according to claim 33 or 34, wherein the grouping of the ${N}_{ap}^{SRS}$ antenna ports satisfies one or more of the following:
indexes of the antenna ports comprised in each of the antenna port groups are continuous; or
indexes of the antenna ports comprised in each of the antenna port groups are at an interval of a preset value.

36. The method according to claim 33 or 34, wherein the cyclic shift offset values corresponding to the SRS sequences which are corresponding to the antenna ports comprised in different antenna port groups among the plurality of antenna port groups are the same.

37. The method according to claim 33 or 34, wherein the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

38. The method according to claim 34, wherein the configuration information comprises information indicative of and determined based on the first information.

39. The method according to claim 34, wherein the sequence generation parameter of the SRS comprises one or more of a maximum number of cyclic shifts and a cyclic shift configuration.

40. The method according to claim 34, wherein the resource mapping mode information comprises one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

41. The method according to any one of claims 33 to 40, wherein the grouping information of the ${N}_{ap}^{SRS}$ antenna ports comprises the number of the groups, which comprises one or more of:
the number of the antenna port groups;
the number of the time domain resource groups to which the SRS sequences are mapped; or
the number of the frequency domain resource groups to which the SRS sequences are mapped.

42. The method according to claim 32, further comprising one or more of the following:
determining that there is a corresponding relationship between the number of the antenna ports and the antenna port groups;
determining that there is a corresponding relationship between the sequence generation parameter and the antenna port groups; or
determining that there is a corresponding relationship between the number of the groups and the antenna port groups.

43. The method according to claim 32, wherein before the receiving an SRS corresponding to the configuration information and a transmission rule, the method further comprises:
determining the SRS sequence which is corresponding to an antenna port with an index of i;
wherein in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 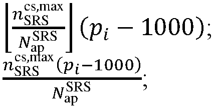 ${n}_{SRS}^{cs} + {p}_{i} - 1000 ;$ ${n}_{SRS}^{cs} + i ;$ 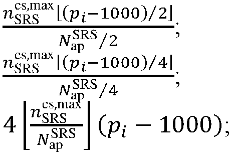 $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*;
where *pᵢ* is a port index of the antenna port with the index of i, and i is an integer less than or equal to ${N}_{ap}^{SRS} - 1$.

44. The method according to claim 43, wherein in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 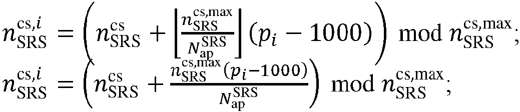 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 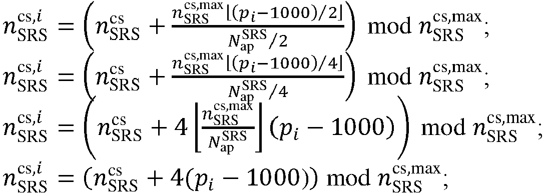 ${n}_{SRS}^{cs , i} = \left({n}_{SRS}^{cs}+4i\right) mod {n}_{SRS}^{cs ,max} ;$ 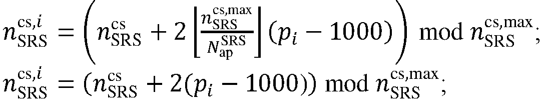 ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

45. The method according to claim 32, wherein before the receiving an SRS corresponding to the configuration information and a transmission rule, the method further comprises:
determining the SRS sequence which is corresponding to an antenna port with an index of i;
wherein in a case where a maximum number of cyclic shifts corresponding to the SRS resource is ${n}_{SRS}^{cs ,max} = 12$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $\left⌊\frac{{n}_{SRS}^{cs ,max}}{{N}_{ap}^{SRS}}\right⌋ \left({p}_{i}-1000\right) ;$ $\frac{{n}_{SRS}^{cs ,max} \left({p}_{i}-1000\right)}{{N}_{ap}^{SRS}} ;$ ${n}_{SRS}^{cs} + {p}_{i} - 1000 ;$ ${n}_{SRS}^{cs} + i ;$ 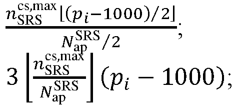 $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 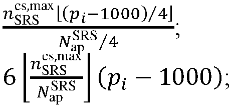 $6 \left({p}_{i}-1000\right) ;$ 6*i*;
where *pᵢ* is a port index of the antenna port with the index of i, and i is an integer less than or equal to ${N}_{ap}^{SRS} - 1$.

46. The method according to claim 45, wherein in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 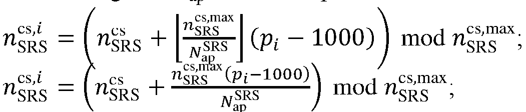 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 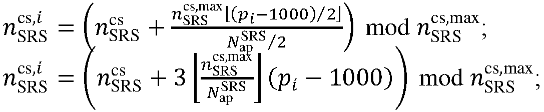 ${n}_{SRS}^{cs , i} = \left({n}_{SRS}^{cs}+3\left({p}_{i}-1000\right)\right) mod {n}_{SRS}^{cs ,max} ;$ 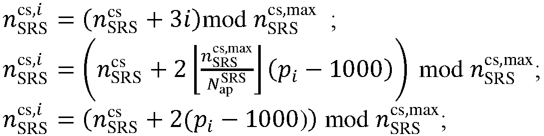 ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 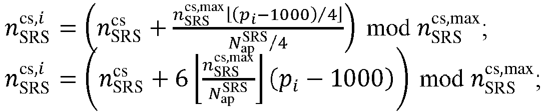 ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

47. The method according to claim 32, wherein before the receiving an SRS corresponding to the configuration information and a transmission rule, the method further comprises:
determining the SRS sequence which is corresponding to an antenna port with an index of i;
wherein in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 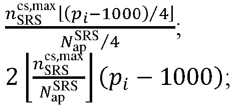 $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*;
where *pᵢ* is a port index of the antenna port with the index of i, and i is an integer less than or equal to ${N}_{ap}^{SRS} - 1$.

48. The method according to claim 47, wherein in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 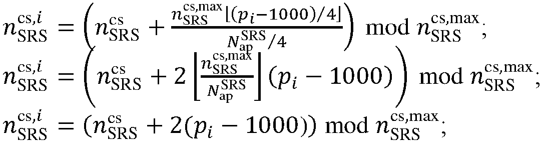 ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

49. The method according to claim 32, wherein before the receiving an SRS corresponding to the configuration information and a transmission rule, the method further comprises:
determining the SRS sequence which is corresponding to an antenna port with an index of i;
wherein in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; 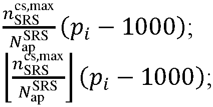 ${n}_{SRS}^{cs} + {p}_{i} - 1000 ;$ ${n}_{SRS}^{cs} + i ;$ 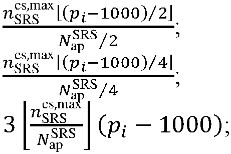 $3 \left({p}_{i}-1000\right) ;$ 3*i*; $4 \left⌊\frac{{n}_{SRS}^{cs ,max}}{{N}_{ap}^{SRS}}\right⌋ \left({p}_{i}-1000\right) ;$
where *pᵢ* is a port index of the antenna port with the index of i, and i is an integer less than or equal to ${N}_{ap}^{SRS} - 1$.

50. The method according to claim 49, wherein in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+4\left({p}_{i}-1000\right)\right) mod {n}_{SRS}^{cs ,max} ;$ 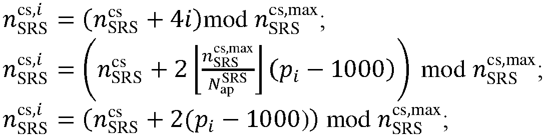 ${n}_{SRS}^{cs , i} = \left({n}_{SRS}^{cs}+2i\right) mod {n}_{SRS}^{cs ,max} ;$ 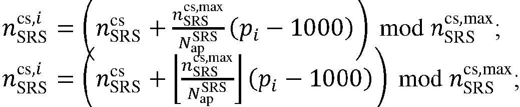 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 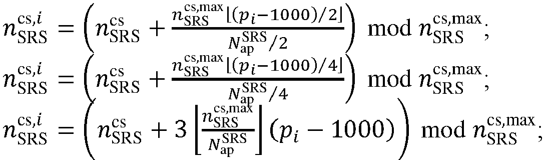 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

51. The method according to claim 32, wherein before the receiving an SRS corresponding to the configuration information and a transmission rule, the method further comprises:
determining the SRS sequence which is corresponding to an antenna port with an index of i;
wherein a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 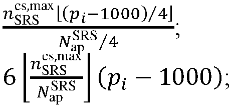 $6 \left({p}_{i}-1000\right) ;$ 6*i*;
where *pᵢ* is a port index of the antenna port with the index of i, and i is an integer less than or equal to ${N}_{ap}^{SRS} - 1$.

52. The method according to claim 51, wherein the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 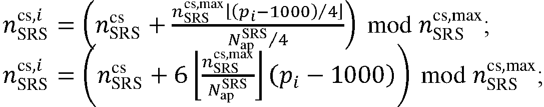 ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

53. The method according to any one of claims 43 to 52, wherein the antenna ports in different antenna port groups adopt different formulas to determine the cyclic shift offset value.

54. The method according to claim 32, wherein the receiving an SRS corresponding to the configuration information and a transmission rule comprises:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

55. The method according to claim 54, wherein in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

56. The method according to claim 32, wherein the receiving an SRS corresponding to the configuration information and a transmission rule comprises:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
where *k̅*_{TC} is an offset of a comb in the frequency domain; and *K*_{TC} is a transmission comb number.

57. The method according to claim 56, wherein in a case where ${n}_{SRS}^{cs ,max} = 12$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

58. The method according to claim 32, wherein the receiving an SRS corresponding to the configuration information and a transmission rule comprises:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

59. The method according to claim 58, wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

60. The method according to any one of claims 54 to 59, wherein the antenna ports in different antenna port groups adopt different formulas to determine the cyclic shift offset value.

61. The method according to any one of claims 32 to 60, wherein the ${N}_{ap}^{SRS}$ is valued as 8.

62. A terminal device, comprising a memory, a transceiver and a processor:
the memory is configured to store a computer program; the transceiver is configured to transceive data under the control of the processor; and the processor is configured to read the computer program in the memory and perform processes of:
receiving configuration information of a Sounding Reference Signal (SRS) resource by the transceiver;
transmitting an SRS corresponding to the SRS resource by the transceiver according to the configuration information and a transmission rule;
wherein the SRS resource comprises ${N}_{ap}^{SRS}$ antenna ports, and the transmission rule comprises one or more of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

63. The terminal device according to claim 62, wherein the ${N}_{ap}^{SRS}$ antenna ports comprise a plurality of antenna port groups each corresponding to one group of time domain resources and/or frequency domain resources.

64. The terminal device according to claim 63, wherein the processor reads the computer program in the memory and performs one of operations of:
obtaining first information;
wherein the first information comprises one or more of:
grouping information of the antenna ports;
a sequence generation parameter of the SRS; or
resource mapping mode information.

65. The terminal device according to claim 63 or 64, wherein the grouping of the ${N}_{ap}^{SRS}$ antenna ports satisfies one or more of the following:
indexes of the antenna ports comprised in each of the antenna port groups are continuous; or
indexes of the antenna ports comprised in each of the antenna port groups are at an interval of a preset value.

66. The terminal device according to 63 or 64, wherein the cyclic shift offset values corresponding to the SRS sequences which are corresponding to the antenna ports comprised in different antenna port groups among the plurality of antenna port groups are the same.

67. The terminal device according to 63 or 64, wherein the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

68. The terminal device according to claim 64, wherein the configuration information comprises information indicative of the first information.

69. The terminal device according to claim 64, wherein the sequence generation parameter of the SRS comprises one or more of a maximum number of cyclic shifts and a cyclic shift configuration.

70. The terminal device according to claim 64, wherein the resource mapping mode information comprises one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

71. The terminal device according to claim 64, wherein the processor reads the computer program in the memory and performs an operation of:
according to the first information, determining one or more of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

72. The terminal device according to any one of claims 63 to 71, wherein the grouping information of the ${N}_{ap}^{SRS}$ antenna ports comprises the number of the groups, which comprises one or more of:
the number of the antenna port groups;
the number of the time domain resource groups to which the SRS sequences are mapped; or
the number of the frequency domain resource groups to which the SRS sequences are mapped.

73. The terminal device according to claim 62, wherein the processor reads the computer program in the memory and performs an operation of:
according to a corresponding relationship, determining one or more of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
wherein the corresponding relationship comprises one or more of:
a corresponding relationship between the number of the antenna ports and the antenna port groups;
a corresponding relationship between the sequence generation parameter and the antenna port groups; or
a corresponding relationship between the number of the groups and the antenna port groups.

74. The terminal device according to claim 62, wherein the processor reads the computer program in the memory and performs operations of:
in a case where a maximum number of cyclic shifts corresponding to the SRS resource is ${n}_{SRS}^{cs ,max} = 8$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 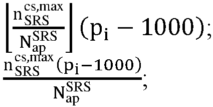 ${n}_{SRS}^{cs} + {p}_{i} - 1000 ;$ ${n}_{SRS}^{cs} + i ;$ 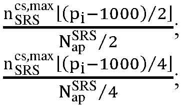 $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

75. The terminal device according to claim 74, wherein in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 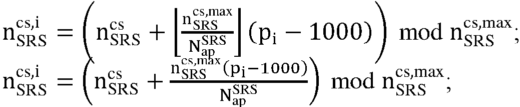 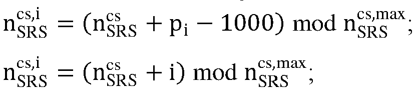 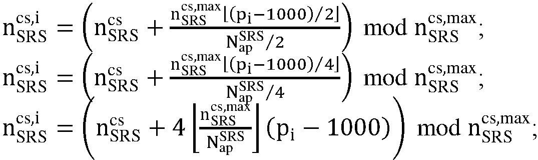 ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) { mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ where ${n}_{SRS}^{cs}$ is a cyclic shift configuration value.

76. The terminal device according to claim 62, wherein the processor reads the computer program in the memory and performs operations of:
in a case where a maximum number of cyclic shifts corresponding to the SRS resource is ${n}_{SRS}^{cs ,max} = 12$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 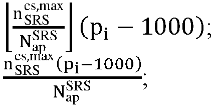 ${n}_{SRS}^{cs} + {p}_{i} - 1000;$ ${n}_{SRS}^{cs} + i;$ 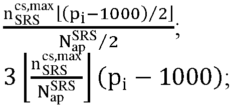 $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; 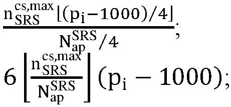 $6 \left({p}_{i}-1000\right) ;$ 6i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

77. The terminal device according to claim 76, wherein in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 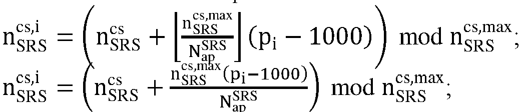 ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ 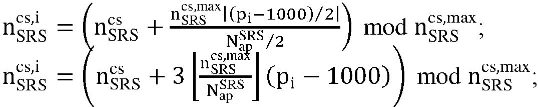 ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+2 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ 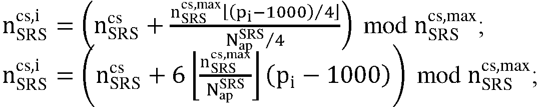 ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

78. The terminal device according to claim 62, wherein the processor reads the computer program in the memory and performs operations of:
in a case where a maximum number of cyclic shifts corresponding to the SRS resource is ${n}_{SRS}^{cs ,max} = 6$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 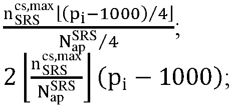 $2 \left({p}_{i}-1000\right) ;$ 2i; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

79. The terminal device according to claim 78, wherein in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 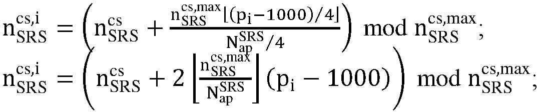 ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+1\right) { mod n}_{SRS}^{cs ,max} ;$ ${n}_{SRS}^{cs ,i} = \left({n}_{SRS}^{cs}+4 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ where ${n}_{SRS}^{cs}$ is a cyclic shift configuration value.

80. The terminal device according to claim 62, wherein the processor reads the computer program in the memory and performs operations of:
in a case where a maximum number of cyclic shifts corresponding to the SRS resource is ${n}_{SRS}^{cs ,max} = 16$, determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; 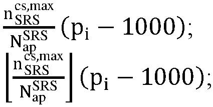 ${n}_{SRS}^{cs} + {p}_{i} - 1000 ;$ ${n}_{SRS}^{cs} + i ;$ 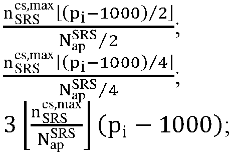 $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

81. The terminal device according to claim 80, wherein in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ 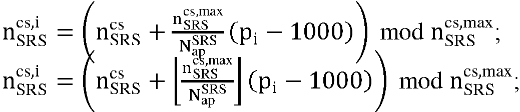 ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ 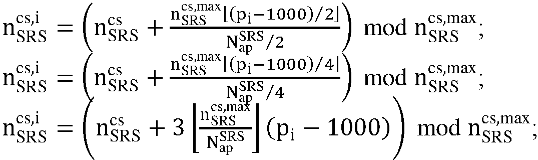 ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ where ${n}_{SRS}^{cs}$ is a cyclic shift configuration value.

82. The terminal device according to claim 62, wherein the processor reads the computer program in the memory and performs operations of:
determining a cyclic shift offset value ${n}_{SRS}^{cs , i}$ corresponding to the SRS sequence which is corresponding to an antenna port with an index of i among the ${N}_{ap}^{SRS}$ antenna ports based on one or more of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\begin{matrix}\frac{{n}_{SRS}^{cs ,max} \left⌊\left({p}_{i}-1000\right)/4\right⌋}{{N}_{ap}^{SRS} / 4} ; \\ 6 \left⌊\frac{{n}_{SRS}^{cs ,max}}{{N}_{ap}^{SRS}}\right⌋ \left({p}_{i}-1000\right) ;\end{matrix}$ $6 \left({p}_{i}-1000\right) ;$ 6i;
determining the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

83. The terminal device according to claim 82, wherein the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+3\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) { mod n}_{SRS}^{cs ,max} ;$ 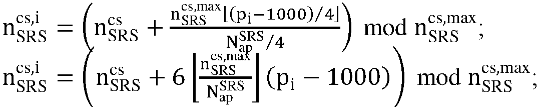 ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

84. The terminal device according to any one of claims 74 to 83, wherein the antenna ports in different antenna port groups adopt different formulas to determine the cyclic shift offset value.

85. The terminal device according to claim 62, wherein the processor reads the computer program in the memory and performs operations of:
in a case where ${n}_{SRS}^{cs ,max} = 8$ or 16, determining a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

86. The terminal device according to claim 85, wherein in a case where ${n}_{SRS}^{cs ,max} = 8 or 16$, the position parameter ${k}_{TC}^{\left({p}_{i}\right)}$ of the frequency domain resource corresponding to an antenna port with an index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

87. The terminal device according to claim 62, wherein the processor reads the computer program in the memory and performs operations of:
in a case where ${n}_{SRS}^{cs ,max} = 12 or 6$, determining a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

88. The terminal device according to claim 87, wherein in a case where ${n}_{SRS}^{cs ,max} = 12 or 6$, the position parameter ${k}_{TC}^{\left({p}_{i}\right)}$ of the frequency domain resource corresponding to an antenna port with an index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

89. The terminal device according to claim 62, wherein the processor reads the computer program in the memory and performs operations of:
determining a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
determining a starting position of a frequency domain resource to which the SRS sequence corresponding to the antenna port with the index of i is mapped, according to the position parameter ${k}_{TC}^{\left({p}_{i}\right)}$ of the frequency domain resource; and
transmitting the SRS sequence corresponding to the antenna port with the index of i from the starting position of the frequency domain resource;
where *k̅*_{TC} is an offset of a comb in the frequency domain; and *K*_{TC} is a transmission comb number.

90. The terminal device according to claim 89, wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

91. The terminal device according to any one of claims 85 to 90, wherein the antenna ports in different antenna port groups adopt different formulas to determine the cyclic shift offset value.

92. The terminal device according to any one of claims 62 to 91, wherein the ${N}_{ap}^{SRS}$ is valued as 8.

93. A network device, comprising a memory, a transceiver and a processor:
the memory is configured to store a computer program; the transceiver is configured to transceive data under the control of the processor; and the processor is configured to read the computer program in the memory and perform processes of:
transmitting configuration information of a Sounding Reference Signal (SRS) resource by the transceiver;
receiving an SRS corresponding to the configuration information and a transmission rule by the transceiver;
wherein the SRS resource comprises ${N}_{ap}^{SRS}$ antenna ports, and the transmission rule comprises one or more of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

94. The network device according to claim 93, wherein the ${N}_{ap}^{SRS}$ antenna ports comprise a plurality of antenna port groups each corresponding to one group of time domain resources and/or frequency domain resources.

95. The network device according to claim 94, wherein the processor reads the computer program in the memory and performs processes of:
determining first information;
wherein the first information comprises one or more of:
grouping information of the antenna ports;
a sequence generation parameter of the SRS; or
resource mapping mode information.

96. The network device according to claim 94 or 95, wherein the grouping of the ${N}_{ap}^{SRS}$ antenna ports satisfies one or more of the following:
indexes of the antenna ports comprised in each of the antenna port groups are continuous; or
indexes of the antenna ports comprised in each of the antenna port groups are at an interval of a preset value.

97. The network device according to claim 94 or 95, wherein the cyclic shift offset values corresponding to the SRS sequences which are corresponding to the antenna ports comprised in different antenna port groups among the plurality of antenna port groups are the same.

98. The network device according to claim 94 or 95, wherein the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

99. The network device according to claim 95, wherein the configuration information comprises information indicative of and determined based on the first information.

100. The network device according to claim 95, wherein the sequence generation parameter of the SRS comprises one or more of a maximum number of cyclic shifts and a cyclic shift configuration.

101. The network device according to claim 95, wherein the resource mapping mode information comprises one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

102. The network device according to any one of claims 94 to 101, wherein the grouping information of the ${N}_{ap}^{SRS}$ antenna ports comprises the number of the groups, which comprises one or more of:
the number of the antenna port groups;
the number of the time domain resource groups to which the SRS sequences are mapped; or
the number of the frequency domain resource groups to which the SRS sequences are mapped.

103. The network device according to claim 93, wherein the processor reads the computer program in the memory and performs one of processes of:
determining that there is a corresponding relationship between the number of the antenna ports and the antenna port groups;
determining that there is a corresponding relationship between the sequence generation parameter and the antenna port groups; or
determining that there is a corresponding relationship between the number of the groups and the antenna port groups.

104. The network device according to claim 93, wherein the processor reads the computer program in the memory and performs one of processes of:
determining the SRS sequence which is corresponding to an antenna port with an index of i;
wherein in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 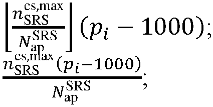 ${n}_{SRS}^{cs} + {p}_{i} - 1000 ;$ ${n}_{SRS}^{cs} + i ;$ 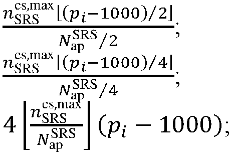 $4 \left({p}_{i}-1000\right) ;$ 4*i*; 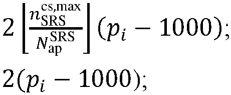 2*i*;
where *pᵢ* is a port index of the antenna port with the index of i, and i is an integer less than or equal to ${N}_{ap}^{SRS} - 1$.

105. The network device according to claim 104, wherein in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 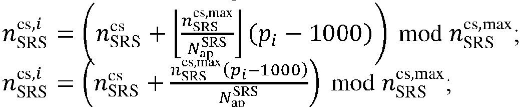 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 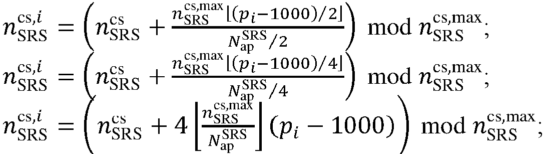 ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

106. The network device according to claim 93, wherein the processor reads the computer program in the memory and performs one of processes of:
determining the SRS sequence which is corresponding to an antenna port with an index of i;
wherein in a case where a maximum number of cyclic shifts corresponding to the SRS resource is ${n}_{SRS}^{cs ,max} = 12$, a cyclic shift offset value nSRS corresponding to the SRS sequence which is corresponding to the antenna port with the index of i among the ${N}_{ap}^{SRS}$ antenna ports is determined based on one or more of: 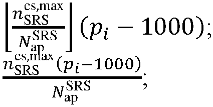 ${n}_{SRS}^{cs} + {p}_{i} - 1000 ;$ ${n}_{SRS}^{cs} + i ;$ 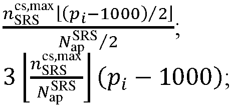 $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 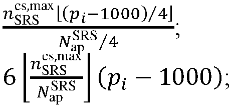 $6 \left({p}_{i}-1000\right) ;$ 6*i*;
where *pᵢ* is a port index of the antenna port with the index of i, and i is an integer less than or equal to ${N}_{ap}^{SRS} - 1$.

107. The network device according to claim 106, wherein in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 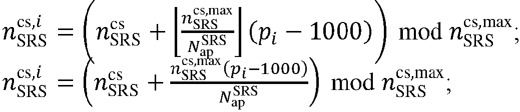 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 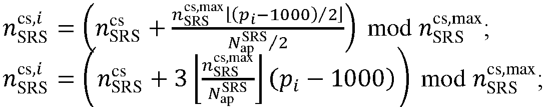 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 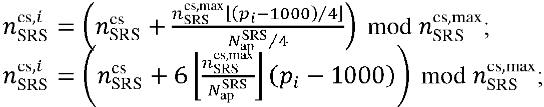 ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

108. The network device according to claim 93, wherein the processor reads the computer program in the memory and performs one of processes of:
determining the SRS sequence which is corresponding to an antenna port with an index of i;
wherein in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 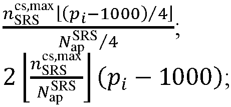 $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*;
where *pᵢ* is a port index of the antenna port with the index of i, and i is an integer less than or equal to ${N}_{ap}^{SRS} - 1$.

109. The network device according to claim 108, wherein in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 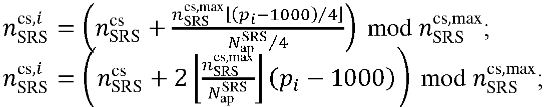 ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

110. The network device according to claim 93, wherein the processor reads the computer program in the memory and performs one of processes of:
determining the SRS sequence which is corresponding to an antenna port with an index of i;
wherein in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; 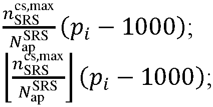 ${n}_{SRS}^{cs} + {p}_{i} - 1000 ;$ ${n}_{SRS}^{cs} + i ;$ 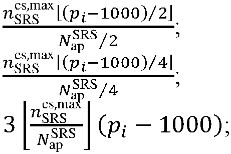 $3 \left({p}_{i}-1000\right) ;$ 3*i*; $4 \left⌊\frac{{n}_{SRS}^{cs ,max}}{{N}_{ap}^{SRS}}\right⌋ \left({p}_{i}-1000\right) ;$
where *pᵢ* is a port index of the antenna port with the index of i, and i is an integer less than or equal to ${N}_{ap}^{SRS} - 1$.

111. The network device according to claim 110, wherein in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ 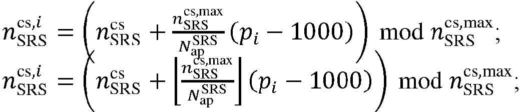 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 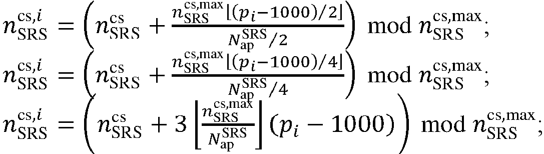 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

112. The network device according to claim 93, wherein the processor reads the computer program in the memory and performs one of processes of:
determining the SRS sequence which is corresponding to an antenna port with an index of i;
wherein a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ *3i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 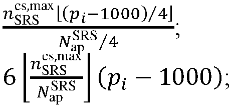 $6 \left({p}_{i}-1000\right) ;$ 6*i*;
where *pᵢ* is a port index of the antenna port with the index of i, and i is an integer less than or equal to ${N}_{ap}^{SRS} - 1$.

113. The network device according to claim 112, wherein the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 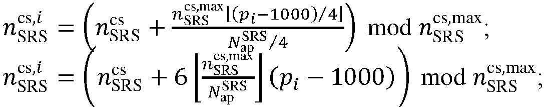 ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

114. The network device according to any one of claims 104 to 113, wherein the antenna ports in different antenna port groups adopt different formulas to determine the cyclic shift offset value.

115. The network device according to claim 93, wherein the processor reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein in a case where ${n}_{SRS}^{cs ,max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

116. The network device according to claim 115, wherein in a case where ${n}_{SRS}^{cs ,max} = 8$ or 16, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

117. The network device according to claim 93, wherein the processor reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
where *k̅*_{TC} is an offset of a comb in the frequency domain; and *K*_{TC} is a transmission comb number.

118. The network device according to claim 117, wherein in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

119. The network device according to claim 93, wherein the processor reads the computer program in the memory and performs a process of:
receiving the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

120. The network device according to claim 119, wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

121. The network device according to any one of claims 115 to 120, wherein the antenna ports in different antenna port groups adopt different formulas to determine the cyclic shift offset value.

122. The network device according to any one of claims 32 to 60, wherein the ${N}_{ap}^{SRS}$ is valued as 8.

123. An information transmission apparatus, comprising:
a first reception unit configured to receive configuration information of a Sounding Reference Signal (SRS) resource;
a transmission unit configured to transmit an SRS corresponding to the SRS resource according to the configuration information and a transmission rule;
wherein the SRS resource comprises ${N}_{ap}^{SRS}$ antenna ports, and the transmission rule comprises one or more of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

124. The apparatus according to claim 123, wherein the ${N}_{ap}^{SRS}$ antenna ports comprise a plurality of antenna port groups each corresponding to one group of time domain resources and/or frequency domain resources.

125. The apparatus according to claim 124, wherein before the transmission unit transmits the SRS corresponding to the SRS resource, the apparatus further comprises:
a first obtaining unit configured to obtain first information;
wherein the first information comprises one or more of:
grouping information of the antenna ports;
a sequence generation parameter of the SRS; or
resource mapping mode information.

126. The apparatus according to claim 124 or 125, wherein the grouping of the ${N}_{ap}^{SRS}$ antenna ports satisfies one or more of the following:
indexes of the antenna ports comprised in each of the antenna port groups are continuous; or
indexes of the antenna ports comprised in each of the antenna port groups are at an interval of a preset value.

127. The apparatus according to claim 124 or 125, wherein the cyclic shift offset values corresponding to the SRS sequences which are corresponding to the antenna ports comprised in different antenna port groups among the plurality of antenna port groups are the same.

128. The apparatus according to claim 124 or 125, wherein the grouping of the ${N}_{ap}^{SRS}$ antenna ports satisfies one or more of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

129. The apparatus according to claim 125, wherein the configuration information comprises information indicative of the first information.

130. The apparatus according to claim 125, wherein the sequence generation parameter of the SRS comprises one or more of a maximum number of cyclic shifts and a cyclic shift configuration.

131. The apparatus according to claim 125, wherein the resource mapping mode information comprises one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

132. The apparatus according to claim 125, wherein after the first obtaining unit obtains the first information, the apparatus further comprises:
a first determination unit configured to, according to the first information, determine one or more of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped.

133. The apparatus according to any one of claims 124 to 132, wherein the grouping information of the ${N}_{ap}^{SRS}$ antenna ports comprises the number of the groups, which comprises one or more of:
the number of the antenna port groups;
the number of the time domain resource groups to which the SRS sequences are mapped; or
the number of the frequency domain resource groups to which the SRS sequences are mapped.

134. The apparatus according to claim 123, further comprising:
a second determination unit configured to, according to a corresponding relationship, determine one or more of a grouping of the ${N}_{ap}^{SRS}$ antenna ports, the SRS sequence corresponding to each of the ${N}_{ap}^{SRS}$ antenna ports, and the time domain resource and/or the frequency domain resource to which each of the ${N}_{ap}^{SRS}$ antenna ports is mapped;
wherein the corresponding relationship comprises one or more of:
a corresponding relationship between the number of the antenna ports and the antenna port groups;
a corresponding relationship between the sequence generation parameter and the antenna port groups; or
a corresponding relationship between the number of the groups and the antenna port groups.

135. The apparatus according to claim 123, wherein before the transmission unit transmits the SRS corresponding to the SRS resource, the apparatus further comprises:
a third determination unit configured to, in a case where a maximum number of cyclic shifts corresponding to the SRS resource is ${n}_{SRS}^{cs , max} = 8$, determine a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 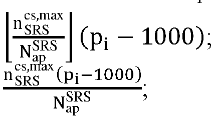 ${n}_{SRS}^{cs} + {p}_{i} - 1000 ;$ ${n}_{SRS}^{cs} + i;$ 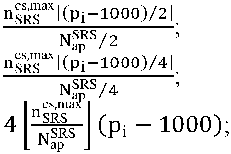 4(pᵢ - 1000);
4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i;
a fourth determination unit configured to determine the SRS sequence which is corresponding to the antenna port with the index of i according to the cyclic shift offset value;
where pᵢ is a port index of the antenna port with the index of i, and i is an integer less than or equal to ${N}_{ap}^{SRS} - 1$.

136. The apparatus according to claim 135, wherein in a case where the maximum number of cyclic shifts corresponding to the SRS resource is ${n}_{SRS}^{cs ,max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 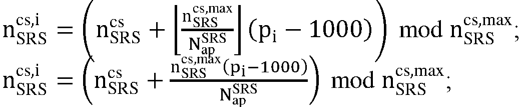 ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+\frac{{n}_{SRS}^{cs ,max} \left⌊\left({p}_{i}-1000\right)/2\right⌋}{{N}_{ap}^{SRS} / 2}\right) { mod n}_{SRS}^{cs ,max} ;$ 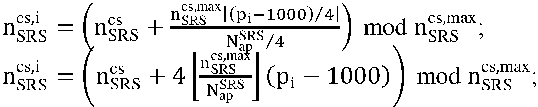 ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ where ${n}_{SRS}^{cs}$ is a cyclic shift configuration value.

137. The apparatus according to claim 123, wherein before the transmission unit transmits the SRS corresponding to the SRS resource, the apparatus further comprises:
a fifth determination unit configured to, in a case where a maximum number of cyclic shifts corresponding to the SRS resource is ${n}_{SRS}^{cs ,max} = 12$, determine a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 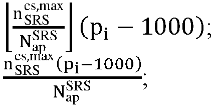 ${n}_{SRS}^{cs} + {p}_{i} - 1000 ;$ 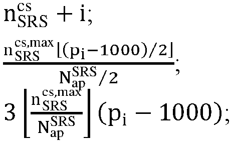 $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\frac{{n}_{SRS}^{cs ,max} \left⌊\left({p}_{i}-1000\right)/4\right⌋}{{N}_{ap}^{SRS} / 4} ;$ $6 \left⌊\frac{{n}_{SRS}^{cs ,max}}{{N}_{ap}^{SRS}}\right⌋ \left({p}_{i}-1000\right) ;$ $6 \left({p}_{i}-1000\right) ;$ 6i;
a sixth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

138. The apparatus according to claim 137, wherein in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 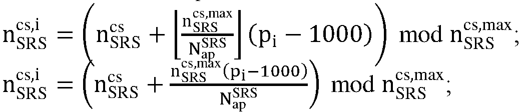 ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ 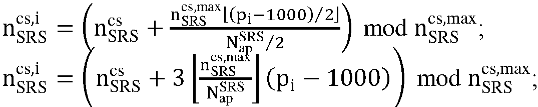 ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) { mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs ,i}+4\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ 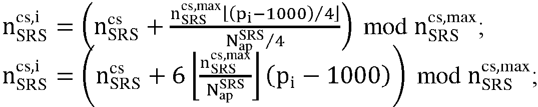 ${n}_{SRS}^{cs ,i} = \left({n}_{SRS}^{cs}+6\left({p}_{i}-1000\right)\right) { mod n}_{SRS}^{cs ,max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

139. The apparatus according to claim 123, wherein before the transmission unit transmits the SRS corresponding to the SRS resource, the apparatus further comprises:
a seventh determination unit configured to in a case where a maximum number of cyclic shifts corresponding to the SRS resource is ${n}_{SRS}^{cs ,max} = 6$, determine a cyclic shift offset value ${n}_{SRS}^{cs , i}$ corresponding to the SRS sequence which is corresponding to an antenna port with an index of i among the ${N}_{ap}^{SRS}$ antenna ports based on one or more of: 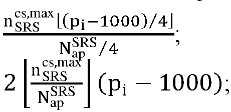 $2 \left({p}_{i}-1000\right) ;$ 2i; $\left⌊\frac{{n}_{SRS}^{cs , max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $4 \left⌊\frac{{n}_{SRS}^{cs , max}}{{N}_{ap}^{SRS}}\right⌋ \left({p}_{i}-1000\right) ;$ $4 \left({p}_{i}-1000\right) ;$ 4i; $3 \left⌊\frac{{n}_{SRS}^{cs , max}}{{N}_{ap}^{SRS}}\right⌋ \left({p}_{i}-1000\right) ;$ $3 \left({p}_{i}-1000\right) ;$ 3i;
an eighth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

140. The apparatus according to claim 139, wherein in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs ,i} = \left({n}_{SRS}^{cs}+\frac{{n}_{SRS}^{cs ,max} \left⌊\left({p}_{i}-1000\right)/4\right⌋}{{N}_{ap}^{SRS} / 4}\right) { mod n}_{SRS}^{cs ,max} ;$ ${n}_{SRS}^{cs ,i} = \left({n}_{SRS}^{cs}+2 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ ${n}_{SRS}^{cs ,i} = \left({n}_{SRS}^{cs}+4 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+3 \left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs ,i} = \left({n}_{SRS}^{cs}+3i\right) {mod n}_{SRS}^{cs ,max} ;$ where ${n}_{SRS}^{cs}$ is a cyclic shift configuration value.

141. The apparatus according to claim 123, wherein before the transmission unit transmits the SRS corresponding to the SRS resource, the apparatus further comprises:
a ninth determination unit configured to, in a case where a maximum number of cyclic shifts corresponding to the SRS resource is ${n}_{SRS}^{cs ,max} = 16$, determine a cyclic shift offset value ${n}_{SRS}^{cs , i}$ corresponding to the SRS sequence which is corresponding to an antenna port with an index of i among the ${N}_{ap}^{SRS}$ antenna ports based on one or more of: $4 \left({p}_{i}-1000\right) ;$ 4i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; 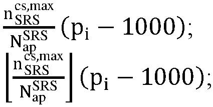 ${n}_{SRS}^{cs} + {p}_{i} - 1000 ;$ ${n}_{SRS}^{cs} + i ;$ $\frac{{n}_{SRS}^{cs ,max} \left⌊\left({p}_{i}-1000\right)/2\right⌋}{{N}_{ap}^{SRS} / 2} ;$ 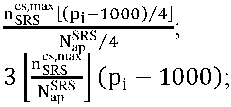 $3 \left({p}_{i}-1000\right) ;$ 3i; $4 \left⌊\frac{{n}_{SRS}^{cs ,max}}{{N}_{ap}^{SRS}}\right⌋ \left({p}_{i}-1000\right) ;$
a tenth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

142. The apparatus according to claim 141, wherein in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs ,i} = \left({n}_{SRS}^{cs}+4\left({p}_{i}-1000\right)\right) { mod n}_{SRS}^{cs ,max} ;$ ${n}_{SRS}^{cs ,i} = \left({n}_{SRS}^{cs}+4i\right) {mod n}_{SRS}^{cs ,max} ;$ ${n}_{SRS}^{cs ,i} = \left({n}_{SRS}^{cs}+2\left⌊\frac{{n}_{SRS}^{cs ,max}}{{N}_{ap}^{SRS}}\right⌋\left({p}_{i}-1000\right)\right) { mod n}_{SRS}^{cs ,max} ;$ ${n}_{SRS}^{cs ,i} = \left({n}_{SRS}^{cs}+2\left({p}_{i}-1000\right)\right) { mod n}_{SRS}^{cs ,max} ;$ ${n}_{SRS}^{cs ,i} = \left({n}_{SRS}^{cs}+2i\right) { mod n}_{SRS}^{cs ,max} ;$ 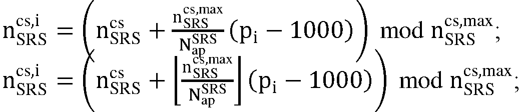 ${n}_{SRS}^{cs ,i} = \left({n}_{SRS}^{cs}+{p}_{i}-1000\right) { mod n}_{SRS}^{cs ,max} ;$ ${n}_{SRS}^{cs ,i} = \left({n}_{SRS}^{cs}+i\right) { mod n}_{SRS}^{cs ,max} ;$ 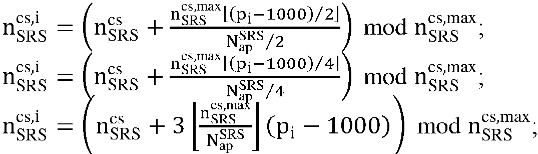 ${n}_{SRS}^{cs ,i} = \left({n}_{SRS}^{cs}+3\left({p}_{i}-1000\right)\right) { mod n}_{SRS}^{cs ,max} ;$ ${n}_{SRS}^{cs , i} = \left({n}_{SRS}^{cs}+3i\right) {mod n}_{SRS}^{cs , max} ;$ ${n}_{SRS}^{cs , i} = \left({n}_{SRS}^{cs}+4\left⌊\frac{{n}_{SRS}^{cs , max}}{{N}_{ap}^{SRS}}\right⌋\left({p}_{i}-1000\right)\right) { mod n}_{SRS}^{cs , max} ;$ where ${n}_{SRS}^{cs}$ is a cyclic shift configuration value.

143. The apparatus according to claim 123, wherein before the transmission unit transmits the SRS corresponding to the SRS resource, the apparatus further comprises:
an eleventh determination unit configured to determine a cyclic shift offset value ${n}_{SRS}^{cs , i}$ corresponding to the SRS sequence which is corresponding to an antenna port with an index of i among the ${N}_{ap}^{SRS}$ antenna ports based on one or more of: $\left⌊\frac{{n}_{SRS}^{cs , max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs , max}}{{N}_{ap}^{SRS}}\right⌋ \left({p}_{i}-1000\right) ;$ $3 \left({p}_{i}-1000\right) ;$ 3i; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2i; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4i; $\begin{matrix}\frac{{n}_{SRS}^{cs ,max} \left⌊\left({p}_{i}-1000\right)/4\right⌋}{{N}_{ap}^{SRS} / 4} ; \\ 6 \left⌊\frac{{n}_{SRS}^{cs ,max}}{{N}_{ap}^{SRS}}\right⌋ \left({p}_{i}-1000\right) ;\end{matrix}$ $6 \left({p}_{i}-1000\right) ;$ 6i;
a twelfth determination unit configured to determine the SRS sequence which is corresponding to the antenna port with the index of i according to the cyclic shift offset value;
where *pᵢ* is a port index of the antenna port with the index of i, and i is an integer less than or equal to ${N}_{ap}^{SRS} - 1$.

144. The apparatus according to claim 143, wherein the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs ,i} = \left({n}_{SRS}^{cs}+\left⌊\frac{{n}_{SRS}^{cs ,max}}{{N}_{ap}^{SRS}}\right⌋\left({p}_{i}-1000\right)\right) { mod n}_{SRS}^{cs ,max} ;$ 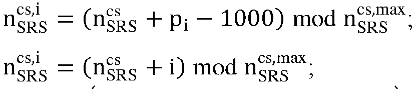 ${n}_{SRS}^{cs , i} = \left({n}_{SRS}^{cs}+3\left⌊\frac{{n}_{SRS}^{cs , max}}{{N}_{ap}^{SRS}}\right⌋\left({p}_{i}-1000\right)\right) { mod n}_{SRS}^{cs , max} ;$ ${n}_{SRS}^{cs , i} = \left({n}_{SRS}^{cs}+3\left({p}_{i}-1000\right)\right) { mod n}_{SRS}^{cs , max} ;$ ${n}_{SRS}^{cs , i} = \left({n}_{SRS}^{cs}+3i\right) {mod n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) { mod n}_{SRS}^{cs , max} ;$ ${n}_{SRS}^{cs , i} = \left({n}_{SRS}^{cs}+2\left({p}_{i}-1000\right)\right) { mod n}_{SRS}^{cs , max} ;$ ${n}_{SRS}^{cs , i} = \left({n}_{SRS}^{cs}+2i\right) { mod n}_{SRS}^{cs , max} ;$ ${n}_{SRS}^{cs , i} = \left({n}_{SRS}^{cs}+4\left⌊\frac{{n}_{SRS}^{cs , max}}{{N}_{ap}^{SRS}}\right⌋\left({p}_{i}-1000\right)\right) { mod n}_{SRS}^{cs , max} ;$ ${n}_{SRS}^{cs , i} = \left({n}_{SRS}^{cs}+4\left({p}_{i}-1000\right)\right) { mod n}_{SRS}^{cs , max} ;$ ${n}_{SRS}^{cs , i} = \left({n}_{SRS}^{cs}+4i\right) {mod n}_{SRS}^{cs , max} ;$ 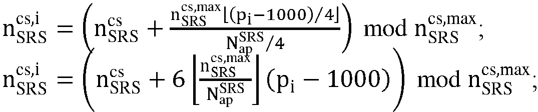 ${n}_{SRS}^{cs , i} = \left({n}_{SRS}^{cs}+6\left({p}_{i}-1000\right)\right) { mod n}_{SRS}^{cs , max} ;$ ${n}_{SRS}^{cs ,i} = \left({n}_{SRS}^{cs}+6i\right) { mod n}_{SRS}^{cs ,max} ;$ where ${n}_{SRS}^{cs}$ is a cyclic shift configuration value.

145. The apparatus according to any one of claims 135 to 144, wherein the antenna ports in different antenna port groups adopt different formulas to determine the cyclic shift offset value.

146. The apparatus according to claim 123, wherein the transmission unit is configured to:
in a case where ${n}_{SRS}^{cs ,max} = 8$ or 16, determine a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + {3K}_{TC} / 4 ;$ ${\overline{k}}_{TC} + {2K}_{TC} / 4 ;$ ${\overline{k}}_{TC} + {K}_{TC} / 4 ;$ ${\overline{k}}_{TC} + 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource;
where *k*_{TC} is an offset of a comb in the frequency domain; and *K*_{TC} is a transmission comb number.

147. The apparatus according to claim 146, wherein in a case where ${n}_{SRS}^{cs ,max} = 8$ or 16, the position parameter ${k}_{TC}^{\left({p}_{i}\right)}$ of the frequency domain resource corresponding to an antenna port with an index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+{3K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

148. The apparatus according to claim 123, wherein the transmission unit is configured to:
in a case where ${n}_{SRS}^{cs ,max} = 12$ or 6, determine a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource; and
transmit the SRS sequence corresponding to the antenna port with the index of i from the starting position of the frequency domain resource;
where *k̅*_{TC} is an offset of a comb in the frequency domain; and *K*_{TC} is a transmission comb number.

149. The apparatus according to claim 148, wherein in a case where ${n}_{SRS}^{cs ,max} = 12$ or 6, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

150. The apparatus according to claim 123, wherein the transmission unit is configured to:
determine a position parameter ${k}_{TC}^{\left({p}_{i}\right)}$ of a frequency domain resource corresponding to an antenna port with an index of i among the ${N}_{ap}^{SRS}$ antenna ports based on one or more of: ${\overline{k}}_{TC} + 3 ;$ ${\overline{k}}_{TC} + 2 ;$ ${\overline{k}}_{TC} + 1 ;$ ${\overline{k}}_{TC} + {3K}_{TC} / 4 ;$ ${\overline{k}}_{TC} + {K}_{TC} / 4 ;$ ${\overline{k}}_{TC} + 4 ;$
determine a starting position of a frequency domain resource to which the SRS sequence corresponding to the antenna port with the index of i is mapped, according to the position parameter ${k}_{TC}^{\left({p}_{i}\right)}$ of the frequency domain resource;
transmit the SRS sequence corresponding to the antenna port with the index of i from the starting position of the frequency domain resource;
where *k̅*_{TC} is an offset of a comb in the frequency domain; and *K*_{TC} is a transmission comb number.

151. The apparatus according to claim 150, wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

152. The apparatus according to any one of claims 146 to 151, wherein the antenna ports in different antenna port groups adopt different formulas to determine the cyclic shift offset value.

153. The apparatus according to any one of claims 123 to 152, wherein the ${N}_{ap}^{SRS}$ is valued as 8.

154. An information transmission apparatus, comprising:
a sending unit configured to send configuration information of a Sounding Reference Signal (SRS) resource; and
a second reception unit configured to receive an SRS corresponding to the configuration information and a transmission rule;
wherein the SRS resource comprises ${N}_{ap}^{SRS}$ antenna ports, and the transmission rule comprises one or more of the following:
cyclic shift offset values corresponding to SRS sequences which are corresponding to all or part of the antenna ports in the ${N}_{ap}^{SRS}$ antenna ports are continuous;
the ${N}_{ap}^{SRS}$ antenna ports are mapped to at least two groups of time domain resources and/or frequency domain resources; or
the ${N}_{ap}^{SRS}$ is an integer greater than 4.

155. The apparatus according to claim 154, wherein the ${N}_{ap}^{SRS}$ antenna ports comprise a plurality of antenna port groups each corresponding to one group of time domain resources and/or frequency domain resources.

156. The apparatus according to claim 155, wherein before the second reception unit receives the SRS corresponding to the configuration information and the transmission rule, the apparatus further comprises:
a thirteenth determination unit configured to
determine first information;
wherein the first information comprises one or more of:
grouping information of the antenna ports;
a sequence generation parameter of the SRS; or
resource mapping mode information.

157. The apparatus according to claim 155 or 156, wherein the grouping of the ${N}_{ap}^{SRS}$ antenna ports satisfies one or more of the following:
indexes of the antenna ports comprised in each of the antenna port groups are continuous; or
indexes of the antenna ports comprised in each of the antenna port groups are at an interval of a preset value.

158. The apparatus according to claim 155 or 156, wherein the cyclic shift offset values corresponding to the SRS sequences which are corresponding to the antenna ports comprised in different antenna port groups among the plurality of antenna port groups are the same.

159. The apparatus according to claim 155 or 156, wherein the grouping of the ${N}_{ap}^{SRS}$ antenna ports satisfies one of the following:
the ${N}_{ap}^{SRS}$ antenna ports are in one group;
the ${N}_{ap}^{SRS}$ antenna ports are grouped equally; or
the ${N}_{ap}^{SRS}$ antenna ports are grouped unequally.

160. The apparatus according to claim 156, wherein the configuration information comprises information indicative of and determined based on the first information.

161. The apparatus according to claim 156, wherein the sequence generation parameter of the SRS comprises one or more of a maximum number of cyclic shifts and a cyclic shift configuration.

162. The apparatus according to claim 156, wherein the resource mapping mode information comprises one of the following:
the antenna ports are mapped to one time domain resource group and/or one frequency domain resource group;
the antenna ports are mapped to a plurality of time domain resource groups and/or a plurality of frequency domain resource groups; or
an index of the resource mapping mode.

163. The apparatus according to any one of claims 155 to 162, wherein the grouping information of the ${N}_{ap}^{SRS}$ antenna ports comprises the number of the groups, which comprises one or more of:
the number of the antenna port groups;
the number of the time domain resource groups to which the SRS sequences are mapped; or
the number of the frequency domain resource groups to which the SRS sequences are mapped.

164. The apparatus according to claim 154, further comprising one or more of:
a nineteenth determination unit configured to determine that there is a corresponding relationship between the number of the antenna ports and the antenna port groups;
a twentieth determination unit configured to determine that there is a corresponding relationship between the sequence generation parameter and the antenna port groups; or
a twenty-first determination unit configured to determine that there is a corresponding relationship between the number of the groups and the antenna port groups.

165. The apparatus according to claim 154, wherein before the reception unit receives the SRS corresponding to the configuration information and the transmission rule, the apparatus further comprises:
a fourteenth determination unit configured to determine the SRS sequence which is corresponding to an antenna port with an index of i;
wherein in a case where a maximum number of cyclic shifts corresponding to the SRS resource is ${n}_{SRS}^{cs ,max} = 8$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 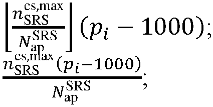 ${n}_{SRS}^{cs} + {p}_{i} - 1000 ;$ ${n}_{SRS}^{cs} + i ;$ 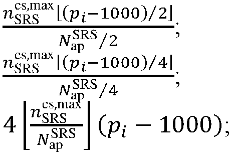 $4 \left({p}_{i}-1000\right) ;$ 4*i*; 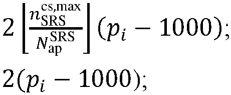 2*i*;
where *pᵢ* is a port index of the antenna port with the index of i, and i is an integer less than or equal to ${N}_{ap}^{SRS} - 1$.

166. The apparatus according to claim 165, wherein in a case where the maximum number of cyclic shifts corresponding to the SRS resource is ${n}_{SRS}^{cs , max} = 8$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 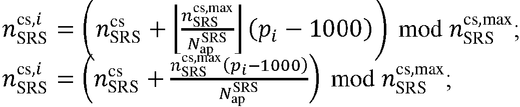 ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} ;$ 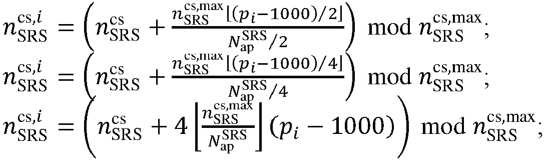 ${n}_{SRS}^{cs , i} = \left({n}_{SRS}^{cs}+4\left({p}_{i}-1000\right)\right) mod {n}_{SRS}^{cs , max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ where ${n}_{SRS}^{cs}$ is a cyclic shift configuration value.

167. The apparatus according to claim 154, wherein before the reception unit receives the SRS corresponding to the configuration information and the transmission rule, the apparatus further comprises:
a fifteenth determination unit configured to determine the SRS sequence which is corresponding to an antenna port with an index of i;
wherein in a case where a maximum number of cyclic shifts corresponding to the SRS resource is ${n}_{SRS}^{cs ,max} = 12$, a cyclic shift offset value nSRS corresponding to the SRS sequence which is corresponding to the antenna port with the index of i among the ${N}_{ap}^{SRS}$ antenna ports is determined based on one or more of: 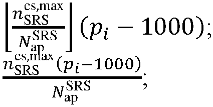 ${n}_{SRS}^{cs} + {p}_{i} - 1000 ;$ ${n}_{SRS}^{cs} + i ;$ 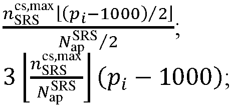 $3 \left({p}_{i}-1000\right) ;$ 3*i*; 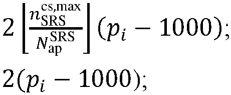 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 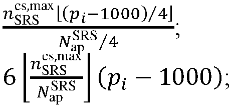 $6 \left({p}_{i}-1000\right) ;$ 6*i*;
where *pᵢ* is a port index of the antenna port with the index of i, and i is an integer less than or equal to ${N}_{ap}^{SRS} - 1$.

168. The apparatus according to claim 167, wherein in a case where the maximum number of cyclic shifts corresponding to the SRS resource is ${n}_{SRS}^{cs ,max} = 12$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 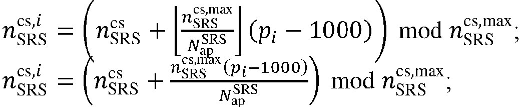 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 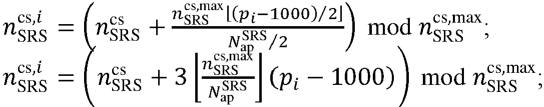 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 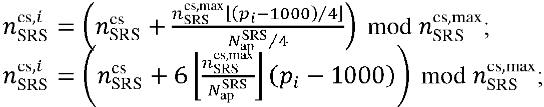 ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

169. The apparatus according to claim 154, wherein before the reception unit receives the SRS corresponding to the configuration information and the transmission rule, the apparatus further comprises:
a sixteenth determination unit configured to determine the SRS sequence which is corresponding to an antenna port with an index of i;
wherein in a case where a maximum number of cyclic shifts corresponding to the SRS resource is ${n}_{SRS}^{cs ,max} = 6$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: 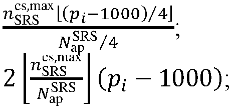 $2 \left({p}_{i}-1000\right) ;$ 2*i*; $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ 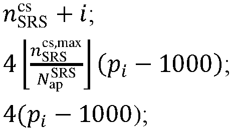 4*i*; $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*;
where *pᵢ* is a port index of the antenna port with the index of i, and i is an integer less than or equal to ${N}_{ap}^{SRS} - 1$.

170. The apparatus according to claim 169, wherein in a case where the maximum number of cyclic shifts corresponding to the SRS resource is ${n}_{SRS}^{cs ,max} = 6$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+\frac{{n}_{SRS}^{cs , max} \left⌊\left({p}_{i}-1000\right)/4\right⌋}{{N}_{ap}^{SRS} / 4}\right) mod {n}_{SRS}^{cs , max} ;$ ${n}_{SRS}^{cs , i} = \left({n}_{SRS}^{cs}+2\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+2\left({p}_{i}-1000\right)\right) mod {n}_{SRS}^{cs , max} ;$ ${n}_{SRS}^{cs , i} = \left({n}_{SRS}^{cs}+2i\right) mod {n}_{SRS}^{cs , max} ;$ ${n}_{SRS}^{cs , i} = \left({n}_{SRS}^{cs}+\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+{p}_{i}-1000\right) mod {n}_{SRS}^{cs , max} ;$ ${n}_{SRS}^{cs , i} = \left({n}_{SRS}^{cs}+i\right) mod {n}_{SRS}^{cs , max} ;$ ${n}_{SRS}^{cs , i} = \left({n}_{SRS}^{cs}+4\left⌊\frac{{n}_{SRS}^{cs , max}}{{N}_{ap}^{SRS}}\right⌋\left({p}_{i}-1000\right)\right) mod {n}_{SRS}^{cs , max} ;$ ${n}_{SRS}^{cs , i} = \left({n}_{SRS}^{cs}+4\left({p}_{i}-1000\right)\right) mod {n}_{SRS}^{cs , max} ;$ ${n}_{SRS}^{cs , i} = \left({n}_{SRS}^{cs}+4i\right) mod {n}_{SRS}^{cs , max} ;$ ${n}_{SRS}^{cs , i} = \left({n}_{SRS}^{cs}+3 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ where ${n}_{SRS}^{cs}$ is a cyclic shift configuration value.

171. The apparatus according to claim 154, wherein before the reception unit receives the SRS corresponding to the configuration information and the transmission rule, the apparatus further comprises:
a seventeenth determination unit configured to determine the SRS sequence which is corresponding to an antenna port with an index of i;
wherein in a case where a maximum number of cyclic shifts corresponding to the SRS resource is ${n}_{SRS}^{cs ,max} = 16$, a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $4 \left({p}_{i}-1000\right) ;$ 4*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; 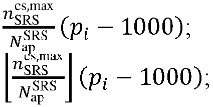 ${n}_{SRS}^{cs} + {p}_{i} - 1000 ;$ ${n}_{SRS}^{cs} + i ;$ 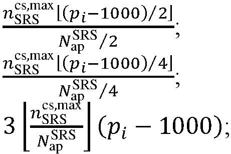 $3 \left({p}_{i}-1000\right) ;$ 3*i*; $4 \left⌊\frac{{n}_{SRS}^{cs ,max}}{{N}_{ap}^{SRS}}\right⌋ \left({p}_{i}-1000\right) ;$
where *pᵢ* is a port index of the antenna port with the index of i, and i is an integer less than or equal to ${N}_{ap}^{SRS} - 1$.

172. The apparatus according to claim 171, wherein in a case where the maximum number of cyclic shifts corresponding to the SRS resource is ${n}_{SRS}^{cs ,max} = 16$, the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ ${n}_{SRS}^{cs , i} = \left({n}_{SRS}^{cs}+2\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ 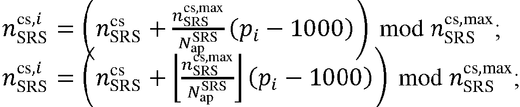 ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ 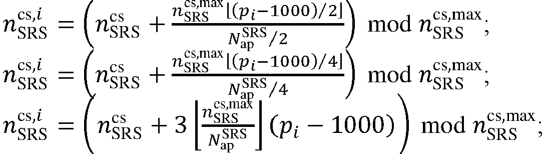 ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+4\left⌊\frac{{n}_{SRS}^{cs ,max}}{{N}_{ap}^{SRS}}\right⌋\left({p}_{i}-1000\right)\right) mod {n}_{SRS}^{cs ,max} ;$ where ${n}_{SRS}^{cs}$ is a cyclic shift configuration value.

173. The apparatus according to claim 154, wherein before the reception unit receives the SRS corresponding to the configuration information and the transmission rule, the apparatus further comprises:
an eighteenth determination unit configured to determine the SRS sequence which is corresponding to an antenna port with an index of i;
wherein a cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: $\left⌊\frac{{n}_{SRS}^{cs ,max}}{{N}_{ap}^{SRS}}\right⌋ \left({p}_{i}-1000\right) ;$ ${n}_{SRS}^{cs} + {p}_{i} - 1000 ;$ ${n}_{SRS}^{cs} + i ;$ $3 \left⌊\frac{{n}_{SRS}^{cs ,max}}{{N}_{ap}^{SRS}}\right⌋ \left({p}_{i}-1000\right) ;$ $3 \left({p}_{i}-1000\right) ;$ 3*i*; $2 \left⌊\frac{{n}_{SRS}^{cs ,max}}{{N}_{ap}^{SRS}}\right⌋ \left({p}_{i}-1000\right) ;$ $2 \left({p}_{i}-1000\right) ;$ 2*i*; $4 \left⌊\frac{{n}_{SRS}^{cs ,max}}{{N}_{ap}^{SRS}}\right⌋ \left({p}_{i}-1000\right) ;$ $4 \left({p}_{i}-1000\right) ;$ 4*i*; 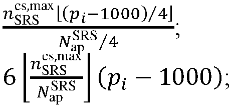 $6 \left({p}_{i}-1000\right) ;$ 6*i*;
where *pᵢ* is a port index of the antenna port with the index of i, and i is an integer less than or equal to ${N}_{ap}^{SRS} - 1$.

174. The apparatus according to claim 173, wherein the cyclic shift offset value ${n}_{SRS}^{cs , i}$ corresponding to the SRS sequence which is corresponding to the antenna port with the index of i among the ${N}_{ap}^{SRS}$ antenna ports is determined based on one or more of: ${n}_{SRS}^{cs , i} = \left({n}_{SRS}^{cs}+\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+{p}_{i}-1000\right) mod {n}_{SRS}^{cs ,max} ;$ ${n}_{SRS}^{cs , i} = \left({n}_{SRS}^{cs}+i\right) mod {n}_{SRS}^{cs ,max} ;$ ${n}_{SRS}^{cs , i} = \left({n}_{SRS}^{cs}+3\left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+3\left({p}_{i}-1000\right)\right) mod {n}_{SRS}^{cs ,max} ;$ ${n}_{SRS}^{cs , i} = \left({n}_{SRS}^{cs}+3i\right) mod {n}_{SRS}^{cs ,max} ;$ ${n}_{SRS}^{cs , i} = \left({n}_{SRS}^{cs}+2 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+2\left({p}_{i}-1000\right)\right) mod {n}_{SRS}^{cs ,max} ;$ ${n}_{SRS}^{cs , i} = \left({n}_{SRS}^{cs}+2i\right) mod {n}_{SRS}^{cs ,max} ;$ ${n}_{SRS}^{cs , i} = \left({n}_{SRS}^{cs}+4 \left⌊\frac{{n}_{SRS}^{cs ,max}}{{N}_{ap}^{SRS}}\right⌋\left({p}_{i}-1000\right)\right) mod {n}_{SRS}^{cs ,max} ;$ ${n}_{SRS}^{cs , i} = \left({n}_{SRS}^{cs}+4\left({p}_{i}-1000\right)\right) mod {n}_{SRS}^{cs ,max} ;$ ${n}_{SRS}^{cs , i} = \left({n}_{SRS}^{cs}+4i\right) mod {n}_{SRS}^{cs ,max} ;$ 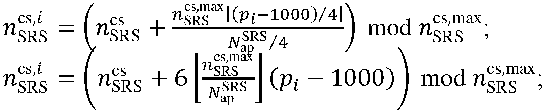 ${n}_{SRS}^{cs , i} = \left({n}_{SRS}^{cs}+6\left({p}_{i}-1000\right)\right) mod {n}_{SRS}^{cs ,max} ;$ ${n}_{SRS}^{cs , i} = \left({n}_{SRS}^{cs}+6i\right) mod {n}_{SRS}^{cs ,max} ;$ where ${n}_{SRS}^{cs}$ is a cyclic shift configuration value.

175. The apparatus according to any one of claims 165 to 174, wherein the antenna ports in different antenna port groups adopt different formulas to determine the cyclic shift offset value.

176. The apparatus according to claim 154, wherein the reception unit is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein in a case where ${n}_{SRS}^{cs , max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

177. The apparatus according to claim 176, wherein in a case where ${n}_{SRS}^{cs ,max} = 8 or 16$, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} ;$ ${k}_{TC}^{\left({p}_{i}\right)} = \left({\overline{k}}_{TC}+4\right) mod {K}_{TC} .$

178. The apparatus according to claim 154, wherein the reception unit is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein in a case where ${n}_{SRS}^{cs ,max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} ;$ ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + 2 {K}_{TC} / 4 ;$ ${\overline{k}}_{TC} + {K}_{TC} / 4 ;$
where *k̅*_{TC} is an offset of a comb in the frequency domain; and *K*_{TC} is a transmission comb number.

179. The apparatus according to claim 178, wherein in a case where ${n}_{SRS}^{cs , max} = 12 or 6$, the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = {\overline{k}}_{TC} ;$ ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3{K}_{TC}/4\right) mod {K}_{TC} ;$ ${k}_{TC}^{\left({p}_{i}\right)} = \left({\overline{k}}_{TC}+2{K}_{TC}/4\right) mod {K}_{TC} ;$ ${k}_{TC}^{\left({p}_{i}\right)} = \left({\overline{k}}_{TC}+{K}_{TC}/4\right) mod {K}_{TC} .$

180. The apparatus according to claim 154, wherein the reception unit is configured to:
receive the SRS sequence which is corresponding to an antenna port with an index of i, from a starting position of a frequency domain resource which is corresponding to a position parameter ${k}_{TC}^{\left({p}_{i}\right)}$ of the frequency domain resource;
wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${\overline{k}}_{TC} + 3 ;$ ${\overline{k}}_{TC} + 2 ;$ ${\overline{k}}_{TC} + 1 ;$ ${\overline{k}}_{TC} + 3 {K}_{TC} / 4 ;$ ${\overline{k}}_{TC} + {K}_{TC} / 4 ;$ ${\overline{k}}_{TC} + 4 ;$
where *k̅*_{TC} is an offset of a comb in the frequency domain; and *K*_{TC} is a transmission comb number.

181. The apparatus according to claim 180, wherein the position parameter ${k}_{TC}^{\left({p}_{i}\right)}$ of the frequency domain resource corresponding to the antenna port with the index of i among the ${N}_{ap}^{SRS}$ antenna ports is determined based on one or more of: ${k}_{TC}^{\left({p}_{i}\right)} = \left({\overline{k}}_{TC}+3\right) mod {K}_{TC} ;$ ${k}_{TC}^{\left({p}_{i}\right)} = \left({\overline{k}}_{TC}+2\right) mod {K}_{TC} ;$ ${k}_{TC}^{\left({p}_{i}\right)} = \left({\overline{k}}_{TC}+1\right) mod {K}_{TC} ;$ ${k}_{TC}^{\left({p}_{i}\right)} = \left({\overline{k}}_{TC}+3 {K}_{TC} / 4\right) mod {K}_{TC} ;$ ${k}_{TC}^{\left({p}_{i}\right)} = \left({\overline{k}}_{TC}+{K}_{TC} / 4\right) mod {K}_{TC} ;$ ${k}_{TC}^{\left({p}_{i}\right)} = \left({\overline{k}}_{TC}+4\right) mod {K}_{TC} .$

182. The apparatus according to any one of claims 176 to 181, wherein the antenna ports in different antenna port groups adopt different formulas to determine the cyclic shift offset value.

183. The apparatus according to any one of claims 154 to 182, wherein the ${N}_{ap}^{SRS}$ is valued as 8.

184. A processor-readable storage medium, storing a computer program causing the processor to perform the method according to any one of claims 1 to 61.
